(19) Europäisches Patentamt
European Patent Office
Office européen des brevets

(11) Veröffentlichungsnummer : **0 159 287**
**B1**

(12) # EUROPÄISCHE PATENTSCHRIFT

(45) Veröffentlichungstag der Patentschrift : **11.10.89**

(51) Int. Cl.[4] : **A 01 N 25/32**

(21) Anmeldenummer : **85810105.8**

(22) Anmeldetag : **11.03.85**

(54) **Verwendung von Chinolinderivaten zum Schützen von Kulturpflanzen.**

(30) Priorität : **15.03.84 CH 1291/84**

(43) Veröffentlichungstag der Anmeldung : **23.10.85 Patentblatt 85/43**

(45) Bekanntmachung des Hinweises auf die Patenterteilung : **11.10.89 Patentblatt 89/41**

(84) Benannte Vertragsstaaten : **AT BE CH DE FR GB IT LI NL SE**

(56) Entgegenhaltungen :
**EP-A- 0 041 623**
**EP-A- 0 086 750**
**EP-A- 0 094 349**
**DE-A- 2 546 845**
**US-A- 4 188 487**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Belluci, Sergio, Dr.**
**Kapellstrasse 121**
**CH-4323 Wallbach (CH)**
Erfinder : **Hubele, Adolf, Dr.**
**Obere Egg 9**
**CH-4312 Magden (CH)**
Erfinder : **Nyffeler, Andreas, Dr.**
**Gründlerstrasse 4**
**CH-4312 Magden (CH)**

**EP 0 159 287 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft die Verwendung von Chinolinderivaten zum Schützen von Kulturpflanzen gegen schädigende Wirkungen herbizid wirksamer Derivate von (4,5-Dihydro-4-oxo-1H-imidazol-2-yl)-benzoesäure, -nicotinsäure und chinolincarbonsäure.

Beim Einsatz von Herbiziden wie beispielsweise den vorstehend genannten Imidazol-Derivaten können in Abhängigkeit von Faktoren wie beispielsweise Dosis des Herbizids und Applikationsart, Art der Kulturpflanze, Bodenbeschaffenheit und klimatischen Bedingungen, wie beispielsweise Belichtungsdauer, Temperatur und Niederschlagsmengen, die Kulturpflanzen in erheblichem Masse geschädigt werden. Insbesondere kann es zu starken Schädigungen kommen, wenn im Rahmen der Fruchtfolge nach Kulturpflanzen, die gegen die Herbizide resistent sind, andere Kulturpflanzen angebaut werden, welche keine oder nur unzureichende Resistenz gegenüber den Herbiziden aufweisen.

Es ist aus den europäischen Patentpublikationen 86 750 und 94 349 bekannt, dass sich Chinolinderivate zum Schützen von Kulturpflanzen gegen schädigende Wirkungen aggressiver Agrarchemikalien einsetzen lassen.

Weiterhin ist aus der DE-A-25 46 845 bekannt geworden, dass bestimmte substituierte 8-Chinolinyloxy-carbonsäurederivate herbizid wirksam sind.

Es wurde nun gefunden, dass überraschenderweise ein Schutz von Kulturpflanzen gegen Schäden, welche durch herbizid wirksame Derivate von (4,5-Dihydro-4-oxo-1H-imidazol-2-yl)-benzoesäure, -nicotinsäure und -chinolincarbonsäure verursacht werden, durch Beizung der Samen mit einem Safener aus einer Gruppe von Chinolinderivaten erzielt werden kann. Die genannten Herbizide, welche eine lange Verweilzeit im Boden aufweisen, werden vorzugsweise in Sojakulturen eingesetzt, da die Sojapflanzen genügend resistent gegenüber diesen Herbiziden sind, jedoch werden Nachfolgekulturen oftmals ganz erheblich geschädigt. Dies trifft insbesondere für Getreidekulturen zu. Durch eine Beizung der Samen der nicht herbizid-resistenten Kulturpflanzen wird erreicht, dass Sojaanpflanzungen durch andere Kulturpflanzenbestände abgelöst werden können, ohne dass es zu einer Schädigung dieser nachfolgenden Kulturpflanzen durch die Herbizide kommt. Es tritt kein Verlust der herbiziden Aktivität gegenüber Unkräutern und Ungräsern ein.

Diese Herbizide sind Gegenstand der europäischen Patentanmeldung EP-A-0 041 623.

Durch den Einsatz der Chinolinderivate wird ausserdem auch die direkte Verwendung der herbiziden Derivate von (4,5-Dihydro-4-oxo-1H-imidazol-2-yl)-benzoesäure, -nicotinsäure und -chinolincarbonsäure in Beständen solcher Kulturpflanzen ermöglicht, die keine oder nur ungenügende Resistenz gegenüber diesen Herbiziden aufweisen.

Chinolinderivate, welche zum Schützen von Kulturpflanzen vor schädigenden Wirkungen herbizid wirksamer Derivate von (4,5-Dihydro-4-oxo-1H-imidazol-2-yl)-benzoesäure, -nicotinsäure und -chinolincarbonsäure geeignet sind, entsprechen der Formel I

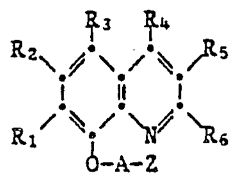

(I)

in welcher $R_1$, $R_2$ und $R_3$ unabhängig voneinander Wasserstoff, Halogen, Nitro, Cyan, $C_1$-$C_3$-Alkyl oder $C_1$-$C_3$-Alkoxy,

$R_4$, $R_5$ und $R_6$ unabhängig voneinander Wassserstoff, Halogen oder $C_1$-$C_3$-Alkyl,

A eine der Gruppen $-CH_2-$, $-CH_2-CH_2-$ oder $-CH(CH_3)-$ und

Z Cyan, eine der Gruppen

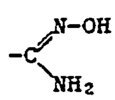

oder

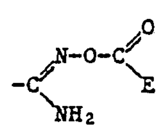

einen gegebenenfalls substituierten Oxazolin-2-yl-Rest, $-COOR_{12}$, $-COSR_{13}$ oder $-CONR_{14}R_{15}$ bedeuten, worin

E für $-R_7$, $-OR_8$, $-SR_9$ oder $-NR_{10}R_{11}$ steht, worin

$R_7$ $C_1$-$C_7$-Alkyl, welches unsubstituiert oder durch Halogen oder $C_1$-$C_4$-Alkoxy substituiert ist, $C_3$-$C_6$-Cycloalkyl, $C_2$-$C_4$-Alkenyl, Phenyl, welches unsubstituiert oder durch Halogen, Nitro oder $C_1$-$C_3$-Alkyl substituiert ist, Benzyl, welches unsubstituiert oder durch Halogen, Nitro oder $C_1$-$C_3$-Alkyl substituiert ist, oder einen 5- bis 6-gliedrigen heterocyclischen Ring, welcher ein oder zwei Heteroatome aus der Gruppe N, O und S enthält und unsubstituiert oder durch Halogen substituiert ist,

$R_8$, $R_9$ und $R_{10}$ unabhängig voneinander $C_1$-$C_8$-Alkyl, welches unsubstituiert oder durch Halogen substituiert ist, $C_2$-$C_4$-Alkenyl, $C_3$-$C_6$-Alkinyl, Phenyl, welches unsubstituiert oder durch Halogen, $C_1$-$C_3$-

Alkyl, $C_1$-$C_3$-Alkoxy, Trifluormethyl oder Nitro substituiert ist, oder Benzyl, welches unsubstituiert oder durch Halogen oder Nitro substituiert ist,

$R_{11}$ Wasserstoff, $C_1$-$C_8$-Alkyl oder $C_1$-$C_3$-Alkoxy oder

$R_{10}$ und $R_{11}$ gemeinsam mit dem Stickstoffatom, an das sie gebunden sind, einen 5- bis 6-gliedrigen Heterocyclus, welcher noch ein weiteres Heteroatom aus der Gruppe N, O und S enthalten kann,

$R_{12}$, $R_{13}$ und $R_{14}$ Wasserstoff oder einen gegebenenfalls substituierten Alkyl-, Alkenyl-, Alkinyl-, Cycloalkyl-, Phenyl- oder Naphthylrest oder einen gegebenenfalls substituierten heterocyclischen Rest oder $R_{12}$ und $R_{13}$ auch ein Kation oder $R_{14}$ auch einen Alkoxyrest und

$R_{15}$ Wasserstoff, Amino, mono- oder disubstituiertes Amino oder einen gegebenenfalls substituierten Alkyl- Alkenyl-, Cycloalkyl- oder Phenylrest oder $R_{14}$ und $R_{15}$ gemeinsam mit dem Stickstoffatom, an das sie gebunden sind, einen gegebenenfalls substituierten heterocyclischen Rest bedeuten, oder A und Z zusammen einen gegebenenfalls substituierten Tetrahydrofuran-2-on-Ring bilden, unter Einschluss ihrer Säureadditionssalze und Metallkomplexe.

Bei $R_7$ als Heterocyclus kann es sich um gesättigte, teilgesättigte oder ungesättigte Heterocyclen handeln, wie beispielsweise Thiophen, Furan, Tetrahydrofuran und Pyrimidin.

Als Heterocyclen, welche von $R_{10}$ und $R_{11}$ gemeinsam mit dem Stickstoffatom, an das sie gebunden sind, gebildet werden, kommen gesättigte, teilgesättigte oder ungesättigte Heterocyclen in Betracht. Beispiele für solche Heterocyclen sind Pyrrolidin, Pyrrolin, Pyrrol, Imidazolidin, Imidazolin, Imidazol, Piperazin, Pyridin, Pyrimidin, Pyrazin, Thiazin, Oxazol, Thiazol und insbesondere Piperidin und Morpholin.

Unter Alkyl als Bestandteil des acylierten Amidoxims Z kommen im Rahmen der jeweils angegebenen Anzahl von Kohlenstoffatomen alle geradkettigen und alle verzweigten Alkylgruppen in Betracht.

In der Bedeutung von $R_7$ steht $C_3$-$C_6$-Cycloalkyl für Cyclopropyl, Cyclobutyl, Cyclopentyl und Cyclohexyl.

Von den $C_2$-$C_4$-Alkenyl- und $C_3$-$C_6$-Alkinylgruppen als Bestandteile des acylierten Amidoxims Z sind vor allem Vinyl, Allyl, 1-Propenyl, Isopropenyl und Propinyl zu erwähnen.

Für Z als Carbonsäureestergruppe oder Carbonsäurethiolestergruppe kommt ein entsprechender Säurerest in Betracht, der beispielsweise durch einen gegebenenfalls substituierten, aliphatischen Rest oder einen gegebenenfalls über einen aliphatischen Rest gebundenen und gegebenenfalls substituierten cycloaliphatischen, aromatischen oder heterocyclischen Rest verestert ist.

Als Carbonsäureesterrest bevorzugt ist der Rest —$COOR_{12}$ und als Carbonsäurethiolesterrest bevorzugt ist der Rest —$COSR_{13}$, wobei $R_{12}$ und $R_{13}$ die nachfolgend angegebenen bedeutungen haben: gegebenenfalls substituierter Alkyl-, Alkenyl-, Alkinyl-, Cycloalkyl-, Phenyl- oder Naphthylrest oder gegebenenfalls substituierter heterocyclischer Rest. Die Reste —$COOR_{12}$ und —$COSR_{13}$ schliessen auch die freien Säuren ein, wobei $R_{12}$ und $R_{13}$ für Wasserstoff stehen, sowie die Salze davon, wobei $R_{12}$ und $R_{13}$ für ein Kation stehen. Als Salzbildner eignen sich hier besonders Metalle und organische Stickstoffbasen, vor allem quaternäre Ammoniumbasen. Hierbei kommen als zur Salzbildung geeignete Metalle Erdalkalimetalle, wie Magnesium oder Calcium, vor allem aber die Alkalimetalle in Betracht, wie Lithium und insbesondere Kalium und Natrium. Ferner sind als Salzbildner auch Uebergangsmetalle wie beispielsweise Eisen, Nickel, Kobalt, Kupfer, Zink, Chrom oder Mangan geeignet. Biespiele für zur Salzbildung geeignete Stickstoffbasen sind primäre, sekundäre oder tertiäre, aliphatische und aromatische, gegebenenfalls am Kohlenwasserstoffrest hydroxylierte Amine, wie Methylamin, Ethylamin, Propylamin, Isopropylamin, die vier isomeren Butylamine, Dimethylamin, Diethylamin, Dipropylamin, Diisopropylamin, Di-n-butylamin, Pyrrolidin, Piperidin, Morpholin, Trimethylamin, Triethylamin, Tripropylamin, Chinuclidin, Pyridin, Chinolin, Isochinolin sowie Methanolamin, Ethanolamin, Propanolamin, Dimethanolamin, Diethanolamin oder Triethanolamin. Als organische Stickstoffbasen kommen auch quaternäre Ammoniumbasen in Betracht. Beispiele für quaternäre Ammoniumbasen sind Tetraalkylammoniumkationen, ion den die Alkylreste unabhängig voneinander geradkettige oder verzweigte $C_1$-$C_6$-Alkylgruppen sind, wie das Tetramethylammoniumkation, das Tetraethylammoniumkation oder das Trimethylethylammoniumkation, sowie weiterhin das Trimethylbenzylammoniumkation, das Triethylbenzylammoniumkation und das Trimethyl-2-hydroxyethyl-ammoniumkation. Besonders bevorzugt als Salzbildner sind das Ammoniumkation und Trialkylammoniumkationen, in denen die Alkylreste unabhängig voneinander geradkettige oder verzweigte, gegebenenfalls durch eine Hydroxylgruppe substituierte $C_1$-$C_6$-Alkylgruppen, insbesondere $C_1$-$C_2$-Alkylgruppen, sind, wie beispielsweise das Trimethylammoniumkation, das Triethylammoniumkation und das Tri-(2-hydroxyethylen)-ammoniumkation.

Für Z als Carbonsäureamidgruppe kommt ein entsprechender Amidrest in Betracht, welcher unsubstituiert oder am Stickstoffatom mono- oder disubstituiert sein kann oder in welchem das Stickstoffatom Bestandteil eines gegebenenfalls substituierten heterocyclischen Restes ist. Als Substituenten der Amidgruppe sind beispielsweise ein gegebenenfalls substituierter und gegebenenfalls über ein Sauerstoffatom gebundener aliphatischer Rest, ein gegebenenfalls über einen aliphatischen Rest gebundener und gegebenenfalls substituierter cycloaliphatischer, aromatischer oder heterocyclischer Rest oder eine gegebenenfalls mono- oder disubstituierte Aminogruppe zu nennen.

Als Carbonsäureamidrest bevorzugt ist der Rest —$CONR_{14}R_{15}$, worin $R_{14}$ für Wasserstoff, einen gegebenenfalls substituierten Alkyl-, Alkenyl-, Alkinyl- Cycloalkyl-, Phenyl- oder Naphthylrest, einen gegebenenfalls substituierten heterocyclischen Rest oder einen Alkoxyrest, $R_{15}$ für Wasserstoff, Amino,

mono- oder disubstituiertes Amino oder einen gegebenenfalls substituierten Alkyl-, Alkenyl-, Cycloalkyl- oder Phenylrest oder $R_{14}$ und $R_{15}$ gemeinsam mit dem Stickstoffatom, an das sie gebunden sind, für einen gegebenenfalls substituierten heterocyclischen Rest stehen.

Als Substituenten der organischen Reste $R_{12}$, $R_{13}$, $R_{14}$ und $R_{15}$ kommen beispielsweise Halogen, Nitro, Cyan, Hydroxy, Alkyl, Halogenalkyl, Alkoxy, welches durch ein oder mehrere Sauerstoffatome unterbrochen sein kann, Alkylthio, Halogenalkoxy, Hydroxyalkoxy, welches durch ein oder mehrere Sauerstoffatome unterbrochen sein kann, Hydroxyalkylthio, Alkoxycarbonyl, Amino, Alkylamino, Dialkylamino, Hydroxyalkylamino, Di-(hydroxyalkyl)-amino, Aminoalkylamino, Cycloalkyl, gegebenenfalls substituiertes Phenyl, gegebenenfalls substituiertes Phenoxy oder ein gegebenenfalls substituierter heterocyclischer Rest in Betracht.

Unter heterocyclischen Resten als Bestandteile des Carbonsäureesterrestes, des Carbonsäurethiolesterrestes und des Carbonsäureamidrestes sind vorzugsweise 5- bis 6-gliedrige, gesättigte oder ungesättigte, gegebenenfalls substituierte monocyclische Heterocyclen mit 1 bis 3 Heteroatomen aus der Gruppe N, O und S zu verstehen, wie beispielsweise Furan, Tetrahydrofuran, Tetrahydropyran, Tetrahydropyrimidin, Pyridin, Piperidin, Morpholin und Imidazol.

Unter Cycloalkylresten als Bestandteile des Carbonsäureesterrestes, des Carbonsäurethiolesterrestes und des Carbonsäureamidrestes sind insbesondere solche mit 3 bis 8, vor allem 3 bis 6, Kohlenstoffatomen, zu verstehen.

Im Substituenten Z als Bestandteil des Carbonsäureesterrestes, des Carbonsäurethiolesterrestes und des Carbonsäureamidrestes vorliegende aliphatische, acyclische Reste können geradkettig oder verzweigt sein und enthalten zweckmässigerweise bis maximal 18 Kohlenstoffatome. Eine geringere Anzahl von Kohlenstoffatomen ist häufig, insbesondere bei zusammengesetzten Substituenten, von Vorteil.

Für Z als cyclisiertes Derivat einer Carbonsäureamidgruppe kommt insbesondere ein gegebenenfalls substituierter Oxazolin-2-yl-Rest, vorzugsweise ein unsubstituierter Oxazolin-2-yl-Rest, in Betracht.

A und Z können zusammen einen gegebenenfalls substituierten Tetrahydrofuran-2-on-Ring bilden, wobei der unsubstituierte Tetrahydrofuran-2-on-Ring bevorzugt ist, insbesondere der unsubstituierte Tetrahydrofuran-2-on-3-yl-Ring.

In den Verbindungen der Formel I bedeutet Halogen Fluor, Chlor, Brom und Jod, insbesondere Chlor, Brom und Jod.

Als Salzbildner kommen organische und anorganische Säuren in Betracht. Beispiele organischer Säuren sind Essigsäure, Trichloressigsäure, Oxalsäure, Benzolsulfonsäure und Methansulfonsäure. Beispiele anorganischer Säuren sind Chlorwasserstoffsäure, Bromwasserstoffsäure, Jodwasserstoffsäure, Schwefelsäure, Phosphorsäure, phosphorige Säure und Salpetersäure.

Als Metallkomplexbildner eignen sich beispielsweise Elemente der 3 und 4 Hauptgruppe, wie Alumium, Zinn und Blei, sowie der 1 bis 8 Nebengruppe, wie beispielsweise Chrom. Mangan, Eisen, Kobalt, Nickel, Zirkon, Zink, Kupfer, Silber und Quecksilber. Bevorzugt sind die Nebengruppenelemente der 4 Periode.

Wenn in den Verbindungen der Formel I A für $-CH(CH_3)-$ steht oder A und Z zusammen einen Tetrahydrofuran-2-on-Ring bilden, existieren optisch isomere Verbindungen. Im Rahmen der vorliegenden Erfindung sind unter den entsprechenden Verbindungen der Formel I sowohl die optisch reinen Isomere wie auch die Isomerengemische zu verstehen.

Besonders geeignet zur erfindungsgemässen Verwendung sind Verbindungen der Formel I, in denen

a) $R_1$ Wasserstoff oder Halogen bedeutet, wobei als Halogen vorzugsweise Chlor, Jod und Brom in Betracht kommen, $R_2$ für Wasserstoff steht, $R_3$ Wasserstoff, Halogen oder Nitro bedeutet, wobei als Halogen vorzugsweise Chlor und Brom in Betracht kommen, $R_4$ und $R_5$ für Wasserstoff stehen und $R_6$ für Wasserstoff oder $C_1$-$C_4$-Alkyl steht, wobei als Alkyl Methyl bevorzugt ist;

b) A für $-CH_2-$ steht;

c) A für $-CH_2CH_2-$ steht;

d) A für $-CH(CH_3)-$ steht;

e) Z für Amidoxim

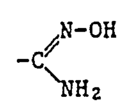

steht;

f) Z für acyliertes Amidoxim

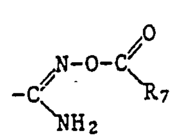

steht, worin $R_7$ unsubstituiertes oder durch Halogen, vorzugsweise Chlor oder Brom, mono- oder disubstituiertes oder durch $C_1$-$C_4$-Alkoxy mono-substituiertes $C_1$-$C_4$-Alkyl bedeutet, oder für Cyclopropyl,

$C_2$-$C_3$-Alkenyl, unsubstituiertes oder durch Halogen, vorzugsweise Chlor, monosubstituiertes Phenyl, oder für Benzyl, unsubstituiertes oder durch Halogen, vorzugsweise Brom, substituiertes Furanyl, oder für Tetrahydrofuranyl, Thienyl oder dihalogeniertes Pyrimidin, wie beispielsweise Dichlorpyrimidin, steht ;

g) Z acyliertes Amidoxim

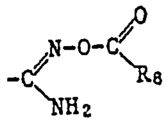

bedeutet, worin

$R_8$ für unsubstituiertes oder durch Halogen, vorzugsweise Brom, monosubstituiertes $C_1$-$C_4$-Alkyl oder für Allyl, Phenyl oder Benzyl steht ;

h) Z acyliertes Amidoxim

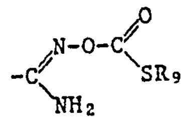

bedeutet, worin

$R_9$ für $C_1$-$C_5$-Alkyl steht ;

i) Z acyliertes Amidoxim

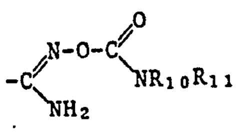

bedeutet, worin $R_{10}$ für $C_1$-$C_4$-Alkyl oder für unsubstituiertes oder durch Halogen, vorzugsweise Chlor, mono- oder disubstituiertes oder durch Trihalogenmethyl, vorzugsweise Trifluormethyl, monosubstituiertes Phenyl und $R_{11}$ für Wasserstoff oder Methoxy steht ;

k) Z für den Carbonsäureesterrest —$COOR_{12}$ steht, worin $R_{12}$ für Wasserstoff, ein Alkalimetallkation, vorzugsweise ein Natrium- oder Kaliumkation, für das Ammoniumkation oder für ein durch $C_1$-$C_4$-Alkyl oder Monohydroxy-$C_1$-$C_4$-Alkyl, beispielsweise 2-Hydroxyethyl, trisubstituiertes Ammoniumkation, für $C_1$-$C_{12}$-Alkyl, insbesondere $C_1$-$C_4$-Alkyl, oder für durch Halogen, vorzugsweise Chlor, oder $C_1$-$C_3$-Alkoxy, Phenoxy, Phenyl oder Tetrahydrofuranyl monosubstituiertes $C_1$-$C_4$-Alkyl, oder für $C_2$-$C_4$-Alkenyl, vorzugsweise Methylallyl, oder $C_3$-$C_4$-Alkinyl, vorzugsweise 2-Propinyl, oder Cyclohexyl oder für unsubstituiertes oder durch Methyl mono- oder disubstituiertes Phenyl steht ;

1) Z für den Carbonsäurethiolesterrest —$COSR_{13}$ steht, worin $R_{13}$ $C_5$-$C_{10}$-Alkyl, vorzugsweise n-Octyl, bedeutet ;

m) Z für den Carbonsäureamidrest —$CONR_{14}R_{15}$ steht, worin $R_{14}$ Wasserstoff, $C_1$-$C_{12}$-Alkyl, insbesondere $C_1$-$C_4$-Alkyl, oder durch Hydroxy, $C_1$-$C_4$-Alkoxy, Di-($C_1$-$C_4$-alkyl)-amino, (Monohydroxy-$C_1$-$C_4$-alkyl)-amino, Di-(monohydroxy-$C_1$-$C_4$-alkyl)-amino, Phenyl, Tetrahydrofuranyl, Piperidinyl oder Morpholinyl monosubstituiertes $C_1$-$C_4$-Alkyl oder Allyl, Cyclohexyl oder Amino bedeutet und $R_{15}$ Wasserstoff, $C_1$-$C_4$-Alkyl oder Monohydroxy-$C_1$-$C_4$-alkyl bedeutet, oder worin $R_{14}$ und $R_{15}$ gemeinsam mit dem Stickstoffatom, an das sie gebunden sind, den Morpholinring bilden ; oder

n) A und Z gemeinsam für Tetrahydrofuran-2-on stehen.

Besonders bevorzugt sind Verbindungen der Formel I, denen $R_1$ Wasserstoff, Chlor, Brom oder Jod, $R_2$ Wasserstoff, $R_3$ Wasserstoff, Chlor, Brom oder Nitro, $R_4$ und $R_5$ Wasserstoff, $R_6$ Wasserstoff oder Methyl, A eine der Gruppen —$CH_2$—, —$CH_2CH_2$— oder —$CH(CH_3)$— und Z Cyan

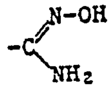 , 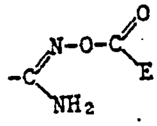

—$COOR_{12}$, —$COSR_{13}$ oder —$CONR_{14}R_{15}$ bedeuten, worin E —$R_7$, —$OR_8$, —$SR_9$ oder —$NR_{10}R_{11}$ bedeutet und

$R_7$ für unsubstituiertes oder durch Chlor oder Brom mono- oder disubstituiertes oder durch $C_1$-$C_4$-Alkoxy monosubstituiertes $C_1$-$C_4$-Alkyl, oder für Cyclopropyl, $C_2$-$C_3$-Alkenyl, unsubstituiertes oder durch Chlor monosubstituiertes Phenyl, oder für Benzyl, unsubstituiertes oder durch Brom monosubstituiertes Furanyl, oder für Tetrahydrofuranyl, Thienyl oder Dichlorpyrimidin steht,

$R_8$ für unsubstituiertes oder durch Brom monosubstituiertes $C_1$-$C_4$-Alkyl, oder für Allyl, Phenyl oder Benzyl steht,

$R_9$ für $C_1$-$C_5$-Alkyl steht,

$R_{10}$ für $C_1$-$C_4$-Alkyl oder unsubstituiertes oder durch Chlor mono-oder disubstituiertes oder durch Trifluormethyl monosubstituiertes Phenyl steht,

$R_{11}$ für Wasserstoff oder Methoxy steht,

$R_{12}$ Wasserstoff, das Natriumkation, das Kaliumkation, das Ammoniumkation, durch $C_1$-$C_4$-Alkyl oder 2-Hydroxyethyl trisubstituiertes Ammoniumkation, $C_1$-$C_4$-Alkyl, durch Chlor, $C_1$-$C_3$-Alkoxy, Phenoxy, Phenyl oder Tetrahydrofuranyl monosubstituiertes $C_1$-$C_4$-Alkyl, oder Methylallyl, 2-Propinyl, Cyclohexyl oder unsubstituiertes oder durch Methyl mono- oder disubstiuiertes Phenyl bedeutet,

$R_{13}$ n-Octyl bedeutet,

$R_{14}$ Wasserstoff, $C_1$-$C_4$-Alkyl, durch Hydroxy, $C_1$-$C_4$-Alkoxy, Di-($C_1$-$C_4$-alkyl)-amino, (Monohydroxy-$C_1$-$C_4$-alkyl)-amino, Di-(monohydroxy-$C_1$-$C_4$-alkyl)-amino, Phenyl, Tetrahydrofuranyl, Piperidinyl oder Morpholinyl monosubstituiertes $C_1$-$C_4$-Alkyl, oder Allyl, Cyclohexyl oder Amino bedeutet, und

$R_{15}$ Wasserstoff, $C_1$-$C_4$-Alkyl oder Monohydroxy-$C_1$-$C_4$-Alkyl bedeutet, oder

$R_{14}$ und $R_{15}$ gemeinsam mit dem Stickstoffatom, an welches sie gebunden sind, den Morpholinring bilden, oder worin

A und Z gemeinsam für Tetrahydrofuran-2-on stehen.

Von besonderem Interesse sind Verbindungen der Formel I, in denen $R_1$, $R_2$, $R_4$, $R_5$ und $R_6$ Wasserstoff, $R_3$ Wasserstoff oder Chlor, A die Gruppe $-CH_2-$ und Z Cyan, ein acyliertes Amidoxim

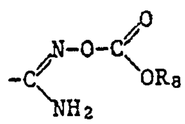

worin $R_8$ für $C_1$-$C_4$-Alkyl, vorzugsweise Methyl, steht, oder eine Carbonsäureestergruppe $-COOR_{12}$, worin $R_{12}$ für $C_1$-$C_4$-Alkyl, vorzugsweise n-Butyl, oder für $C_2$-$C_4$-Alkenyl, vorzugsweise Methylallyl, steht, bedeuten.

Beispiele für erfindungsgemäss zu verwendende Verbindungen zeigt die nachfolgende Tabelle 1.

Besonders erwähnenswerte Einzelverbindungen sind

5-Chlor-8-(cyanomethoxy)-chinolin,

0-(Methoxycarbonyl)-2-(8-chinolinoxy)-acetamidoxim,

2-(5-Chlor-8-chinolinoxy)-essigsäure-n-butylester und

2-(5-Chlor-8-chinolinoxy)-essigsäure-methylallylester.

Besonders erwähnenswert ist die Verwendung von 5-Chlor-8-cyanomethoxy)-chinolin, 0-Methoxycarbonyl-2-(8-chinolinoxy)-acetamidoxim, 2-(5-Chlor-8-chinolinoxy)-essigsäure-n-butylester oder 2-(5-Chlor-8-chinolinoxy)-essigsäuremethylallylester zum Schützen von Kulturpflanzen, insbesondere Getreide, gegen die schädigende Wirkung von 2-[4,5-Dihydro-5-methyl-5-(1-methylethyl)-4-oxo-1H-imidazol-2-yl]-nicotinsäure oder 2-[4,5-Dihydro-5-methyl-5-(1-methylethyl)-4-oxo-1H-imidazol-2-yl]-3-chinolincarbonsäure.

(Siehe Tabelle 1 Seite 7 ff.)

Tabelle 1

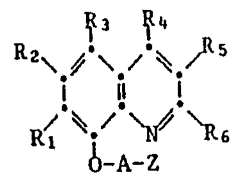

(I)

| Nr. | $R_1$ | $R_2$ | $R_3$ | $R_4$ | $R_5$ | $R_6$ | A | Z | physikal. Konstante |
|---|---|---|---|---|---|---|---|---|---|
| 1 | H | H | H | H | H | H | $-CH_2-$ | -CN | Smp. 118-119°C |
| 2 | H | H | H | H | H | H | $-CH_2-$ | 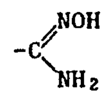 | Smp. 201-204°C (Z) |
| 3 | H | H | H | H | H | $CH_3$ | $-CH_2-$ | -CN | Smp. 114-116°C |
| 4 | H | H | H | H | H | $CH_3$ | $-CH_2-$ | 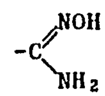 | Smp. 209-210°C (Z) |
| 5 | H | H | Cl | H | H | H | $-CH_2-$ | 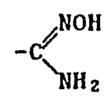 | Smp. 203-205°C (Z) |
| 6 | H | H | H | H | H | H | $-CH_2-$ | 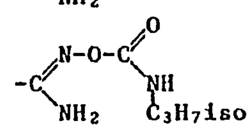 | Smp. 136-138°C |
| 7 | H | H | Cl | H | H | H | $-CH_2-$ | -CN | Smp. 159-160°C |
| 8 | H | H | H | H | H | H | $-CH_2-$ | 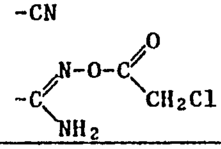 | Smp. 129-130°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 9 | Br | H | Cl | H | H | H | $-CH_2-$ | 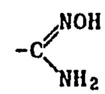 | Smp. 197-198°C (Z) |
| 10 | Br | H | Cl | H | H | H | $-CH_2-$ | -CN | Smp. 150-151°C |
| 11 | H | H | H | H | H | H | $-CH_2-$ | 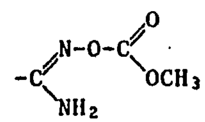 | Smp. 143-145°C |
| 12 | J | H | Cl | H | H | H | $-CH_2-$ | 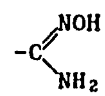 | Smp. 195-196°C (Z) |
| 13 | J | H | Cl | H | H | H | $-CH_2-$ | -CN | Smp. 141-143°C |
| 14 | Br | H | Cl | H | H | H | $-CH_2-$ | 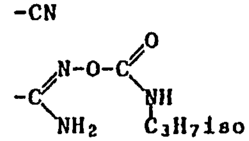 | Smp. 162-165°C |
| 15 | Cl | H | Cl | H | H | $CH_3$ | $-CH_2-$ | 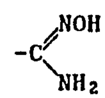 | Smp. 205-207°C (Z) |
| 16 | Cl | H | Cl | H | H | H | $-CH_2-$ | -CN | Smp. 150-152°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 17 | J | H | Cl | H | H | H | $-CH_2-$ | 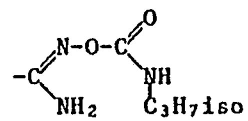 | Smp. 163-167°C |
| 18 | Cl | H | Cl | H | H | $CH_3$ | $-CH_2-$ | -CN | Smp. 157-158°C |
| 19 | Cl | H | Cl | H | H | $CH_3$ | $-CH_2-$ | 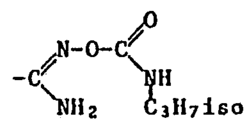 | Smp. 149-152°C |
| 20 | H | H | H | H | H | H | $-CH_2$<br>$CH_2-$ | -CN | Smp. 108-112°C |
| 21 | H | H | H | H | H | H | $CH_3$<br>$-CH-$ | -CN | Smp. 121-124°C |
| 22 | H | H | H | H | H | H | $-CH_2$<br>$CH_2-$ | 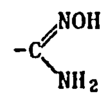 | Smp. 186-189°C |
| 23 | H | H | Cl | H | H | H | $CH_3$<br>$-CH-$ | -CN | Smp. 143-145° |
| 24 | H | H | H | H | H | H | $CH_3$<br>$-CH-$ | 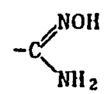 | Smp. 191-194°C (Z) |
| 25 | H | H | Cl | H | H | H | $CH_3$<br>$-CH-$ | 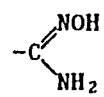 | Smp. 186-189°C (Z) |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 26 | H | H | $NO_2$ | H | H | H | 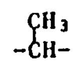 | -CN | Smp. 154-156°C |
| 27 | Cl | H | $NO_2$ | H | H | H | $-CH_2-$ | 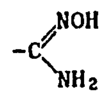 | Smp. 214-216°C (Z) |
| 28 | Cl | H | $NO_2$ | H | H | H | $-CH_2-$ | -CN | Smp. 166-169°C |
| 29 | H | H | H | H | H | H | $-CH_2-$ | 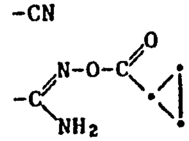 | Smp. 165-166°C |
| 30 | H | H | H | H | H | H | $-CH_2-$ | 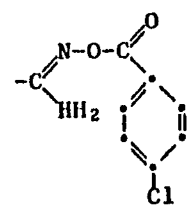 | Smp. 139-141°C |
| 31 | H | H | C | H | H | H | $-CH_2-$ | 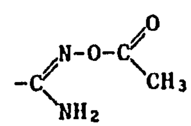 | Smp. 141-143°C |
| 32 | H | H | $NO_2$ | H | H | H | $-CH_2-$ | -CN | Smp. 162-164°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 33 | H | H | $NO_2$ | H | H | H | $-CH_2-$ | 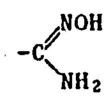 | Smp. 212-215°C (Z) |
| 34 | H | H | Cl | H | H | H | $-CH_2-$ | 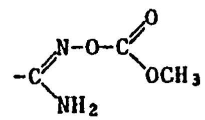 | Smp. 148-149°C |
| 35 | H | H | Cl | H | H | H | $-CH_2-$ | 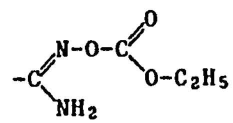 | Smp. 139-140°C |
| 36 | H | H | H | H | H | H | $-CH_2-$ | 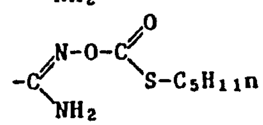 | Smp. 111-114°C |
| 37 | H | H | H | H | H | H | $-CH_2-$ | 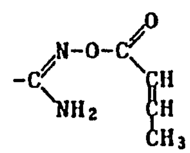 | Smp. 158-162°C |
| 38 | H | H | H | H | H | H | $-CH_2-$ | 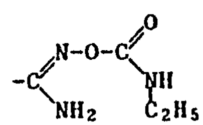 | Smp. 123-125°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 39 | H | H | H | H | H | H | $-CH_2-$ | 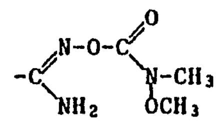 | Smp. 138-139°C |
| 40 | H | H | H | H | H | H | $-CH_2-$ | 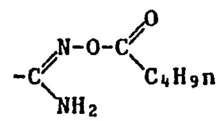 | Smp. 120-122°C |
| 41 | H | H | Cl | H | H | H | $-CH_2-$ | 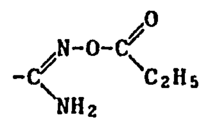 | Smp. 157-158°C (Z) |
| 42 | H | H | H | H | H | H | $-CH_2-$ | 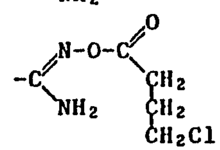 | Smp. 144-146°C |
| 43 | H | H | H | H | H | H | $-CH_2-$ | 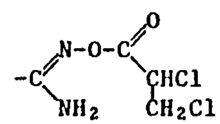 | Smp. 112-114°C |
| 44 | H | H | Cl | H | H | H | $-CH_2-$ | 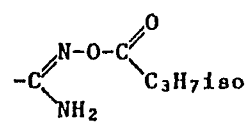 | Smp. 173-174°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 45 | H | H | H | H | H | H | $-CH_2-$ | 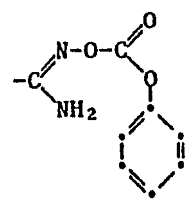 | Smp. 155-156°C |
| 46 | H | H | H | H | H | H | $-CH_2-$ | 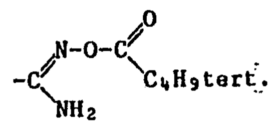 | Smp. 107-110,5°C |
| 47 | H | H | H | H | H | H | $-CH_2-$ | 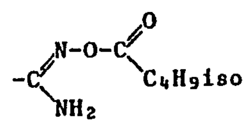 | Smp. 124-126°C |
| 48 | H | H | H | H | H | H | $-CH_2-$ | 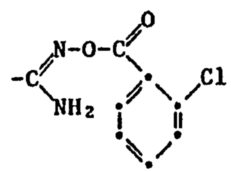 | Smp. 131-132°C |
| 49 | H | H | H | H | H | H | $-CH_2-$ | 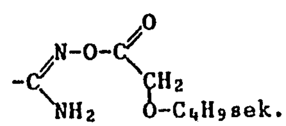 | Smp. 84-86°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 50 | H | H | H | H | H | H | $-CH_2-$ | 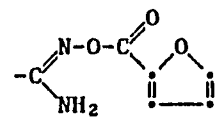 | Smp. 168-169°C |
| 51 | H | H | H | H | H | H | $-CH_2-$ | 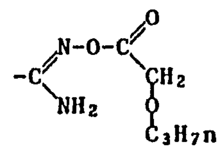 | Smp. 100-103°C |
| 52 | H | H | Cl | H | H | H | $-CH_2-$ | 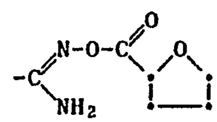 | Smp. 156-157°C (Z) |
| 53 | H | H | H | H | H | H | $-CH_2-$ | 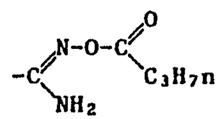 | Smp. 82-85°C |
| 54 | H | H | H | H | H | H | $-CH_2-$ | 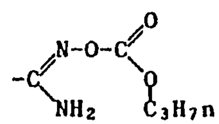 | Smp. 144-147°C |
| 55 | H | H | H | H | H | H | $-CH_2-$ | 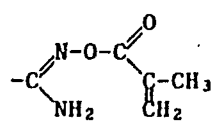 | Smp. 128-130°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 56 | H | H | H | H | H | H | $-CH_2-$ | 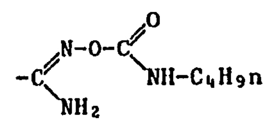 | Smp. 90-92°C |
| 57 | H | H | H | H | H | H | $-CH_2-$ | 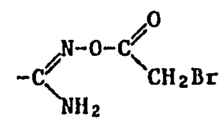 | Smp. 132-134°C |
| 58 | H | H | H | H | H | H | $-CH_2-$ | 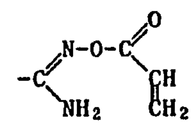 | Smp. 138-140°C |
| 59 | H | H | H | H | H | H | $-CH_2-$ | 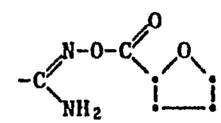 | Smp. 129-131°C |
| 60 | H | H | H | H | H | H | $-CH_2-$ | 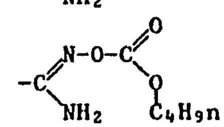 | Smp. 121-123°C |
| 61 | H | H | H | H | H | H | $-CH_2-$ | 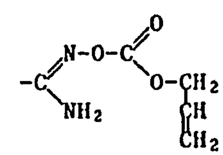 | Smp. 123-125°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 62 | H | H | H | H | H | H | $-CH_2-$ | 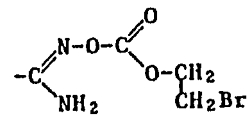 | Smp. 127-128°C (Z) |
| 63 | H | H | Cl | H | H | H | $-CH_2-$ | 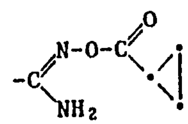 | Smp. 173-175°C |
| 64 | H | H | H | H | H | H | $-CH_2-$ | 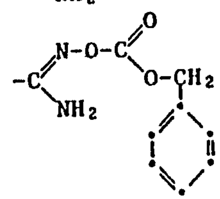 | Smp. 135-137°C |
| 65 | H | H | Cl | H | H | H | $-CH_2-$ | 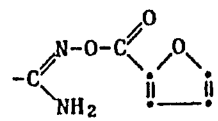 | Smp. 191-192°C (Z) |
| 66 | H | H | H | H | H | H | $-CH_2-$ | 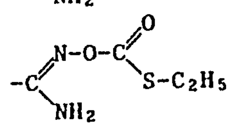 | Smp. 120-121°C |
| 67 | H | H | H | H | H | H | $-CH_2-$ | 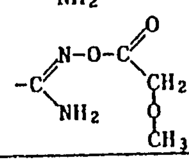 | Smp. 118-120°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 68 | H | H | Cl | H | H | H | $-CH_2-$ | 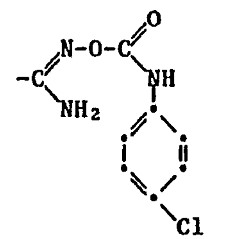 | Smp. 191-192°C (Z) |
| 69 | H | H | H | H | H | H | $-CH_2-$ | 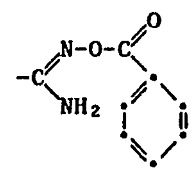 | Smp. 158-159°C |
| 70 | H | H | H | H | H | H | $-CH_2-$ | 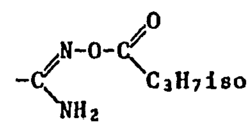 | Smp. 115-117,5°C |
| 71 | H | H | H | H | H | H | $-CH_2-$ | 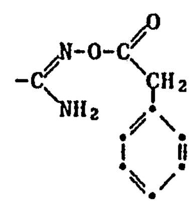 | Smp. 140-142°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 72 | H | H | H | H | H | H | $-CH_2-$ | 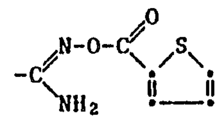 | Smp. 164-165°C |
| 73 | H | H | H | H | H | H | $-CH_2-$ | 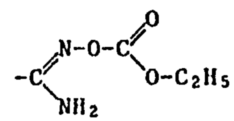 | Smp. 129-132°C |
| 74 | H | H | H | H | H | H | $-CH_2-$ | 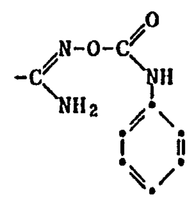 | Smp. 155-157,5°C |
| 75 | H | H | H | H | H | H | $-CH_2-$ | 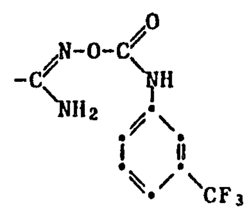 | Smp. 158-160°C |
| 76 | H | H | Cl | H | H | H | $-CH_2-$ | 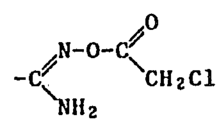 | Smp. 155-158°C (Z) |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 77 | H | H | H | H | H | H | $-CH_2-$ | 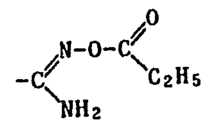 | Smp. 144-146°C |
| 78 | H | H | H | H | H | H | $-CH_2-$ | 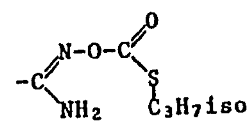 | Smp. 123-124°C |
| 79 | H | H | H | H | H | H | $-CH_2-$ | 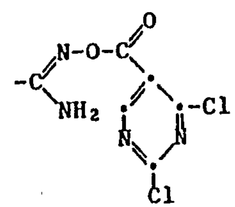 | Smp. 173-176°C (Z) |
| 80 | H | H | H | H | H | H | $-CH_2-$ | 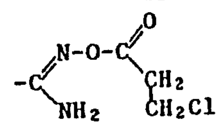 | Smp. 134-136°C (Z) |
| 81 | H | H | H | H | H | H | $-CH_2-$ | 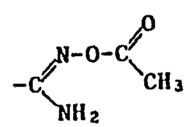 | Smp. 100-102°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 82 | H | H | H | H | H | H | $-CH_2-$ | 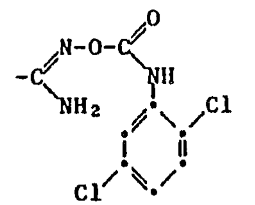 | Smp. 197-199°C |
| 83 | H | H | H | H | H | H | $-CH_2-$ | 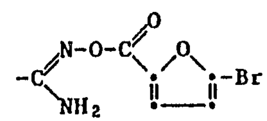 | Smp. 170-171°C |
| 84 | Cl | H | Cl | H | H | H | $-CH(CH_3)-$ | $-COOCH_3$ | Smp. 65-66°C |
| 85 | H | H | H | H | H | H | $-CH(CH_3)-$ | $-COOCH_3$ | Smp. 70-72°C |
| 86 | H | H | H | H | H | H | $-CH_2-$ | $-COOH \cdot H_2O$ | Smp. 184-185°C |
| 87 | H | H | H | H | H | H | $-CH_2-$ | $-COOCH_2CH_2OCH_3$ | Smp. 80-82°C |
| 88 | H | H | H | H | H | H | $-CH_2-$ | $-COOCH_3$ | Smp. 46,5-67,0°C |
| 89 | H | H | H | H | H | H | $-CH_2-$ | $-COOC_2H_5 \cdot H_2O$ | Smp. 56-59°C |
| 90 | H | H | H | H | H | H | $-CH(CH_3)-$ | $-CONH(CH_2)_3OC_2H_5$ | Smp. 54-56°C |
| 91 | H | H | H | H | H | H | $-CH(CH_3)-$ | $-CONHC_2H_5$ | Smp. 86-88°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 92 | H | H | H | H | H | H | $-CH_2-$ | $-COOC_3H_7n$ | Smp. 28-31°C |
| 93 | H | H | H | H | H | H | $-CH_2-$ | $-COOC_3H_7iso$ | $n_D^{23}$ = 1,5696 |
| 94 | H | H | H | H | H | H | $-CH_2-$ | $-CONHCH_3 \cdot H_2O$ | Smp. 74-81°C |
| 95 | H | H | H | H | H | H | $-CH_2-$ | $-CON(CH_3)CH_3$ | Smp. 142-145°C |
| 96 | H | H | H | H | H | H | $-CH_2-$ | $-CONHC_2H_5$ | $n_D^{22,5}$ = 1,6002 |
| 97 | H | H | H | H | H | H | $-CH(CH_3)-$ | $-CONH(CH_2)_3OH$ | Smp. 120-122°C |
| 98 | H | H | H | H | H | H | $-CH_2-$ | $-COOCH_2CH_2OC_2H_5$ | $n_D^{24}$ = 1,5673 |
| 99 | H | H | H | H | H | H | $-CH(CH_3)-$ | $-CONHCH_2-$ 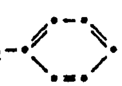 | Smp. 88-90°C |
| 100 | H | H | H | H | H | H | $-CH_2-$ | $-CONH(CH_2)_3CH_3$ | Smp. 66-68°C |
| 101 | H | H | H | H | H | H | $-CH(CH_3)-$ | $-CON(CH_3)CH_2CH_2OH$ | $n_D^{22}$ = 1,6054 |
| 102 | H | H | H | H | H | H | $-CH_2-$ | $-CON(CH_3)CH_2CH_2OH$ | Smp. 146-149°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 103 | H | H | H | H | H | H | $-CH_2-$ | $-COOCH_2-$ 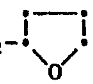 | zähe Masse |
| 104 | H | H | H | H | H | H | $-CH-$<br>$CH_3$ | $-CONH(CH_2)_3CH_3 \cdot H_2O$ | Smp. 73-76°C |
| 105 | H | H | H | H | H | H | $-CH-$<br>$CH_3$ | $-CON$ 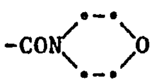 | Smp. 120-121°C |
| 106 | H | H | H | H | H | H | $-CH-$<br>$CH_3$ | $-CON$ 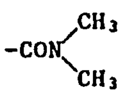 | Smp. 105-111°C |
| 107 | H | H | Cl | H | H | H | $-CH_2-$ | $-COOH$ | Smp. 232-233°C |
| 108 | H | H | Cl | H | H | H | $-CH_2-$ | $-COOCH_2CH_2OCH_3$ | Smp. 97-98°C |
| 109 | H | H | Cl | H | H | H | $-CH_2-$ | $-COOCH_3$ | Smp. 104-105,5°C |
| 110 | H | H | Cl | H | H | H | $-CH_2-$ | $-COOC_2H_5$ | Smp. 116-117°C |
| 111 | H | H | Cl | H | H | H | $-CH_2-$ | $-COOC_3H_7n$ | Smp. 108-109°C |
| 112 | H | H | Cl | H | H | H | $-CH_2-$ | $-CON$ 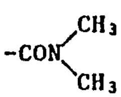 | Smp. 135-136°C |
| 113 | H | H | H | H | H | $CH_3$ | $-CH_2-$ | $-COOCH_3$ | Smp. 58-66°C |
| 114 | H | H | H | H | H | $CH_3$ | $-CH_2-$ | $-COOC_2H_5$ | $n_D^{22,5} = 1,5762$ |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 115 | H | H | Cl | H | H | H | $-CH_2-$ | $-COOC_4H_9$tert. | Smp. 63-69°C |
| 116 | H | H | H | H | H | H | $-CH_2-$ | $-COOC_4H_9$tert. | Smp. 68-70°C |
| 117 | H | H | Cl | H | H | H | $-CH_2-$ | $-COOCH_2-C\equiv CH$ | Smp. 115-116°C |
| 118 | H | H | Cl | H | H | H | $-CH_2-$ | $-COOC_3H_7$iso | Smp. 147-148°C |
| 119 | H | H | Cl | H | H | H | $-CH_2-$ | $-COOCH_2CH_2OC_2H_5$ | Smp. 102-104°C |
| 120 | H | H | Cl | H | H | H | $-CH_2-$ | $-COOCH_2-$ 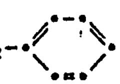 | Smp. 110-112°C |
| 121 | H | H | Cl | H | H | H | $-CH_2-$ | $-COOCH_2-CH=CH_2$ | Smp. 98-99°C |
| 122 | H | H | Cl | H | H | H | $-CH_2-$ | $-COO(CH_2)_{11}CH_3$ | Smp. 76-77°C |
| 123 | H | H | Cl | H | H | H | $-CH_2-$ | $-COOC_4H_9$sek. | Smp. 110-111°C |
| 124 | H | H | H | H | H | H | $-CH_2-$ | $-COO(CH_2)_7CH_3$ | $n_D^{24}$ = 1,5419 |
| 125 | H | H | Cl | H | H | H | $-CH_2-$ | $-COOC_4H_9$n | Smp. 90,5-92°C |
| 126 | H | H | H | H | H | H | $-CH_2-$ | $-COO(CH_2)_{11}CH_3$ | $n_D^{23}$ = 1,5232 |
| 127 | H | H | H | H | H | H | $-CH_2-$ | $-COOCH_2-CH=CH_2$ | $n_D^{23}$ = 1,5885 |
| 128 | H | H | Cl | H | H | H | $-CH_2-$ | $-COO(CH_2)_7CH_3$ | Smp. 87-88°C |
| 129 | H | H | H | H | H | H | $-CH_2-$ | $-COOC_4H_9$n | $n_D^{22}$ = 1,5642 |
| 130 | H | H | H | H | H | H | $-CH_2-$ | $-COOC_4H_9$sek. | Oel (rot) |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 131 | H | H | Cl | H | H | H | $-CH_2-$ | $-COOCH_2CH_2Cl$ | Smp. 125-126°C |
| 132 | H | H | H | H | H | H | $-CH_2-$ | $-COOCH_2-$ 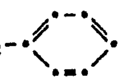 | $n_D^{23,5}$ = 1,6099 |
| 133 | H | H | Cl | H | H | H | $-CH_2-$ | $-COOCH_2-$ 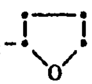 | Smp. 101-103°C |
| 134 | H | H | Cl | H | H | H | $-CH_2-$ | $-COS(CH_2)_7CH_3$ | Smp. 53-54°C |
| 135 | H | H | H | H | H | H | $-CH_2-$ | $-COOCH_2CH_2Cl$ | Smp. 109-110°C |
| 136 | J | H | Cl | H | H | H | $-CH_2-$ | $-COOC_4H_9$tert. | Smp. 81-97°C |
| 137 | J | H | Cl | H | H | H | $-CH_2-$ | $-COOC_2H_5$ | Smp. 92-94°C |
| 138 | J | H | Cl | H | H | H | $-CH_2-$ | $-COO(CH_2)_{11}CH_3$ | Smp. 51-53°C |
| 139 | J | H | Cl | H | H | H | $-CH_2-$ | $-COOCH_3$ | Smp. 121-126°C |
| 140 | J | H | Cl | H | H | H | $-CH_2-$ | $-COOCH_2CH_2Cl$ | Smp. 44-45°C |
| 141 | J | H | Cl | H | H | H | $-CH_2-$ | $-COOCH_2-$ 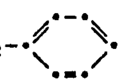 | Smp. 112-113°C |
| 142 | J | H | Cl | H | H | H | $-CH_2-$ | $-COOC_3H_7n$ | Smp. 71-73°C |
| 143 | H | H | H | H | H | H | $-CH_2-$ | $-COOC_4H_9$iso | $n_D^{22}$ = 1,5632 |
| 144 | H | H | H | H | H | H | $-CH_2-$ | $-COOCH(CH_3)CH_2CH_2CH_3$ | $n_D^{22}$ = 1,5391 |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 145 | H | H | H | H | H | H | $-CH_2-$ | 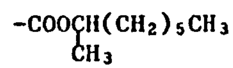 | $n_D^{22}$ = 1,5342 |
| 146 | H | H | H | H | H | H | $-CH_2-$ | $-CONH(CH_2)_{11}CH_3$ | Smp. 56-61°C |
| 147 | H | H | H | H | H | H | $-CH_2-$ | 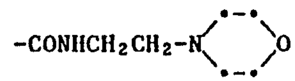 | Smp. 94-99°C |
| 148 | H | H | H | H | H | H | $-CH_2-$ | $-CONHCH_2CH_2CH_2OH$ | Smp. 138-139°C |
| 149 | H | H | H | H | H | H | $-CH_2-$ | 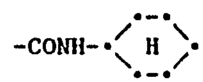 | Smp. 104-106°C |
| 150 | H | H | H | H | H | H | $-CH_2-$ | 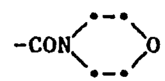 | Smp. 99-103°C |
| 151 | H | H | H | H | H | H | $-CH_2-$ | 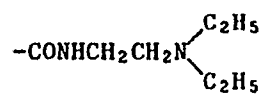 | $n_D^{23}$ = 1,5686 |
| 152 | H | H | H | H | H | H | $-CH_2-$ | 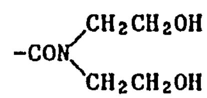 | Smp. 144-146°C |
| 153 | H | H | H | H | H | H | $-CH_2-$ | 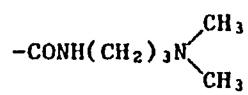 | $n_D^{23}$ = 1,5766 |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 154 | H | H | H | H | H | H | $-CH_2-$ | $-CON(CH_3)(C_4H_9n)$ | $n_D^{22}$ = 1,5840 |
| 155 | H | H | H | H | H | H | $-CH_2-$ | $-CONHCH_2-$ 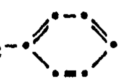 • $H_2O$ | Smp. 70,5-73,5°C |
| 156 | H | H | H | H | H | H | $-CH_2-$ | $-CONHCH(CH_2OH)CH_2CH_3$ | Smp. 150-151°C |
| 157 | H | H | H | H | H | H | $-CH_2-$ | $-CON(C_4H_9n)(C_4H_9n)$ • $2H_2O$ | Smp. 105-106°C |
| 158 | H | H | H | H | H | H | $-CH_2-$ | $-CONHCH_2CH_2-$ 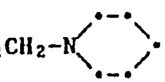 | $n_D^{26}$ = 1.5821 |
| 159 | H | H | H | H | H | H | $-CH_2-$ | $-CONH(CH_2)_3N(CH_2CH_2OH)(CH_2CH_2OH)$ | Smp. 109-110°C |
| 160 | H | H | H | H | H | H | $-CH_2-$ | $-CONHCH_2-CH=CH_2$ • $H_2O$ | Smp. 71-75°C |
| 161 | H | H | H | H | H | H | $-CH_2-$ | $-CONHCH_2-$ 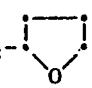 • $H_2O$ | Smp. 57-58°C |
| 162 | H | H | H | H | H | H | $-CH_2-$ | $-CONH(CH_2)_3OC_2H_5$ | Smp. 51-61°C |
| 163 | H | H | H | H | H | H | $-CH_2-$ | $-CONHCH_2CH_2NHCH_2CH_2OH$ | Smp. 70-91°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 164 | H | H | Cl | H | H | H | $-CH_2-$ | $CONH(CH_2)_3OC_2H_5$ | Smp. 85-88°C |
| 165 | H | H | Cl | H | H | H | $-CH_2-$ | 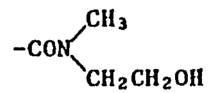 | Smp. 187-189°C |
| 166 | H | H | Cl | H | H | H | $-CH_2-$ | 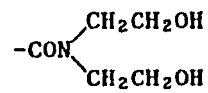 | Smp. 177-179°C |
| 167 | H | H | Cl | H | H | H | $-CH_2-$ | 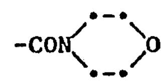 | Smp. 148-150°C |
| 168 | H | H | Cl | H | H | H | $-CH_2-$ | $-CONHCH_2CH_2CH_2OH$ | Smp. 157-160°C |
| 169 | H | H | Cl | H | H | H | $-CH_2-$ | $-CONHC_4H_9n \cdot H_2O$ | Smp. 87-90°C |
| 170 | H | H | Cl | H | H | H | $-CH_2-$ | $-CONHC_2H_5$ | Smp. 94-98°C |
| 171 | H | H | Cl | H | H | H | $-CH_2-$ | $-CONHCH_2-$ 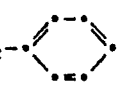 $\cdot \frac{1}{2} H_2O$ | Smp. 146-149°C |
| 172 | H | H | H | H | H | $CH_3$ | $-CH_2-$ | $-CONH_2$ | Smp. 193-196°C |
| 173 | H | H | H | H | H | H | $-CH_2-$ | $-CONHNH_2 \cdot H_2O$ | Smp. 121-124°C |
| 174 | H | H | H | H | H | H | $-CH_2-$ | $-COONa \cdot H_2O$ | Smp. 140-142°C |
| 175 | H | H | H | H | H | H | $-CH_2-$ | $-COOK \cdot H_2O$ | Smp. > 200°C |
| 176 | H | H | H | H | H | H | $-CH_2-$ | $-COO^{\ominus}\ \overset{\oplus}{H}N(CH_3)_3$ | Smp. 176-178°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 177 | H | H | H | H | H | H | $-CH_2-$ | $-COO^{\ominus}\ \overset{\oplus}{H}N(CH_2CH_2OH)_3$ | Smp. 97-98°C |
| 178 | H | H | Cl | H | H | H | $-CH_2-$ | $-COOK \cdot H_2O$ | Smp. > 260°C |
| 179 | H | H | Cl | H | H | H | $-CH_2-$ | $-COONa \cdot H_2O$ | Smp. > 260°C |
| 180 | H | H | H | H | H | H | $-CH_2-$ | $-COO^{\ominus}\ \overset{\oplus}{H}N(C_2H_5)_3$ | Smp. 255-257°C (Z) |
| 181 | H | H | Cl | H | H | H | $-CH_2-$ | $-COO^{\ominus}\ \overset{\oplus}{N}H_4$ | Smp. 227-228°C (Z) |
| 182 | H | H | Cl | H | H | H | $-CH_2-$ | $-COO^{\ominus}\ \overset{\oplus}{H}N(CH_2CH_2OH)_3$ | Smp. 132-156°C (Z) |
| 183 | H | H | Cl | H | H | H | $-\underset{CH_3}{CH}-$ | -COO- 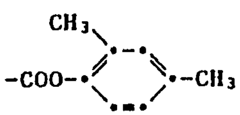 | Smp. 120-122°C |
| 184 | H | H | Cl | H | H | H | $-CH_2-$ | $-COO\overset{CH_3}{C}H(CH_2)_5CH_3$ | Smp. 65-67°C |
| 185 | H | H | Cl | H | H | H | $-CH_2-$ | $-COOCH_2CH=CH-CH_3$ | Smp. 100-102°C |
| 186 | H | H | Cl | H | H | H | $-CH_2-$ | $-COOCH_2-\overset{CH_3}{C}=CH_2$ | Smp. 94-95°C |
| 187 | H | H | Cl | H | H | H | $-CH_2-$ | $-COOCH_2CH_2OC_3H_7iso$ | Smp. 70-72°C |
| 188 | H | H | Cl | H | H | H | $-CH_2-$ | $-COOCH_2CH_2-O-$ 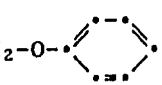 | Smp. 79-80,5°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 189 | Br | H | Br | H | H | H | $-CH_2-$ | $-COOCH_3$ | Smp. 143-145°C |
| 190 | Br | H | Cl | H | H | H | $-CH_2-$ | $-COOC_3H_7iso$ | Smp. 71-73°C |
| 191 | Br | H | Br | H | H | H | $-CH_2-$ | $-COOC_3H_7iso$ | Smp. 47-51°C |
| 192 | Cl | H | Cl | H | H | H | $-CH_2-$ | $-COOC_4H_9n$ | Smp. 42-43,5°C |
| 193 | Br | H | Cl | H | H | H | $-CH_2-$ | $-COOC_4H_9n$ | Smp. ca. 28°C |
| 194 | Cl | H | Cl | H | H | H | $-CH_2-$ | $-COO(CH_2)_7CH_3$ | Smp. ca. 30°C |
| 195 | Br | H | Cl | H | H | H | $-CH_2-$ | $-COO(CH_2)_7CH_3$ | Smp. 41-42°C |
| 196 | Br | H | Cl | H | H | H | $-CH_2-$ | $-COOCH(CH_3)(CH_2)_5CH_3$ | Smp. 46-48°C |
| 197 | Cl | H | Cl | H | H | H | $-CH_2-$ | $-COO(CH_2)_{11}CH_3$ | Smp. 49-50°C |
| 198 | Br | H | Cl | H | H | H | $-CH_2-$ | $-COO(CH_2)_{11}CH_3$ | Smp. 50-52°C |
| 199 | Cl | H | Cl | H | H | H | $-CH_2-$ | $-COOCH_2-$ 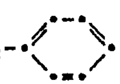 | Smp. 79-80°C |
| 200 | Br | H | Cl | H | H | H | $-CH_2-$ | $-COOCH_2-$ 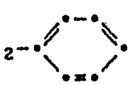 | Smp. 100-102°C |
| 201 | Br | H | Br | H | H | H | $-CH_2-$ | $-COOCH_2-$ 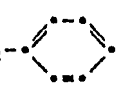 | Smp. 101-104°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 202 | Br | H | Cl | H | H | H | $-CH_2-$ | $-COOCH_2CH_2OCH_3$ | Smp. 68-70°C |
| 203 | Cl | H | Cl | H | H | H | $-CH_2-$ | $-COOCH_2CH_2OC_2H_5$ | Smp. 81-82°C |
| 204 | Br | H | Cl | H | H | H | $-CH_2-$ | $-COOCH_2CH_2OC_2H_5$ | Smp. 71-72°C |
| 205 | Br | H | Cl | H | H | H | $-CH_2-$ | $-COOCH_2CH_2OC_3H_7$iso | $n_D^{25} = 1,5763$ |
| 206 | Br | H | Cl | H | H | H | $-CH_2-$ | $-COOCH_2CH_2O-$ 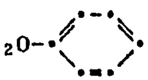 | Smp. 80-82°C |
| 207 | Cl | H | Cl | H | H | H | $-CH_2-$ | $-COOCH_2-$ 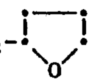 | Smp. 77-78°C |
| 208 | Br | H | Cl | H | H | H | $-CH_2-$ | $-COOCH_2-$ 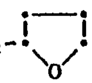 | Smp. 79-80°C |
| 209 | Cl | H | Cl | H | H | H | $-CH_2-$ | $-COOCH_2CH=CH_2$ | Smp. 72-73°C |
| 210 | Br | H | Cl | H | H | H | $-CH_2-$ | $-COOCH_2CH=CH_2$ | Smp. 66-68,5°C |
| 211 | Br | H | Br | H | H | H | $-CH_2-$ | $-COOCH_2CH=CH_2$ | Smp. 78-79°C |
| 212 | Br | H | Cl | H | H | H | $-CH_2-$ | $-COOCH_2CH=CH-CH_3$ | Smp. 60-64°C |
| 213 | Cl | H | Cl | H | H | H | $-CH_2-$ | $CH_3$<br>$-COOCH_2-C=CH_2$ | Smp. 62-65°C |
| 214 | Br | H | Cl | H | H | H | $-CH_2-$ | $CH_3$<br>$-COOCH_2-C=CH_2$ | Smp. 62-64°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 215 | Br | H | Cl | H | H | H | $-CH_2-$ | $-COO-$ 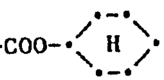 | Smp. 52-54°C |
| 216 | H | H | Cl | H | H | H | $-\underset{CH_3}{CH}-$ | $-COOC_3H_7iso$ | $n_D^{24}$ = 1,5642 |
| 217 | H | H | Cl | H | H | H | $-\underset{CH_3}{CH}-$ | $-COO(CH_2)_7CH_3$ | $n_D^{23}$ = 1,5356 |
| 218 | H | H | Cl | H | H | H | $-\underset{CH_3}{CH}-$ | $-COO\overset{CH_3}{C}H(CH_2)_5CH_3$ | $n_D^{25}$ = 1,5370 |
| 219 | H | H | Cl | H | H | H | $-\underset{CH_3}{CH}-$ | $-COO(CH_2)_{11}CH_3$ | Smp. 54-55°C |
| 220 | H | H | Cl | H | H | H | $-\underset{CH_3}{CH}-$ | $-COOCH_2-$ 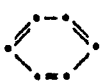 | Smp. 57-59°C |
| 221 | H | H | Cl | H | H | H | $-\underset{CH_3}{CH}-$ | $-COOCH_2CH_2OC_3H_7iso$ | $n_D^{32}$ = 1,5403 |
| 222 | H | H | Cl | H | H | H | $-\underset{CH_3}{CH}-$ | $-COOCH_2CH_2O-$ 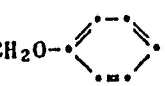 | $n_D^{29}$ = 1,5962 |
| 223 | H | H | Cl | H | H | H | $-\underset{CH_3}{CH}-$ | $-COOCH_2CH=CH_2$ | Smp. 40-41°C |
| 224 | H | H | Cl | H | H | H | $-\underset{CH_3}{CH}-$ | $-COOCH_2CH=CH-CH_3$ | Smp. 39-40°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 225 | H | H | Cl | H | H | H | $-CH(CH_3)-$ | $-COOCH_2-C(CH_3)=CH_2$ | Smp. 62-63°C |
| 226 | H | H | Cl | H | H | H | $-CH(CH_3)-$ | -COO- 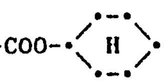 | $n_D^{30}$ = 1,5677 |
| 227 | Br | H | Cl | H | H | H | $-CH(CH_3)-$ | $-COO(CH_2)_7CH_3$ | $n_D^{28}$ = 1,5439 |
| 228 | Cl | H | Cl | H | H | H | $-CH(CH_3)-$ | $-COOCH(CH_3)(CH_2)_5CH_3$ | $n_D^{25}$ = 1,5408 |
| 229 | Br | H | Cl | H | H | H | $-CH(CH_3)-$ | $-COOCH(CH_3)(CH_2)_5CH_3$ | $n_D^{25}$ = 1,5527 |
| 230 | Br | H | Cl | H | H | H | $-CH(CH_3)-$ | $-COO(CH_2)_{11}CH_3$ | $n_D^{30}$ = 1,5347 |
| 231 | Br | H | Cl | H | H | H | $-CH(CH_3)-$ | $-COOCH_2-$ 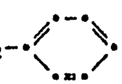 | Smp. 55-56°C |
| 232 | Br | H | Cl | H | H | H | $-CH(CH_3)-$ | $-COOCH_2-$ 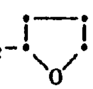 | $n_D^{30}$ = 1,5886 |
| 233 | Br | H | Cl | H | H | H | $-CH(CH_3)-$ | $-COOCH_2CH_2OC_3H_7iso$ | $n_D^{28}$ = 1,5642 |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 234 | Br | H | Cl | H | H | H | $-CH-$<br>$CH_3$ | $-COOCH_2CH_2O-$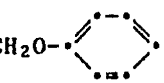 | $n_D^{20}$ = 1,6031 |
| 235 | Br | H | Cl | H | H | H | $-CH-$<br>$CH_3$ | $-COOCH_2CH=CH_2$ | Smp. 55-56°C |
| 236 | Cl | H | Cl | H | H | H | $-CH-$<br>$CH_3$ | $-COOCH_2CH=CH-CH_3$ | Smp. 38-39°C |
| 237 | Br | H | Cl | H | H | H | $-CH-$<br>$CH_3$ | $-COOCH_2CH=CH-CH_3$ | Smp. 38-40°C |
| 238 | Br | H | Cl | H | H | H | $-CH-$<br>$CH_3$ | $CH_3$<br>$-COOCH_2C=CH_2$ | $n_D^{28}$ = 1,5824 |
| 239 | H | H | Cl | H | H | H | $-CH_2-$ | $-COO-$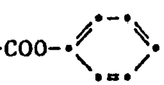 | Smp. 165-170°C |
| 240 | H | H | Cl | H | H | H | $-CH_2-$ | $-COO-$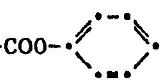$-CH_3$ | Smp. 143-145°C |
| 241 | H | H | Cl | H | H | H | $-CH_2-$ | $-COO-$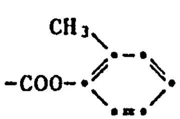 | Smp. 111-116°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 242 | H | H | Cl | H | H | H | $-CH_2-$ | -COO- 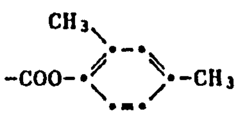 | Smp. 108-119°C |
| 243 | H | H | Cl | H | H | H | $-CH-$<br>$CH_3$ | -COO- 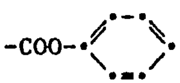 | Smp. 102-105°C |

Tabelle 1 (Fortsetzung)

| Nr. | $R_1$ | $R_2$ | $R_3$ | $R_4$ | $R_5$ | $R_6$ | A + Z | physikal. Konstante |
|---|---|---|---|---|---|---|---|---|
| 244 | H | H | Cl | H | H | H | 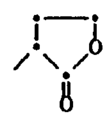 | Smp. 140-141,5°C |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 245 | H | H | Cl | H | H | H | $-CH_2$ | $-COO\overset{CH_3}{C}HCH_2CH_2CH_3$ | Smp. 65-70° |
| 246 | H | H | H | H | H | H | $-CH_2-$ | $-COOCH_2-\overset{CH_3}{C}H(CH_2)_2CH_3$ | Oel; $n_D^{22}$: 1,5525 |
| 247 | H | H | Cl | H | H | H | $-CH_2-$ | -CO- 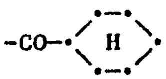 | Smp. 112-113° |
| 248 | H | H | Cl | H | H | H | $-CH_2-$ | $-COOCH_2\overset{CH_3}{C}H-CH_3$ | Smp. 113-114° |
| 249 | H | H | H | H | H | H | $-CH_2-$ | $-COO(CH_2)_2\overset{OCH_3}{C}HCH_3$ | Oel; $n_D^{23}$: 1,5732 |
| 250 | H | H | H | H | H | H | $-CH_2-$ | $-COOCH_2CH_2OCH_2CH_2O(CH_2)_3CH_3$ | Oel; $n_D^{22}$: 1,5389 |
| 251 | H | H | H | H | H | H | $-CH_2-$ | $-COS(CH_2)_3CH_3$ | Oel; $n_D^{23}$: 1,6096 |
| 252 | H | H | H | H | H | H | $-CH_2-$ | -COO- 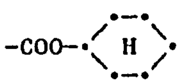 | Oel; $n_D^{23}$: 1,5755 |
| 253 | H | H | H | H | H | H | $-CH_2-$ | $-COO(CH_2)_4CH_3$ | Oel; $n_D^{23}$: 1,5591 |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 254 | H | H | H | H | H | H | $-CH_2-$ | $-COS(CH_2)_7CH_3$ | Oel; $n_D^{22}$: 1,5697 |
| 255 | H | H | Cl | H | H | H | $-CH_2-$ | $-COOCH_2-\overset{CH_3}{C}H(CH_2)_2CH_3$ | Smp. 74-75° |
| 256 | H | H | Cl | H | H | H | $-CH_2-$ | $-COS(CH_2)_3(CH_3$ | Oel; $n_D^{22}$: 1,6076 |
| 257 | H | H | H | H | H | H | $-CH_2-$ | $-COOCH_2CH=CH-CH_3$ | Oel; $n_D^{22}$: 1,5833 |
| 258 | H | H | H | H | H | H | $-CH_2-$ | $-COOCH_2-\overset{C_2H_5}{C}H-C_2H_5$ | Oel; $n_D^{23}$: 1,5530 |
| 259 | H | H | Cl | H | H | H | $-CH_2-$ | $-COOCH_2CH_2OCH_2CH_2O(CH_2)_3CH_3$ | Smp. 39-41° |
| 260 | H | H | Cl | H | H | H | $-CH_2-$ | $-COO(CH_2)_2\overset{OCH_3}{C}HCH_3$ | Smp. 72-73° |
| 261 | H | H | Cl | H | H | H | $-CH_2-$ | $-COO(CH_2)_4CH_3$ | Smp. 78-79° |
| 262 | H | H | Cl | H | H | H | $-CH_2-$ | $-COO\overset{C_2H_5}{C}H-(CH_2)_2CH_3$ | Smp. 37-46° |
| 263 | H | H | H | H | H | H | $-CH_2-$ | $-COOCH_2CH_2OC_3H_7-i$ | Oel; $n_D^{22}$: 1,5546 |
| 264 | H | H | Cl | H | H | H | $-CH_2-$ | $-COO(CH_2)_{13}CH_3$ | Smp. 75-76° |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 265 | H | H | H | H | H | H | $-CH_2-$ | $C_2H_5$<br>$-COOCH-C_2H_5$ | Smp. 47-50° |
| 266 | H | H | H | H | H | H | $-CH_2-$ | -COO- 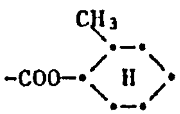 | Smp. 29-31° |
| 267 | H | H | Cl | H | H | H | $-CH_2-$ | $C_2H_5$<br>$-COOCH_2-CH-C_2H_5$ | Smp. 58-63° |
| 268 | H | H | H | H | H | H | $-CH_2-$ | $-COOCH_2CH_2OCH_2CH_2OC_2H_5$ | Oel; $n_D^{22}$: 1,5489 |
| 269 | H | H | H | H | H | H | $-CH_2-$ | $-COOCH_2CH_2O-$ 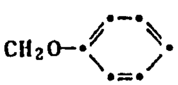 | Smp. 80-81° |
| 270 | H | H | Cl | H | H | H | $-CH_2-$ | $C_2H_5$<br>$-COOCH-C_2H_5$ | Smp. 55-80° |
| 271 | H | H | H | H | H | H | $-CH_2-$ | $CH_3$ $CH_3$<br>$-COOCHCH_2CH-CH_3$ | Oel; $n_D^{22}$: 1,5463 |
| 272 | H | H | H | H | H | H | $-CH_2-$ | $-COO(CH_2)_{13}CH_3$ | Smp. 35-36° |
| 273 | H | H | H | H | H | H | $-CH_2-$ | $-COOCH_2CH_2O(CH_2)_3CH_3$ | Oel; $n_D^{22}$: 1,5495 |
| 274 | H | H | Cl | H | H | H | $-CH_2-$ | $-COOCH_2CH_2OCH_2CH_2OC_2H_5$ | Smp. 42-43° |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 275 | H | H | H | H | H | H | $-CH_2-$ | 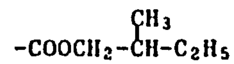 | Oel; $n_D^{22}$: 1,5566 |
| 276 | H | H | Cl | H | H | H | $-CH_2-$ | 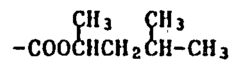 | Smp. 63-64° |
| 277 | H | H | H | H | H | H | $-CH_2-$ | 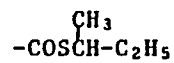 | Oel; $n_D^{22}$: 1,5973 |
| 278 | H | H | Cl | H | H | H | $-CH_2-$ | 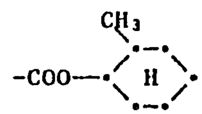 | Smp. 98-101° |
| 279 | H | H | H | H | H | H | $-CH_2-$ | 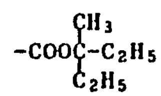 | Oel; $n_D^{22}$: 1,5551 |
| 280 | H | H | H | H | H | H | $-CH_2-$ | 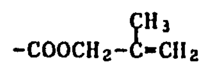 | Oel; $n_D^{22}$: 1,5805 |
| 281 | H | H | H | H | H | H | $-CH_2-$ | 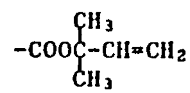 | Oel; $n_D^{22}$: 1,5793 |
| 282 | H | H | H | H | H | H | $-CH_2-$ | $-COOCH_2CH_2OCH_2CH_2OCH_3$ | Oel; $n_D^{23}$: 1,5560 |
| 283 | H | H | Cl | H | H | H | $-CH_2-$ | 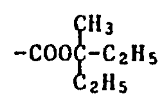 | Oel; $n_D^{22}$: 1,5632 |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 284 | H | H | Cl | H | H | H | $-CH_2-$ | $-COO(CH_2)_{10}CH_3$ | Smp. 70-71° |
| 285 | H | H | Cl | H | H | H | $-CH_2-$ | $CH_3$<br>$-COOCH_2-CH-C_2H_5$ | Smp. 78-79° |
| 286 | H | H | H | H | H | H | $-CH_2-$ | 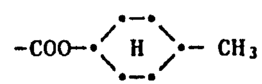 | Smp. 40-42° |
| 287 | H | H | H | H | H | H | $-CH_2-$ | $-COO(CH_2)_6CH_3$ | Oel; $n_D^{23}$: 1,5469 |
| 288 | H | H | H | H | H | H | $-CH_2-$ | $CH_3$<br>$-COOC-C_2H_5$<br>$CH_3$ | Oel; $n_D^{22}$: 1,5581 |
| 289 | H | H | Cl | H | H | H | $-CH_2-$ | $-COOCH_2CH_2O(CH_2)_3CH_3$ | Smp. 69-70° |
| 290 | H | H | Cl | H | H | H | $-CH_2-$ | $CH_3$<br>$-COSCHC_2H_5$ | Smp. 55-56° |
| 291 | H | H | Cl | H | H | H | $-CH_2-$ | $CH_3$<br>$-COOC-CH=CH_2$<br>$CH_3$ | Smp. 83-87° |
| 292 | H | H | H | H | H | H | $-CH_2-$ | $-COSCH_3$ | Smp. 41-44° |
| 293 | H | H | Cl | H | H | H | $-CH_2-$ | $-COOCH_2CH_2OCH_2CH_2OCH_3$ | Oel; $n_D^{23}$: 1.5633 |
| 294 | H | H | Cl | H | H | H | $-CH_2-$ | $-COSCH_3$ | Smp. 89-91° |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 295 | H | H | Cl | H | H | H | $-CH_2-$ | $-COOC(CH_3)_2-C_2H_5$ | Smp. 53-54° |
| 296 | H | H | H | H | H | H | $-CH_2-$ | $-COO(CH_2)_{10}CH_3$ | Oel; $n_D^{23}$: 1,5310 |
| 297 | H | H | Cl | H | H | H | $-CH_2-$ | $-COO(CH_2)_6CH_3$ | Smp. 74-76° |
| 298 | H | H | H | H | H | H | $-CH_2-$ | $-COOCH(CH_3)-CH(CH_3)-CH_3$ | Oel; $n_D^{23}$: 1,554 |
| 299 | H | H | Cl | H | H | H | $-CH_2-$ | -COO- 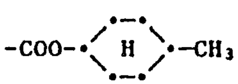 -CH₃ | Smp. 103-105° |
| 300 | H | H | H | H | H | H | $-CH_2-$ | $-COSC(CH_3)_2-CH_3$ | Oel; $n_D^{23}$; 1,5987 |
| 301 | H | H | Cl | H | H | H | $-CH_2-$ | $-COS(CH_2)_{11}CH_3$ | Smp. 26-28° |
| 302 | H | H | Cl | H | H | H | $-CH_2-$ | $-COS(CH_2)_9CH_3$ | Smp. 29-31° |
| 303 | H | H | Cl | H | H | H | $-CH_2-$ | $-COO(CH_2)_9CH_3$ | Smp. 73-74° |
| 304 | H | H | H | H | H | H | $-CH_2-$ | $-COOCH(CH_3)(CH_2)_4CH_3$ | Oel; $n_D^{23}$: 1,5433 |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 305 | H | H | Cl | H | H | H | $-CH_2-$ | $C_3H_7$-n<br>$-COOCH-C\equiv CH$ | Smp. 81-82° |
| 306 | H | H | H | H | H | H | $-CH_2-$ | $C_5H_{11}$-n<br>$-COOCH-CH=CH_2$ | Oel; $n_D^{23}$: 1,5472 |
| 307 | H | H | Cl | H | H | H | $-CH_2-$ | $CH_3$ $CH_3$<br>$-COOCH-CH-CH_3$ | Smp. 70-74° |
| 308 | H | H | Cl | H | H | H | $-CH_2-$ | $CH_3$<br>$-COSC-CH_3$<br>$CH_3$ | Oel; $n_D^{22}$: 1,5996 |
| 309 | H | H | H | H | H | H | $-CH_2-$ | $CH_3$<br>$-COOCH-C\equiv CH$ | Oel; $n_D^{23}$: 1,5837 |
| 310 | H | H | H | H | H | H | $-CH_2-$ | $-COS(CH_2)_{11}CH_3$ | Oel; $n_D^{23}$: 1,5523 |
| 311 | H | H | H | H | H | H | $-CH_2-$ | $CH_3$<br>$-COOCH_2-C-CH_3$<br>$CH_3$ | Oel; $n_D^{22}$: 1,5524 |
| 312 | H | H | H | H | H | H | $-CH_2-$ | $-COSC_2H_5$ | Oel; $n_D^{23}$: 1,6310 |
| 313 | H | H | Cl | H | H | H | $-CH_2-$ | $CH_3$<br>$-COOCH_2-C-CH_3$<br>$CH_3$ | Smp. 76-81° |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 314 | H | H | Cl | H | H | H | $-CH_2-$ | $-COSC_3H_7$-n | Oel; $n_D^{22}$: 1,6136 |
| 315 | H | H | H | H | H | H | $-CH_2-$ | $-COO(CH_2)_9CH_3$ | Oel; $n_D^{22}$: 1,5308 |
| 316 | H | H | Cl | H | H | H | $-CH_2-$ | $-COO\overset{CH_3}{C}H(CH_2)_4CH_3$ | Smp. 65-67° |
| 317 | H | H | H | H | H | H | $-CH_2-$ | $-COO(CH_2)_2\overset{CH_3}{C}H-CH_3$ | Oel; $n_D^{23}$; 1,5568 |
| 318 | H | H | H | H | H | H | $-CH_2-$ | $-COO\overset{C_2H_5}{C}H(CH_2)_3CH_3$ | Oel; $n_D^{23}$: 1,5454 |
| 319 | H | H | Cl | H | H | H | $-CH_2-$ | $-COO(CH_2)_8CH_3$ | Smp. 78-79° |
| 320 | H | H | H | H | H | H | $-CH_2-$ | $-COSCH_2\overset{CH_3}{C}HCH_3$ | Oel; $n_D^{23}$: 1,6049 |
| 321 | H | H | Cl | H | H | H | $-CH_2-$ | $-COSC_2H_5$ | Smp. 55-57° |
| 322 | H | H | H | H | H | H | $-CH_2-$ | $-COO(CH_2)_8CH_3$ | Oel; $n_D^{24}$: 1,5436 |
| 323 | H | H | Cl | H | H | H | $-CH_2-$ | $-COOCH_2-\overset{C_2H_5}{C}H(CH_2)_3CH_3$ | Smp. 45-47° |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 324 | H | H | Cl | H | H | H | $-CH_2-$ | $-COSCH_2\overset{CH_3}{CH}-CH_3$ | Oel; $n_D^{23}$: 1,6045 |
| 325 | H | H | H | H | H | H | $-CH_2-$ | $-COS(CH_2)_9CH_3$ | Oel; $n_D^{23}$: 1,5630 |
| 326 | H | H | Cl | H | H | H | $-CH_2-$ | $-COO(CH_2)_2\overset{CH_3}{CH}-CH_3$ | Smp. 72-74° |
| 327 | H | H | Cl | H | H | H | $-CH_2-$ | $-COO\overset{C_2H_5}{CH}(CH_2)_3CH_3$ | Oel; $n_D^{22}$: 1,5542 |
| 328 | H | H | H | H | H | H | $-CH_2-$ | $-COO(CH_2)_5CH_3$ | Oel; $n_D^{22}$: 1,5512 |
| 329 | H | H | H | H | H | H | $-CH_2-$ | $-COO\overset{C_3H_7-n}{CH}(CH_2)_2CH_3$ | Smp. 48-50 |
| 330 | H | H | H | H | H | H | $-CH_2-$ | $-COS(CH_2)_4CH_3$ | Oel; $n_D^{22}$: 1,5937 |
| 331 | H | H | H | H | H | H | $-CH_2-$ | $COSC_3H_7-i$ | Oel; $n_D^{23}$: 1,5821 |
| 332 | H | H | H | H | H | H | $-CH_2-$ | $-COOCH_2\overset{C_2H_5}{CH}-(CH_2)_3CH_3$ | Oel; $n_D^{22}$: 1,5395 |
| 333 | H | H | Cl | H | H | H | $-CH_2-$ | $-COO\overset{C_3H_7-n}{CH}(CH_2)_2CH_3$ | Smp. 55-57° |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 334 | H | H | Cl | H | H | H | $-CH_2-$ | $-COS(CH_2)_5CH_3$ | Oel; $n_D^{22}$: 1,5882 |
| 335 | H | H | Cl | H | H | H | $-CH_2-$ | $-COS(CH_2)_4CH_3$ | Oel; $n_D^{23}$:1,5990 |
| 336 | H | H | Cl | H | H | H | $-CH_2-$ | $-COO(CH_2)_5CH_3$ | Smp. 71-72° |
| 337 | H | H | Cl | H | H | H | $-CH_2-$ | $-COSC_3H_7$-i | Smp. 62-64° |
| 338 | H | H | Cl | H | H | H | $-CH_2-$ | $C_2H_5$ $CH_3$<br>$-COOCH-CH_2CHC_2H_5$ | Smp. 25-29° |
| 339 | H | H | H | H | H | H | $-CH_2-$ | $C_3H_7$-i<br>$-COOCH-C_3H_7$-i | Oel; $n_D^{22}$: 1,5468 |
| 340 | H | H | H | H | H | H | $-CH_2-$ | $CH_3$<br>$-COOCH-(CH_2)_3CH_3$ | Oel; $n_D^{23}$: 1,5531 |
| 341 | H | H | Cl | H | H | H | $-CH_2-$ | $C_5H_{11}$-n<br>$-COOCH-CH=CH_2$ | Oel; $n_D^{23}$: 1,5579 |
| 342 | H | H | H | H | H | H | $-CH_2-$ | $C_2H_5$<br>$-COOCH-(CH_2)_2CH_3$ | Smp. 42-44° |
| 343 | H | H | H | H | H | H | $-CH_2-$ | $-COSC_3H_7$-n | Oel; $n_D^{22}$: 1,6108 |
| 344 | H | H | Cl | H | H | H | $-CH_2-$ | $CH_3$<br>$-COOCH-(CH_2)_3CH_3$ | Smp. 68-71° |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 345 | H | H | H | H | H | H | $-CH_2-$ | $C_2H_5$ $CH_3$<br>$-COOCHCH_2CHC_2H_5$ | Oel; $n_D^{23}$:1,5472 |
| 346 | H | H | Cl | H | H | H | $-CH_2-$ | $C_3H_7$-i<br>$-COOCH-C_3H_7$-i | Smp. 88-89° |
| 347 | H | H | H | H | H | H | $-CH_2-$ | $-COS(CH_2)_5CH_3$ | Oel; $n_D^{22}$: 1,5804 |
| 348 | H | H | H | H | H | H | $-CH_2-$ | $-COO(CH_2)_9-CH=CH_2$ | Oel; $n_D^{22}$:1,5386 |
| 349 | H | H | H | H | H | H | $-CH_2-$ | $C_3H_7$-n<br>$-COOCH-C\equiv CH$ | Oel; $n_D^{22}$: 1,5659 |
| 350 | H | H | Cl | H | H | H | $-CH_2-$ | $CH_3$<br>$-COOCH-C\equiv CH$ | Smp. 97-100° |

Tabelle 1 (Fortsetzung)

| Nr. | $R_1$ | $R_2$ | $R_3$ | $R_4$ | $R_5$ | $R_6$ | A | Z | physikal. Konstante |
|---|---|---|---|---|---|---|---|---|---|
| 351 | H | H | H | H | H | H | $-CH_2-$ | 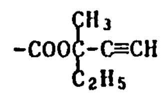 | Oel; $n_D^{22}$: 1,5688 |
| 352 | H | H | Cl | H | H | H | $-CH_2-$ | $-COO(CH_2)_9-CH=CH_2$ | Smp. 66-67° |
| 353 | H | H | Cl | H | H | H | $-CH_2-$ | 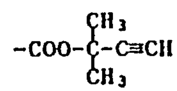 | Smp. 76-81° |
| 354 | H | H | H | H | H | H | $-CH_2-$ | 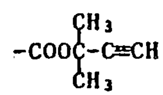 | Oel; $n_D^{23}$: 1,5740 |
| 355 | H | H | Cl | H | H | H | $-CH_2-$ | 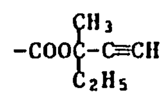 | Smp. 78-79° |
| 356 | H | H | Cl | H | H | H | $-CH_2-$ | 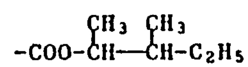 | Smp. 71-73° |

Die Verbindungen der Formel I lassen sich nach bekannten Methoden herstellen, wie sie beispielsweise in den europäischen Patentpublikationen 86 750 und 94 349 beschrieben sind, oder sind analog bekannten Methoden herstellbar.

Die Chinolinderivate der Formel I besitzen in hervorragendem Masse die Eigenschaften, Kulturpflanzen gegen schädigende Wirkungen von herbizid wirksamen Derivaten von (4,5-Dihydro-4-oxo-1H-imidazol-2-yl)-benzoesäure, -nicotinsäure und -chinolincarbonsäure zu schützen. Die vorgenannten herbiziden Derivate entsprechen der Formel II

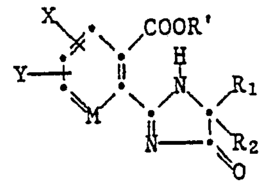

(II)

worin R′ Wasserstoff, $C_1$-$C_4$-Alkyl, das Ammoniumkation oder ein organisches Ammoniumkation, $R_1'$ $C_1$-$C_4$-Alkyl, $R_2'$ $C_1$-$C_4$-Alkyl oder $C_3$-$C_6$-Cycloalkyl oder $R_1'$ und $R_2$, gemeinsam $C_4$- oder $C_5$-Alkylen, M das Strukturelement =CH— oder =N—, X und Y unabhängig voneinander Wasserstoff, $C_1$-$C_4$-Alkyl oder Halogen oder zusätzlich, wenn M für =N— steht und X und Y in der α- bzw. β-Stellung hierzu stehen, X und Y gemeinsam das Strukturelement —$C(X_1)$=$C(X_2)$—$C(X_3)$=$C(X_4)$—, worin $X_1$, $X_2$, $X_3$ und $X_4$ für Wasserstoff oder ein oder zwei der Substituenten $X_1$, $X_2$, $X_3$ und $X_4$ für $C_1$-$C_4$-Alkyl oder Halogen und die anderen für Wasserstoff stehen, bedeuten.

In den Verbindungen der Formel II sind unter $C_1$-$C_4$-Alkyl Methyl, Ethyl, n-Propyl, Isopropyl, n-Butyl, sek.-Butyl, tert.-Butyl und Isobutyl zu verstehen.

Unter einem organischen Ammoniumkation ist ein Ammoniumkation zu verstehen, in welchem ein bis vier Wasserstoffatome durch einen organischen Rest ersetzt sind. Als organische Reste kommen vorzugsweise aliphatische Reste in Betracht, insbesondere solche mit 1 bis 20 Kohlenstoffatomen. Beispiele für solche organischen Ammoniumkationen sind: Monoalkylammonium, Dialkylammonium, Trialkylammonium, Tetraalkylammonium, Monoalkenylammonium, Dialkenylammonium, Trialkenylammonium, Monoalkinylammonium, Dialkinylammonium, Trialkinylammonium, Monoalkanolammonium, Dialkanolammonium, Trialkanolammonium, $C_3$-$C_6$-Cycloalkylammonium, Piperidinium, Morpholinium, Pyrrolidinium, Benzylammonium und Aequivalente davon.

In den Verbindungen der Formel II steht Halogen für Fluor, Chlor, Brom und Jod, vorzugsweise für Chlor und Brom.

Herbizid wirksame Verbindungen der Formel II sind beispielsweise im amerikanischen Patent 4.188.487 und in EP 41.623 beschrieben.

Besonders bemerkenswert ist die Schutzwirkung von Chinolinderivaten der Formel I gegenüber solchen Herbiziden der Formel II, in denen R′ Wasserstoff, Methyl, das Ammoniumkation oder ein organisches Ammoniumkation, $R_1'$ Methyl und $R_2'$ Isopropyl bedeuten und M, X und Y die für Formel II angegebenen Bedeutungen haben, und vor allem gegenüber denjenigen Herbiziden der Formel II, in denen R′ für Methyl, $R_1'$ für Methyl, $R_2'$ für Isopropyl, X für Wasserstoff und Y für 4- oder 5-Methyl stehen und M für das Strukturelement =CH— steht, sowie gegenüber 2-[4,5-Dihydro-5-methyl-5-(1-methylethyl)-4-oxo-1H-imidazol-2-yl]-nicotinsäure und ganz besonders gegenüber 2-[4,5-Dihydro-5-methyl-5-(1-methylethyl)-4-oxo-1-imidazol-2-yl]-3-chinolincarbonsäure.

Als Kulturpflanzen, welche durch Chinolinderivate der Formel I gegen schädigende Wirkungen von Herbiziden der Formel II geschützt werden können, kommen insbesondere diejenigen in Betracht, die auf dem Nahrungs- oder Textilsektor von Bedeutung sind, beispielsweise Baumwolle, Zuckerrüben, Zuckerrohr und insbesondere Kulturhirse, Mais, Reis und andere Getreidearten (Weizen, Roggen, Gerste, Hafer).

Ein geeignetes Verfahren zum Schützen von Kulturpflanzen unter Verwendung von Verbindungen der Formel I besteht darin, dass man Kulturpflanzen, Teile dieser Pflanzen oder für den Anbau der Kulturpflanzen bestimmte Böden vor oder nach dem Einbringen des pflanzlichen Materials in den Boden mit einer Verbindung der Formel I oder einem Mittel, welches eine solche Verbindung enthält, behandelt. Die Behandlung kann vor, gleichzeitig mit oder nach dem Einsatz des Herbizids der Formel II erfolgen. Als Pflanzenteile kommen insbesondere diejenigen in Betracht, die zur Neubildung einer Pflanze befähigt sind, wie beispielsweise Samen, Früchte, Stengelteile und Zweige (Stecklinge) sowie auch Wurzeln, Knollen und Rhizome.

Die Erfindung betrifft auch ein Verfahren zur selektiven Bekämpfung von Unkräutern in Kulturpflanzenbeständen, wobei die Kulturpflanzenbestände, Teile der Kulturpflanzen oder Anbauflächen für Kulturpflanzen mit einem Herbizid der Formel II und einer Verbindung der Formel I oder einem Mittel, welches eine Kombination aus einem solchen Herbizid und einer Verbindung der Formel I enthält, behandelt.

Bei den zu bekämpfenden Unkräutern kann es sich sowohl um monokotyle wie um dikotyle Unkräuter handeln.

Als Kulturpflanzen oder Teile dieser Pflanzen kommen beispielsweise die vorstehend genannten in

Betracht. Als Anbauflächen gelten die bereits mit den Kulturpflanzen bewachsenen oder mit dem Saatgut dieser Kulturpflanzen beschickten Bodenareale, wie auch die zur Behauung mit diesen Kulturpflanzen bestimmten Böden.

Die zu applizierende Aufwandmenge Antidot im Verhältnis zum Herbizid richtet sich weitgehend nach der Anwendungsart. Bei einer Feldbehandlung, welche entweder unter Verwendung einer Tankmischung mit einer Kombination von Antidot und Herbizid oder durch getrennte Applikation von Antidot und Herbizid erfolgt, liegt in der Regel ein Verhältnis von Antidot zu Herbizid von 1 : 100 bis 10 : 1, bevorzugt 1 : 5 bis 8 : 1, und insbesondere 1 : 1, vor. Dagegen werden bei der Samenbeizung weit geringere Mengen Antidot im Verhältnis zur Aufwandmenge an Herbizid pro Hektar Anbaufläche benötigt.

In der Regel werden bei der Feldbehandlung 0,1 bis 10 kg Antidot/ha, vorzugsweise 0,5 bis 2 kg Antidot/ha, appliziert.

Bei der Samenbeizung werden im allgemeinen 0,01 bis 10 g Antidot/kg Samen, vorzugsweise 0,05 bis 1 g Antidot/kg Samen, appliziert. Wird das Antidot in flüssiger Form kurz vor der Aussaat unter Samenquellung appliziert, so werden zweckmässigerweise Antidot-Lösungen verwendet, welche den Wirkstoff in einer Konzentration von 1 bis 10 000, vorzugsweise von 100 bis 1 000 ppm, enthalten.

Zur Applikation werden die Verbindungen der Formel I oder Kombinationen von Verbindungen der Formel I mit den zu antagonisierenden Herbiziden zweckmässigerweise zusammen mit den in der Formulierungstechnik üblichen Hilfsmitteln eingesetzt und werden daher z. B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen, in bekannter Weise verarbeitet. Die Anwendungsverfahren wie Versprühen, Vernebeln, Verstäuben, Verstreuen, Bestreichen oder Giessen werden gleich wie die Art der zu verwendenden Mittel den angestrebten Zielen und den gegebenen Verhältnissen entsprechend gewählt.

Die Formulierungen, d. h. die den Wirkstoff der Formel I oder eine Kombination von Wirkstoff der Formel I mit zu antagonisierendem Herbizid und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder -ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art des zu formulierenden Wirkstoffs der Formel I und gegebenenfalls auch dem zu antagonisierenden Herbizid nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Talgöl gewonnen werden können, genannt. Ferner sind auch die Fettsäure-methyltaurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxyd-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z. B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen enthaltenden Polyethylenoxidaddukte an Polypropylenglykol, Ethylendiaminopolypropylenglykol und Alkylpolypropylenglycol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z. B. das Stearyltrimethylammoniumchlorid oder das Benzyldi(2-chlorethyl)-ethylammoniumbromid.

Die in der Formulierungstechnik gebräuchlichen Tenside sind u. a. in folgenden Publikationen beschrieben :

« Mc Cutcheon's Detergents and Emulsifiers Annual »
MC Publishing Corp., Ridgewood New Jersey, 1981
Stache, H-, « Tensid-Taschenbuch »,
Carl Hanser Verlage, München/Wien, 1981

Die agrochemischen Zubereitungen enthalten in der Regel 0,1 bis 99 Gewichtsprozent, insbesondere 0,1 bis 95 Gew.-%, Wirkstoff der Formel I oder Wirkstoffgemisch Antidot/Herbizid, 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Für die Verwendung von Verbindungen der Formel I oder sie enthaltender Mittel zum Schützen von Kulturpflanzen gegen schädigende Wirkungen von Herbiziden der Formel II kommen verschiedene Methoden und Techniken in Betracht, wie beispielsweise die folgenden :

i) Samenbeizung

a) Beizung der Samen mit einem als Spritzpulver formulierten Wirkstoff der Formel I durch Schütteln in einem Gefäss bis zur gleichmässigen Verteilung auf der Samenoberfläche (Trockenbeizung). Man verwendet dabei etwa 1 bis 500 g Wirkstoff der Formel I (4 g bis 2 kg Spritzpulver) pro 100 kg Saatgut.

b) Beizung der Samen mit einem Emulsionskonzentrat des Wirkstoffs der Formel I nach der Methode a) (Nassbeizung).

c) Beizung durch Tauchen des Saatguts in eine Brühe mit 50-3200 ppm Wirkstoff der Formel I während 1 bis 72 Stunden und gegebenenfalls nachfolgendes Trocknen der Samen (Tauchbeizung).

Die Beizung des Saatguts oder die Behandlung des angekeimten Sämlings sind naturgemäss die bevorzugten Methoden der Applikation, weil die Wirkstoffbehandlung vollständig auf die Zielkultur gerichtet ist. Man verwendet in der Regel 1 bis 500 g Antidot, vorzugsweise 5 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

ii) Applikation aus Tankmischung

Eine flüssige Aufarbeitung eines Gemisches von Antidot und Herbizid (gegenseitiges Mengenverhältnis zwischen 10 : 1 und 1 : 10) wird verwendet, wobei die Aufwandmenge an Herbizid 0,1 bis 10 kg pro Hektar beträgt. Solche Tankmischung wird vorzugsweise vor oder unmittelbar nach der Aussaat appliziert und 5 bis 10 cm tief in den noch nicht gesäten Boden eingearbeitet.

iii) Applikation in der Saatfurche

Das Antidot wird als Emulsionskonzentrat, Spritzpulver oder als Granulat in die offene besäte

Saatfurche eingebracht und hierauf wird nach dem Decken der Saatfurche in normaler Weise das Herbizid im Vorauflaufverfahren appliziert.

iv) Kontrollierte Wirkstoffabgabe

Der Wirkstoff der Formel I wird in Lösung auf mineralische Granulatträger oder polymerisierte Granulate (Harnstoff/Formaldehyd) aufgezogen und trocknen gelassen. Gegebenenfalls kann ein Ueberzug aufgebracht werden (Umhüllungsgranulate), der es erlaubt, den Wirkstoff über einen bestimmten Zeitraum dosiert abzugeben.

Formulierungsbeispiel für flüssige Wirkstoffe der Formel I (% = Gewichtsprozent)

| 1. Emulsions-Konzentrate | a) | b) | c) |
|---|---|---|---|
| Wirkstoff aus Tabelle 1 | 25 % | 40 % | 50 % |
| Ca-Dodecylbenzolsulfonat | 5 % | 8 % | 6 % |
| Ricinusöl-polyethylenglykolether (36 Mol AeO) | 5 % | - | - |
| Tributylphenol-polyethylenglykolether (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff aus Tabelle 1 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160-190°) | - | - | 94 % | - |

Die Lösungen sind zur Anwendung in Form kleinster Tropfen geeignet.

| 3. Granulate | a) | b) |
|---|---|---|
| Wirkstoff aus Tabelle 1 | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff aus Tabelle 1 | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

Formulierungsbeispiele für feste Wirkstoffe der Formel I (% = Gewichtsprozent)

| 5. Spritzpulver | a) | b) | c) |
|---|---|---|---|
| Wirkstoff aus Tabelle 1 | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mol AeO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 6. Emulsions-Konzentrate | |
|---|---|
| Wirkstoff aus Tabelle 1 | 10 % |
| Octylphenolpolyethylenglykolether (4-5 Mol AeO) | 3 % |
| Ca-Dodecylbenzolsulfonat | 3 % |
| Ricinusölpolyglykolether (35 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoff aus Tabelle 1 | 5 % | 8 % |
| Talkum | 95 % | - |
| Kaolin | - | 92 % |

Man erhält anwendungsfertige Stäubemittel, indem der Wirkstoff mit den Trägerstoffen vermischt und auf einer geeigneten Mühle vermahlen wird.

| 8. Extruder-Granulate | |
|---|---|
| Wirkstoff aus Tabelle 1 | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

| 9. Umhüllungs-Granulate | |
|---|---|
| Wirkstoff aus Tabelle 1 | 3 % |
| Polyethylenglykol (MG 200) | 3 % |
| Kaolin | 94 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| 10. Suspensions-Konzentrate | |
|---|---|
| Wirkstoff aus Tabelle 1 | 40 % |
| Ethylenglykol | 10 % |
| Nonylphenolpolyethylenglykolether (15 Mol AeO) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Formulierungsbeispiele für Wirkstoffgemische (flüssig) (% = Gewichtsprozent)

| 11. Emulsions-Konzentrate | a) | b) | c) |
|---|---|---|---|
| Wirkstoffgemisch:Antidot aus Tabelle 1 und ein Herbizid der Formel II im Verhältnis 1:1 | 25 % | 40 % | 50 % |
| Ca-Dodecylbenzolsulfonat | 5 % | 8 % | 6 % |
| Ricinusöl-polyethylenglykolether (36 Mol AeO) | 5 % | - | - |
| Tributylphenol-polyethylenglykolether (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 12. Emulsions-Konzentrate | a) | b) | c) |
|---|---|---|---|
| Wirkstoffgemisch: Antidot aus Tabelle 1 und ein Herbizid der Formel II im Verhältnis 1:3 | 25 % | 40 % | 50 % |
| Ca-Dodecylbenzolsulfonat | 5 % | 8 % | 6 % |
| Ricinusöl-polyethylenglykolether (36 Mol AeO) | 5 % | - | - |
| Tributylphenol-polyethylenglykolether (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 13. Emulsions-Konzentrate | a) | b) | c) |
|---|---|---|---|
| Wirkstoffgemisch: Antidot aus Tabelle 1 und ein Herbizid der Formel II im Verhältnis 2:1 | 25 % | 40 % | 50 % |
| Ca-Dodecylbenzolsulfonat | 5 % | 8 % | 6 % |
| Ricinusöl-polyethylenglykolether (36 Mol AeO) | 5 % | - | - |
| Tributylphenol-polyethylenglykolether (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 14. Emulsions-Konzentrate | a) | b) | c) |
|---|---|---|---|
| Wirkstoffgemisch: Antidot aus Tabelle 1 und 2-[4,5-Dihydro-5-methyl-5-(1-methylethyl)-4-oxo-1H-imidazol-2-yl]-3-chinolincarbonsäure im Verhältnis 1:1 | 25 % | 40 % | 50 % |
| Ca-Dodecylbenzolsulfonat | 5 % | 8 % | 6 % |
| Ricinusöl-polyethylenglykolether (36 Mol AeO) | 5 % | - | - |
| Tributylphenol-polyethylenglykolether (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 15. Emulsions-Konzentrat | a) | b) | c) |
|---|---|---|---|
| Wirkstoffgemisch: Antidot aus Tabelle 1 und 2-[4,5-Dihydro-5-methyl-5-(1-methylethyl)-4-oxo-1H-imidazol-2-yl]-3-chinolincarbonsäure im Verhältnis 1:3 | 25 % | 40 % | 50 % |
| Ca-Dodecylbenzolsulfonat | 5 % | 8 % | 6 % |
| Ricinusöl-polyethylenglykolether (36 Mol AeO) | 5 % | - | - |
| Tributylphenol-polyethylenglykolether (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 16. Lösungen | a) | b) | c) | d) |
|---|---|---|---|---|
| Wirkstoffgemisch: Antidot aus Tabelle 1 und ein Herbizid der Formel II im Verhältnis 1:4 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| 17. Lösungen | a) | b) | c) | d) |
|---|---|---|---|---|
| Wirkstoffgemisch: Antidot aus Tabelle 1 und ein Herbizid der Formel II im Verhältnis 5:2 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| 18. Lösungen | a) | b) | c) | d) |
|---|---|---|---|---|
| Wirkstoffgemisch: Antidot aus Tabelle 1 und ein Herbizid der Formel II im Verhältnis 1:1 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| 19. Lösungen | a) | b) | c) | d) |
|---|---|---|---|---|
| Wirkstoffgemisch: Antidot aus Tabelle 1 und 2-[4,5-Dihydro-5-methyl-5-(1-methylethyl)-4-oxo-1H-imidazol-2-yl]-3-chinolincarbonsäure im Verhältnis 1:1 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| 20. Lösungen | a) | b) | c) | d) |
|---|---|---|---|---|
| Wirkstoffgemisch: Antidot aus Tablle 1 und 2-[4,5-Dihydro-5-methyl-5-(1-methylethyl)-4-oxo-1H-imidazol-2-yl]-3-chinolincarbonsäure im Verhältnis 1:4 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| 21. Granulate | a) | b) |
|---|---|---|
| Wirkstoffgemisch: Antidot aus Tabelle 1 und ein Herbizid der Formel II im Verhältnis 1:1 | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 22. Granulate | a) | b) |
|---|---|---|
| Wirkstoffgemisch: Antidot aus Tabelle 1 und 2-[4,5-Dihydro-5-methyl-5-(1-methylethyl)-4-oxo-1H-imidazol-2-yl]-3-chinolincarbonsäure im Verhältnis 1:1 | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 23. Stäubemittel | a) | b) |
|---|---|---|
| Wirkstoffgemisch: Antidot aus Tabelle 1 und ein Herbizid der Formel II im Verhältnis 1:1 | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

Formulierungsbeispiele für Wirkstoffgemische (fest) (% = Gewichtsprozent)

| 24. Spritzpulver | a) | b) | c) |
|---|---|---|---|
| Wirkstoffgemisch: Antidot aus Tabelle 1 und ein Herbizid der Formel II im Verhältnis 1:1 | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mol AeO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 25. Spritzpulver | a) | b) | c) |
|---|---|---|---|
| Wirkstoffgemisch: Antidot aus Tabelle 1 und ein Herbizid der Formel II im Verhältnis 1:4 | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mol AeO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 26. Spritzpulver | a) | b) | c) |
|---|---|---|---|
| Wirkstoffgemisch: Antidot aus Tabelle 1 und ein Herbizid der Formel II im Verhältnis 3:1 | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mol AeO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 27. Emulsions-Konzentrate | |
|---|---|
| Wirkstoffgemisch : Antidot aus Tabelle 1 und ein Herbizid der Formel II im Verhältnis 1 : 1 | 10 % |
| Octylphenolpolyethylenglykolether (4-5 Mol AeO) | 3 % |
| Ca-Dodecylbenzolsulfonat | 3 % |
| Ricinusölpolyglykolether (35 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 28. Emulsions-Konzentrate | |
|---|---|
| Wirkstoffgemisch : Antidot aus Tabelle 1 und ein Herbizid der Formel II im Verhältnis 5 : 2 | 10 % |
| Octylphenolpolyethylenglykolether (4-5 Mol AeO) | 3 % |
| Ca-Dodecylbenzolsulfonat | 3 % |
| Ricinusölpolyglykolether (35 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

29. Emulsions-Konzentrate

| | |
|---|---|
| Wirkstoffgemisch : Antidot aus Tabelle 1 und ein Herbizid der Formel II im Verhältnis 1 : 4 | 10 % |
| Octylphenolpolyethylenglykolether (4-5 Mol AeO) | 3 % |
| Ca-Dodecylbenzolsulfonat | 3 % |
| Ricinusölpolyglykolether (35 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 30. Stäubemittel | a) | b) |
|---|---|---|
| Wirkstoffgemisch: Antidot aus Tabelle 1 und ein Herbizid der Formel II im Verhältnis 1:1 | 5 % | 8 % |
| Talkum | 95 % | - |
| Kaolin | - | 92 % |

Man erhält anwendungsfertige Stäubemittel, indem der Wirkstoff mit den Trägerstoffen vermischt und auf einer geeigneten Mühle vermahlen wird.

31. Extruder-Granulate

| | |
|---|---|
| Wirkstoffgemisch : Antidot aus Tabelle 1 und ein Herbizid der Formel II im Verhältnis 1 :1 | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

32. Umhüllungs-Granulate

| | |
|---|---|
| Wirkstoffgemisch : Antidot aus Tabelle 1 und ein Herbizid der Formel II im Verhältnis 1 : 1 | 3 % |
| Polyethylenglykol (MG 200) | 3 % |
| Kaolin | 94 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

33. Suspensions-Konzentrate

| | |
|---|---|
| Wirkstoffgemisch : Antidot aus Tabelle 1 und ein Herbizid der Formel II im Verhältnis 1 : 1 | 40 % |
| Ethylenglykol | 10 % |
| Nonylphenolpolyethylenglykolether (15 Mol AeO) | 6 % |
| Na-Ligninsulfonat | 10 % |
| Carboxymethylcellulose | 1 % |
| 37 %ige wässrige Formaldehyd-Lösung | 0,2 % |
| Silikonöl in Form einer 75 %igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

34. Suspensions-Konzentrate

| | |
|---|---|
| Wirkstoffgemisch : Antidot aus Tabelle 1 und ein Herbizid der Formel II im Verhältnis 1 : 4 | 40 % |
| Ethylenglykol | 10 % |
| Nonylphenolpolyethylenglykolether (15 Mol AeO) | 6 % |
| Na-Ligninsulfonat | 10 % |
| Carboxymethylcellulose | 1 % |
| 37 %ige wässrige Formaldehyd-Lösung | 0,2 % |
| Silikonöl in Form einer 75 %igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

35. Suspensions-Konzentrate

| | |
|---|---|
| Wirkstoffgemisch : Antidot aus Tabelle 1 und ein Herbizid der Formel II in Verhältnis 3 : 1 | 40 % |
| Ethylenglykol | 10 % |
| Nonylphenolpolyethylenglykolether (15 Mol AeO) | 6 % |
| Na-Ligninsulfonat | 10 % |
| Carboxymethylcellulose | 1 % |
| 37 %ige wässrige Formaldehyd-Lösung | 0,2 % |
| Silikonöl in Form einer 75 %igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Biologische Beispiele

### Beispiel 36 : Saatbeizung Weizen, Herbizid im Vorauflaufverfahren.

Weizensamen der Sorte « Besso » werden mit dem zu prüfenden Antidot O-Methoxycarbonyl-2-(8-chinolinoxy)-acetamidoxim (Nr. 11) in einen Glasbehälter gegeben und durch Schütteln und Rotation gut durchgemischt. Plastiktöpfe (oberer Durchmesser 11 cm) werden mit 0,5 l sandiger Lehmerde gefüllt und die gebeizten Samen eingesät. Nach dem Bedecken des Samens mit Erde wird das Herbizid 2-[4,5-Dihydro-5-methyl-5-(1-methylethyl)-4-oxo-1H-imidazol-2-yl]-3-chinolincarbonsäure auf die Bodenoberfläche gesprüht. 21 Tage nach der Herbizid-applikation wird die Schutzwirkung des Antidots in Prozent bonitiert. Als Referenz dienen dabei die mit Herbizid allein behandelten Pflanzen sowie die vollständig unbehandelte Kontrolle. Die Ergebnisse zeigt die nachfolgende Tabelle :

Tabelle 2

| Antidot g AS/kg Samen | Herbizid kg AS/ha | Relative Schutzwirkung in % |
|---|---|---|
| 0,2 | 4 | 0 |
| 0,1 | 4 | 62,5 |
| 0,05 | 4 | 75 |
| 0,025 | 4 | 62,5 |
| 0,0125 | 4 | 0 |
| 0,2 | 2 | 12,5 |
| 0,1 | 2 | 37,5 |
| 0,05 | 2 | 75 |
| 0,025 | 2 | 62,5 |
| 0,0125 | 2 | 12,5 |
| 0,2 | 1 | 12,5 |
| 0,1 | 1 | 37,5 |
| 0,05 | 1 | 62,5 |
| 0,025 | 1 | 62,5 |
| 0,0125 | 1 | 25 |

### Beispiel 37 : Saatbeizung Gerste, Herbizid im Vorsaatverfahren.

Gerstensamen werden mit der als Antidote zu prüfenden Substanz 5-Chlor-8-(cyanomethoxy)-chinolin (Nr. 7) oder O-Methoxycarbonyl-2-(8-chinolinoxy)-acetamidoxim (Nr. 11) in einen Glasbehälter gegeben und durch Schütteln und Rotation gut durchgemischt. Plastikbehälter (Länge × Breite × Höhe

= 25 × 17 × 12 cm) werden mit sandiger Lehmerde gefüllt. Anschliessend wird das Herbizid 2-[4,5-Dihydro-5-methyl-5-(1-methylethyl)-4-oxo-1H-imidazol-2-yl]-3-chinolincarbonsäure auf die Erdoberfläche gesprüht und dann in die Erde eingemischt. In die so vorbehandelte Erde werden die gebeizten Samen eingesät. 21 Tage nach der Herbizidapplikation wird die Schutzwirkung des Antidots in Prozent bonitiert. Als Referenz dienen dabei die mit Herbizid allein behandelten Pflanzen sowie die vollständig unbehandelte Kontrolle. Die Ergebnisse sind in der nachfolgenden Tabelle wiedergegeben :

Tabelle 3

| Antidot Verbindung Nr. | Antidot g AS/kg Samen | Herbizid kg AS/ha | Relative Schutzwirkung in % |
|---|---|---|---|
| 7 | 0,1<br>0,05<br>0,025 | 2<br>2<br>2 | 12,5<br>0<br>0 |
| 7 | 0,1<br>0,05<br>0,025 | 1<br>1<br>1 | 25<br>12,5<br>0 |
| 7 | 0,1<br>0,05<br>0,025 | 0,5<br>0,5<br>0,5 | 50<br>25<br>0 |
| 7 | 0,1<br>0,05<br>0,025 | 0,25<br>0,25<br>0,25 | 50<br>37,5<br>12,5 |
| 11 | 0,1<br>0,05<br>0,025 | 2<br>2<br>2 | 62,5<br>62,5<br>37,5 |
| 11 | 0,1<br>0,05<br>0,025 | 1<br>1<br>1 | 62,5<br>62,5<br>37,5 |
| 11 | 0,1<br>0,05<br>0,025 | 0,5<br>0,5<br>0,5 | 62,5<br>62,5<br>37,5 |
| 11 | 0,1<br>0,05<br>0,025 | 0,25<br>0,25<br>0,25 | 50<br>50<br>37,5 |

Beispiel 38 : Saatbeizung Weizen, Herbizid im Vorsaatverfahren.

Weizensamen werden mit der als Antidot zu prüfenden Substanz 5-Chlor-8-(cyanomethoxy)-chinolin (Nr. 7) oder O-Methoxycarbonyl-2-(8-chinolinoxy)-acetamidoxim (Nr. 11) in einen Glasbehälter gegeben und durch Schütteln und Rotation gut durchgemischt. Plastikbehälter (Länge × Breite × Höhe = 25 × 17 × 12 cm) werden mit sandiger Lehmerde gefüllt. Anschliessend wird das Herbizid 2-[4,5-Dihydro-5-methyl-5-(1-methylethyl)-4-oxo-1H-imidazol-2-yl]-3-chinolincarbonsäure auf die Oberfläche gesprüht und dann in die Erde eingemischt. In die so vorbehandelte Erde werden die gebeizten Samen eingesät. 21 Tage nach der Herbizidapplikation wird die Schutzwirkung des Antidots in Prozent bonitiert. Als Referenz dienen dabei die mit Herbizid allein behandelten Pflanzen sowie die vollständig unbehandelte Kontrolle. Die Ergebnisse sind in der nachfolgenden Tabelle wiedergegeben :

(Siehe Tabelle 4 Seite 60 f.)

Tabelle 4

| Antidot Verbindung Nr. | Antidot g AS/kg Samen | Herbizid kg AS/ha | Relative Schutzwirkung in % |
|---|---|---|---|
| 7 | 0,1<br>0,05<br>0,025 | 2<br>2<br>2 | 50<br>12,5<br>0 |
| 7 | 0,1<br>0,05<br>0,025 | 1<br>1<br>1 | 50<br>25<br>0 |
| 7 | 0,1<br>0,05<br>0,025 | 0,5<br>0,5<br>0,5 | 62,5<br>25<br>0 |
| 7 | 0,1<br>0,05<br>0,025 | 0,25<br>0,25<br>0,25 | 62,5<br>25<br>0 |
| 11 | 0,1<br>0,05<br>0,025 | 2<br>2<br>2 | 50<br>25<br>0 |
| 11 | 0,1<br>0,05<br>0,025 | 1<br>1<br>1 | 62,5<br>37,5<br>12,5 |
| 11 | 0,1<br>0,05<br>0,025 | 0,5<br>0,5<br>0,5 | 75<br>37,5<br>12,5 |
| 11 | 0,1<br>0,05<br>0,025 | 0,25<br>0,25<br>0,25 | 75<br>37,5<br>12,5 |

Beispiel 39 : Tankmischung im Vorauflaufverfahren in Weizen.

Weizensamen der Sorte « Besso » werden in Plastiktöpfe (oberer Durchmesser 11 cm), die 0,5 l sandige Lehmerde enthalten, im Gewächshaus ausgesät. Nach dem Bedecken der Samen mit Erde wird die als Antidot zu prüfende Substanz O-Methoxycarbonyl-2-(8-chinolinoxy)-acetamidoxim (Nr. 11), 2-(5-Chlor-8-chinolinoxy)-essigsäure-n-butylester (Nr. 125) oder 2-(5-Chlor-8-chinolinoxy)-essigsäure-methylallylester (Nr. 186) zusammen mit dem Herbizid 2-[4,5-Dihydro-5-methyl-5-(1-methylethyl)-4-oxo-1H-imidazol-2-yl]-3-chinolincarbonsäure als Tankmischung im Verhältnis 1 : 1 im Vorauflaufverfahren appliziert. 10 Tage nach der Applikation wird die Schutzwirkung des Antidots in Prozent bonitiert. Als Referenzen dienen dabei die mit dem Herbizid allein behandelten Pflanzen sowie die vollständig unbehandelte Kontrolle. Die Ergebnisse zeigt die nachfolgende Tabelle :

Tabelle 5

| Antidot Verbindung Nr. | Antidot g AS/kg Samen | Herbizid kg AS/ha | Relative Schutzwirkung in % |
|---|---|---|---|
| 11 | 0,1<br>0,05<br>0,025 | 0,1<br>0,05<br>0,025 | 37,5<br>37,5<br>12,5 |
| 125 | 0,1<br>0,05<br>0,025 | 0,1<br>0,05<br>0,025 | 12,5<br>25<br>12,5 |
| 186 | 0,1<br>0,05<br>0,025 | 0,1<br>0,05<br>0,025 | 12,5<br>25<br>0 |

Beispiel 40 : Tankmischung im Nachauflaufverfahren in Weizen.

Weizensamen der Sorte « Besso » werden in Plastiktöpfe (oberer Durchmesser 11 cm), die 0,5 l sandige Lehmerde enthalten, im Gewächshaus ausgesät. Nach dem Bedecken der Samen mit Erde wird die als Antidot zu prüfende Substanz O-Methoxycarbonyl-2-(8-chinolinoxy)-acetamidoxim (Nr. 11), 2-(5-Chlor-8-chinolinoxy)-essigsäure-n-butylester (Nr. 125) oder 2-(5-Chlor-8-chinolinoxy)-essigsäure-methylallylester (Nr. 186) zusammen mit dem Herbizid 2-[4,5-Dihydro-5-methyl-5-(1-methylethyl)-4-oxo-1H-imidazol-2-yl]-3-chinolincarbonsäure als Tankmischung im Verhältnis 1 : 1 im Nachauflaufverfahren appliziert. 10 Tage nach der Applikation wird die Schutzwirkung des Antidots in Prozent bonitiert. Als Referenzen dienen dabei die mit dem Herbizid allein behandelten Pflanzen sowie die vollständig unbehandelte Kontrolle. Die Ergebnisse zeigt die nachfolgende Tabelle :

Tabelle 6

| Antidot Verbindung Nr. | Antidot g AS/kg Samen | Herbizid kg AS/ha | Relative Schutzwirkung in % |
|---|---|---|---|
| 11 | 0,1 | 0,1 | 12,5 |
| | 0,05 | 0,05 | 25 |
| | 0,025 | 0,025 | 0 |
| 125 | 0,1 | 0,1 | 62,5 |
| | 0,05 | 0,05 | 37,5 |
| | 0,025 | 0,025 | 12,5 |
| 186 | 0,1 | 0,1 | 62,5 |
| | 0,05 | 0,05 | 37,5 |
| | 0,025 | 0,025 | 0 |

Beispiel 41 : Saatbeizung Mais, Herbizid im Vorauflaufverfahren.

Maissamen der Sorte « LG 5 » werden mit der als Antidot zu prüfenden Substanz 2-(5-chlor-8-chinolinoxy)-essigsäure-n-butylester (Nr. 125) in einen Glasbehälter gegeben und durch Schütteln und Rotation gut durchgemischt. Plastiktöpfe (oberer Durchmesser 11 cm) werden mit Erde gefüllt und die gebeizten Samen werden eingesät. Nach dem Bedecken der Samen mit Erde wird das Herbizid 2-[4,5-Dihydro-5-methyl-5-(1-methylethyl)-4-oxo-1H-imidazol-2-yl]-3-chinolincarbonsäure im Vorauflaufverfahren appliziert. 20 Tage nach der Herbizid-applikation wird die Schutzwirkung des Safeners in Prozent bonitiert. Als Referenz dienen die mit dem Herbizid allein behandelten Pflanzen sowie die vollständig unbehandelte Kontrolle. Die Ergebnisse sind in der nachfolgenden Tabelle dargestellt :

Tabelle 7

| Antidot g AS/kg Samen | Herbizid kg AS/ha | Relative Schutzwirkung in % |
|---|---|---|
| 2 | 0,05 | 12,5 |
| 1 | 0,05 | 25 |
| 0,5 | 0,05 | 12,5 |
| 2 | 0,025 | 12,5 |
| 1 | 0,025 | 12,5 |
| 0,5 | 0,025 | 0 |

## Patentansprüche

1. Die Verwendung von Verbindungen der Formel I

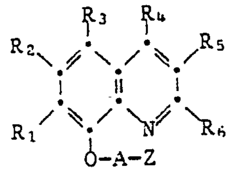

(I)

in welcher $R_1$, $R_2$ und $R_3$ unabhängig voneinander Wasserstoff, Halogen, Nitro, Cyan, $C_1$-$C_3$-Alkyl oder $C_1$-$C_3$-Alkoxy,

$R_4$, $R_5$ und $R_6$ unabhängig voneinander Wasserstoff, Halogen oder $C_1$-$C_3$-Alkyl,

A eine der Gruppen $-CH_2-$, $-CH_2-CH_2-$ oder $-CH(CH_3)-$ und

Z Cyan, eine der Gruppen

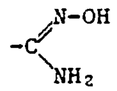

oder

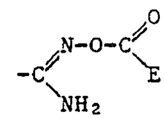

einen gegebenenfalls substituierten Oxazolin-2-yl-Rest, $-COOR_{12}$, $-COSR_{13}$ oder $-CONR_{14}R_{15}$ bedeuten, worin

E für $-R_7$, $-OR_8$, $-SR_9$ oder $-NR_{10}R_{11}$ steht, worin

$R_7$ $C_1$-$C_7$-Alkyl, welches unsubstituiert oder durch Halogen oder $C_1$-$C_4$-Alkoxy substituiert ist, $C_3$-$C_6$-Cycloalkyl, $C_2$-$C_4$-Alkenyl, Phenyl, welches unsubstituiert oder durch Halogen, Nitro oder $C_1$-$C_3$-Alkyl substituiert ist, Benzyl, welches unsubstituiert oder durch Halogen, Nitro oder $C_1$-$C_3$-Alkyl substituiert ist, oder einen 5-bis 6-gliedrigen heterocyclischen Ring, welcher ein oder zwei Heteroatome aus der Gruppe N, O und S enthält und unsubstituiert oder durch Halogen substituiert ist,

$R_8$, $R_9$ und $R_{10}$ unabhängig voneinander $C_1$-$C_8$-Alkyl, welches unsubstituiert oder durch Halogen substituiert ist, $C_2$-$C_4$-Alkenyl, $C_3$-$C_6$-Alkinyl, Phenyl, welches unsubstituiert oder durch Halogen, $C_1$-$C_3$-Alkyl, $C_1$-$C_3$-Alkoxy, Trifluormethyl oder Nitro substituiert ist, oder Benzyl, welches unsubstituiert oder durch Halogen oder Nitro substituiert ist,

$R_{11}$ Wasserstoff, $C_1$-$C_8$-Alkyl oder $C_1$-$C_3$-Alkoxy oder

$R_{10}$ und $R_{11}$ gemeinsam mit dem Stickstoffatom, an das sie gebunden sind, einen 5- bis 6-gliedrigen Heterocyclus, welcher noch ein weiteres Heteroatom aus der Gruppe N, O und S enthalten kann,

$R_{12}$, $R_{13}$ und $R_{14}$ Wasserstoff oder einen gegebenenfalls substituierten Alkyl-, Alkenyl-, Alkinyl-, Cycloalkyl-, Phenyl- oder Naphthylrest oder einen gegebenenfalls substituierten heterocyclischen Rest oder $R_{12}$ und $R_{13}$ auch ein Kation oder $R_{14}$ auch einen Alkoxyrest und

$R_{15}$ Wasserstoff, Amino, mono- oder disubstituiertes Amino oder einen gegebenenfalls substituierten Alkyl-, Alkenyl-, Cycloalkyl- oder Phenylrest oder $R_{14}$ und $R_{15}$ gemeinsam mit dem Stickstoffatom, an das sie gebunden sind, einen gegebenenfalls substituierten heterocyclischen Rest bedeuten, oder A und Z zusammen einen gegebenenfalls substituierten Tetrahydrofuran-2-on-Ring bilden, unter Einschluss ihrer Säureadditionssalze und Metallkomplexe, oder eines Mittels, welches eine dieser Verbindungen enthält zum Schützen von Kulturpflanzen gegen die schädigende Wirkung herbizid wirksamer Derivate von (4,5-Dihydro-4-oxo-1H-imidazol-2-yl)-benzoesäure, -nicotinsäure und -chinolincarbonsäure der Formel II

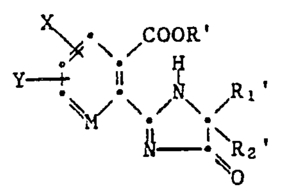

(II)

worin R' Wasserstoff, $C_1$-$C_4$-Alkyl, das Ammoniumkation oder ein organisches Ammoniumkation, $R_1'$ $C_1$-$C_4$-Alkyl, $R_2'$ $C_1$-$C_4$-Alkyl oder $C_3$-$C_6$-Cycloalkyl oder $R_1'$ und $R_2'$ gemeinsam $C_4$- oder $C_5$-Alkylen, M das Strukturelement $=CH-$ oder $=N-$, X und Y unabhängig voneinander Wasserstoff, $C_1$-$C_4$-Alkyl oder Halogen oder zusätzlich, wenn M für $=N-$ steht und X und Y in der α- bzw. β-Stellung hierzu stehen, X und Y gemeinsam das Strukturelement $-C(X_1)=C(X_2)-C(X_3)=C(X_4)-$, worin $X_1$, $X_2$, $X_3$ und $X_4$ für Wasserstoff oder ein oder zwei der Substituenten $X_1$, $X_2$, $X_3$ und $X_4$ für $C_1$-$C_4$-Alkyl oder Halogen und die anderen für Wasserstoff stehen, bedeuten.

2. Die Verwendung von Verbindungen der Formel I, in welcher $R_1$ Wasserstoff oder Halogen, $R_2$ Wasserstoff, $R_3$ Wasserstoff, Halogen oder Nitro, $R_4$ und $R_5$ Wasserstoff und $R_6$ Wasserstoff oder $C_1$-$C_4$-Alkyl bedeuten, oder eines Mittels, gemäss Anspruch 1, welches eine dieser Verbindungen enthält.

3. Die Verwendung von Verbindungen der Formel I, in welcher $R_1$ Wasserstoff, Chlor, Brom oder Jod, $R_2$ Wasserstoff, $R_3$ Wasserstoff, Chlor, Brom oder Nitro, $R_4$ und $R_5$ Wasserstoff und $R_6$ Wasserstoff oder Methyl bedeuten, oder eines Mittels, welches eine dieser Verbindungen enthält, gemäss Anspruch 2.

4. Die Verwendung von Verbindungen der Formel I, in welcher A für $-CH_2-$ steht, oder eines Mittels, welches eine dieser Verbindungen enthält, gemäss Anspruch 1.

5. Die Verwendung von Verbindungen der Formel I, in welcher A für $-CH_2CH_2-$ steht, oder eines Mittels, welches eine dieser Verbindungen enthält, gemäss Anspruch 1.

6. Die Verwendung von Verbindungen der Formel I, in welcher A für $-CH(CH_3)-$ steht, oder eines Mittels, welches eine dieser Verbindungen enthält, gemäss Anspruch 1.

7. Die Verwendung von Verbindungen der Formel I, in welcher Z für

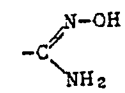

steht, oder eines Mittels, welches eine dieser Verbindungen enthält, gemäss Anspruch 1.

8. Die Verwendung von Verbindungen der Formel I, in welcher Z für

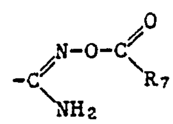

steht, worin $R_7$ unsubstituiertes oder durch Halogen mono- oder disubstituiertes oder durch $C_1$-$C_4$-Alkoxy mono-substituiertes $C_1$-$C_4$-Alkyl, oder Cyclopropyl, $C_2$-$C_3$-Alkenyl, unsubstiuiertes oder durch Halogen monosubstituiertes Phenyl, oder Benzyl, unsubstituiertes oder durch Halogen monosubstituiertes Furanyl, oder Tetrahydrofuranyl, Thienyl oder dihalogeniertes Pyrimidin bedeutet, oder eines Mittels, welches eine dieser Verbindungen enthält, gemäss Anspruch 1.

9. Die Verwendung von Verbindungen der Formel I, in welcher $R_7$ unsubstituiertes oder durch Chlor oder Brom mono- oder disubstituiertes oder durch $C_1$-$C_4$-Alkoxy monosubstituiertes $C_1$-$C_4$-Alkyl, oder Cyclopropyl, $C_2$-$C_3$-Alkenyl, unsubstituiertes oder durch Chlor monosubstituiertes Phenyl, oder Benzyl, unsubstituiertes oder durch Brom monosubstituiertes Furanyl, oder Tetrahydrofuranyl, Thienyl oder Dichlorpyrimidin bedeutet, oder eines Mittels, welches eine dieser Verbindungen enthält, gemäss Anspruch 8.

10. Die Verwendung von Verbindungen der Formel I, in welcher Z für

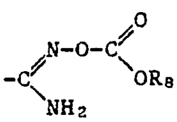

steht, worin $R_8$ unsubstituiertes oder durch Halogen monosubstituiertes $C_1$-$C_4$-Alkyl, oder Allyl, Phenyl oder Benzyl bedeutet, oder eines Mittels, welches eine dieser Verbindungen enthält, gemäss Anspruch 1.

11. Die Verwendung von Verbindungen der Formel I, in welcher $R_8$ unsubstituiertes oder durch Brom monosubstituiertes $C_1$-$C_4$-Alkyl, oder Allyl, Phenyl oder Benzyl bedeutet, oder eines Mittels, welches eine dieser Verbindungen enthält, gemäss Anspruch 10.

12. Die Verwendung von Verbindungen der Formel I, in welcher Z für

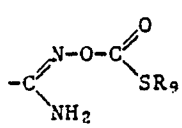

steht, worin $R_9$ für $C_1$-$C_5$-Alkyl steht, oder eines Mittels, welches eine dieser Verbindungen enthält,

13. Die Verwendung von Verbindungen der Formel I, in welcher Z für

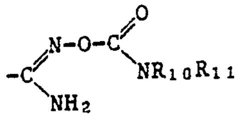

steht, worin $R_{10}$ $C_1$-$C_4$-Alkyl oder unsubstituiertes oder durch Halogen mono- oder disubstituiertes oder durch Trihalogenmethyl monosubstituiertes Phenyl und $R_{11}$ Wasserstoff oder Methoxy bedeutet, oder eines Mittels, welches eine dieser Verbindungen enthält, gemäss Anspruch 1.

14. Die Verwendung von Verbindungen der Formel I, in welcher $R_{10}$ für $C_1$-$C_4$-Alkyl oder unsubstituiertes oder durch Chlor mono- oder disubstituiertes oder durch Trifluormethyl monosubstituiertes Phenyl und $R_{11}$ für Wasserstoff oder Methoxy steht, oder eines Mittels, welches eine dieser Verbindungen enthält, gemäss Anspruch 13.

15. Die Verwendung von Verbindungen der Formel I, in welcher Z für —$COOR_{12}$ steht, worin $R_{12}$ Wasserstoff, ein Alkalimetallkation, das Ammoniumkation oder ein durch $C_1$-$C_4$-Alkyl oder Monohydroxy-

$C_1$-$C_4$-Alkyl trisubstituiertes Amoniumkation, $C_1$-$C_{12}$-Alkyl, durch Halogen, $C_1$-$C_3$-Alkoxy, Phenoxy, Phenyl oder Tetrahydrofuranyl monosubstituiertes $C_1$-$C_4$-Alkyl, oder $C_2$-$C_4$-Alkenyl, $C_3$-$C_4$-Alkinyl, Cyclohexyl oder unsubstituiertes oder durch Methyl mono- oder disubstituiertes Phenyl bedeutet, oder eines Mittels, welches eine dieser Verbindungen enthält, gemäss Anspruch 1.

16. Die Verwendung von Verbindungen der Formel I, in welcher $R_{12}$ für Wasserstoff, das Natriumkation, das Kaliumkation, das Ammoniumkation, ein durch $C_1$-$C_4$-Alkyl oder 2-Hydroxyethyl trisubstituiertes Ammoniumkation, $C_1$-$C_4$-Alkyl, durch Chlor, $C_1$-$C_3$-Alkoxy, Phenoxy, Phenyl oder Tetrahydrofuranyl monosubstituiertes $C_1$-$C_4$-Alkyl, Methylallyl, 2-Propinyl, Cyclohexyl oder unsubstituiertes oder durch Methyl mono- oder disubstituiertes Phenyl steht, oder eines Mittels, welches eine dieser Verbindungen enthält, gemäss Anspruch 15.

17. Die Verwendung von Verbindungen der Formel I, in welcher Z für $—COSR_{13}$ steht, worin $R_{13}$ $C_5$-$C_{10}$ bedeutet, oder eines Mittels, welches eine dieser Verbindungen enthält, gemäss Anspruch 1.

18. Die Verwendung von Verbindungen der Formel I, in welcher $R_{13}$ für n-Octyl steht, oder eines Mittels, welches eine dieser Verbindungen enthält, gemäss Anspruch 17.

19. Die Verwendung von Verbindungen der Formel I, in welcher Z für $—CONR_{14}R_{15}$ steht, worin $R_{14}$ Wasserstoff, $C_1$-$C_{12}$-Alkyl, durch Hydroxy, $C_1$-$C_4$-Alkoxy, Di-($C_1$-$C_4$-alkyl)-amino, (Monohydroxy-$C_1$-$C_4$-alkyl)-amino, Di-(monohydroxy-$C_1$-$C_4$-alkyl)-amino, Phenyl, Tetrahydrofuranyl, Piperidinyl oder Morpholinyl monosubstituiertes $C_1$-$C_4$-Alkyl, oder Allyl, Cyclohexyl oder Amino und $R_{15}$ Wasserstoff, $C_1$-$C_4$-Alkyl oder Monohydroxy-$C_1$-$C_4$-Alkyl bedeuten oder worin $R_{14}$ und $R_{15}$ gemeinsam mit dem Stickstoffatom, an welches sie gebunden sind, den Morpholinring bilden, oder eines Mittels, welches eine dieser Verbindungen enthält, gemäss Anspruch 1.

20. Die Verwendung von Verbindungen der Formel I, in welcher Z für $—CONR_{14}R_{15}$ steht, worin $R_{14}$ Wasserstoff, $C_1$-$C_4$-Alkyl, durch Hydroxy, $C_1$-$C_4$-Alkoxy, Di-($C_1$-$C_4$-alkyl)-amino, (Monohydroxy-$C_1$-$C_4$-alkyl)-amino, Di-(monohydroxy-$C_1$-$C_4$-alkyl)-amino, Phenyl, Tetrahydrofuranyl, Piperidinyl oder Morpholinyl monosubstituiertes $C_1$-$C_4$-Alkyl, oder Allyl, Cyclohexyl oder Amino und $R_{15}$ Wasserstoff, $C_1$-$C_4$-Alkyl oder Monohydroxy-$C_1$-$C_4$-Alkyl bedeuten oder worin $R_{14}$ und $R_{15}$ gemeinsam mit dem Stickstoffatom, an das sie gebunden sind, den Morpholinring bilden, oder eines Mittels, welches eine dieser Verbindungen enthält, gemäss Anspruch 19.

21. Die Verwendung von Verbindungen der Formel I, in welcher A und Z gemeinsam für Tetrahydrofuran-2-on stehen, oder ein Mittel, welches eine dieser Verbindungen enthält, gemäss Anspruch 1.

22. Die Verwendung von Verbindungen der Formel I, in welcher $R_1$ Wasserstoff, Chlor, Brom oder Jod, $R_2$ Wasserstoff, $R_3$ Wasserstoff, Chlor, Brom oder Nitro, $R_4$ und $R_5$ Wasserstoff, $R_6$ Wasserstoff oder Methyl, A eine der Gruppen $—CH_2—$, $—CH_2CH_2—$ oder $—CH(CH_3)—$, und Z Cyan,

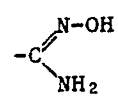
,
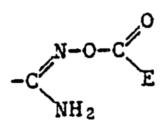

$—COOR_{12}$, $—COSR_{13}$ oder $—CONR_{14}R_{15}$ bedeuten, worin R $—R_7$, $—OR_8$, $—SR_9$ oder $—NR_{10}R_{11}$ bedeutet und

$R_7$ für unsubstituiertes oder durch Chlor oder Brom mono- oder disubstituiertes oder durch $C_1$-$C_4$-Alkoxy monosubstituiertes $C_1$-$C_4$-Alkyl, oder für Cyclopropyl, $C_2$-$C_3$-Alkenyl, unsubstituiertes oder durch Chlor monosubstituiertes Phenyl, oder für Benzyl, unsubstituiertes oder durch Brom monosubstituiertes Furanyl, oder für Tetrahydrofuranyl, Thienyl oder Dichlorpyrimidin steht,

$R_8$ für unsubstituiertes oder durch Brom monosubstituiertes $C_1$-$C_4$-Alkyl, oder für Allyl, Phenyl oder Benzyl steht,

$R_9$ für $C_1$-$C_5$-Alkyl steht,

$R_{10}$ für $C_1$-$C_4$-Alkyl oder unsubstituiertes oder durch Chlor mono- oder disubstituiertes oder durch triufluormethyl mono-substituiertes Phenyl steht,

$R_{11}$ für Wasserstoff oder Methoxy steht,

$R_{12}$ Wasserstoff, das Natriumkation, das Kaliumkation, das Ammoniumkation, durch $C_1$-$C_4$-Alkyl oder 2-Hydroxyethyl trisubstituiertes Ammoniumkation, $C_1$-$C_4$-Alkyl, durch Chlor, $C_1$-$C_3$-Alkoxy, Phenoxy, Phenyl oder Tetrahydrofuranyl monosubstituiertes $C_1$-$C_4$-Alkyl, oder Methyllallyl, 2-Propinyl, Cyclohexyl oder unsubstituiertes oder durch Methyl mono- oder disubstituiertes Phenyl bedeutet,

$R_{13}$ n-Octyl bedeutet,

$R_{14}$ Wasserstoff, $C_1$-$C_4$-Alkyl, durch Hydroxy, $C_1$-$C_4$-Alkoxy, Di-($C_1$-$C_4$-alkyl)-amino, (Monohydroxy-$c_1$-$C_4$-alkyl)-amino, Di-(monohydroxy-$C_1$-$C_4$-alkyl)-amino, Phenyl, Tetrahydrofuranyl, Piperidinyl oder Morpholinyl monosubstituiertes $C_1$-$C_4$-Alkyl, oder Allyl, Cyclohexyl oder Amino bedeutet, und

$R_{15}$ Wasserstoff, $C_1$-$C_4$-Alkyl oder Monohydroxy-$C_1$-$C_4$-Alkyl bedeutet, oder

$R_{14}$ und $R_{15}$ gemeinsam mit dem Stickstoffatom, an welches sie gebunden sind, den Morpholinring bilden, oder worin A und Z gemeinsam für Tetrahydrofuran-2-on stehen,

oder eines Mittels, welches eine dieser Verbindungen enthält, gemäss Anspruch 1.

23. Die Verwendung von Verbindungen der Formel I, in welcher $R_1$, $R_2$, $R_4$, $R_5$ und $R_6$ Wasserstoff, $R_3$ Wasserstoff oder Chlor, A die Gruppe $—CH_2—$ und Z Cyan, die Gruppe

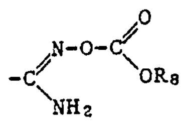

oder $—COOR_{12}$ bedeuten, worin $R_8$ für $C_1$-$C_4$-Alkyl und $R_{12}$ für $C_1$-$C_4$-Alkyl oder $C_2$-$C_4$-Alkenyl steht, oder eines Mittels, welches eine dieser Verbindungen enthält, gemäss Anspruch 1.

24. Die Verwendung von Verbindungen der Formel I, in welcher $R_8$ für Methyl steht, oder eines Mittels, welches eine dieser Verbindungen enthält, gemäss Anspruch 23.

25. Die Verwendung von Verbindungen der Formel I, in welcher $R_{12}$ für n-Butyl oder Methylallyl steht, oder eines Mittels, welches eine dieser Verbindungen enthält, gemäss Anspruch 23.

26. Die Verwendung von 5-Chlor-8-(cyanomethoxy)-chinolin oder eines Mittels, welches diese Verbindung enthält, gemäss Anspruch 1.

27. Die Verwendung von 0-(Methoxycarbonyl)-2-(8-chinolinoxy)-acetamidoxim oder eines Mittels, welches diese Verbindung enthält, gemäss Anspruch 1.

28. Die Verwendung von 2-(5-Chlor-8-chinolinoxy)-essigsäure-n-butylester oder eines Mittels, welches diese Verbindung enthält, gemäss Anspruch 1.

29. Die Verwendung von 2-(5-Chlor-8-chinolinoxy)-essigsäure-methylallylester oder eines Mittels, welches diese Verbindung enthält, gemäss Anspruch 1.

30. Die Verwendung gemäss Anspruch 1 zum Schützen von Kulturpflanzen gegen schädigende Wirkungen von Herbiziden der Formel II, worin R′ Wasserstoff, Methyl, das Ammoniumkation oder ein organisches Ammoniumkation, $R_1'$ Methyl, $R_2'$ Isopropyl und M, X und Y die für Formel II angegebenen Bedeutungen haben.

31. Die Verwendung gemäss Anspruch 30 zum Schützen von Kulturpflanzen gegen schädigende Wirkungen von Herbiziden der Formel II, worin R′ Methyl, $R_1'$ Methyl, $R_2'$ Isopropyl, M das Strukturelement =CH—, X Wasserstoff und Y 4- oder 5-Methyl bedeuten.

32. Die Verwendung gemäss Anspruch 1 zum Schützen von Kulturpflanzen gegen schädigende Wirkungen von 2-[4,5-Dihydro-5-methyl-5-(1-methylethyl)-4-oxo-1H-imidazol-2-yl]-nicotinsäure.

33. Die Verwendung gemäss Anspruch 1 zum Schützen von Kulturpflanzen gegen schädigende Wirkungen von 2-[4,5-Dihydro—5-methyl-5-(1-methylethyl)-4-oxo-1H-imidazol-2-yl]-3-chinolincarbonsäure.

34. Die Verwendung gemäss Anspruch 1 zum Schützen von Getreide.

35. Die Verwendung gemäss Anspruch 34 zum Schützen von Weizen, Gerste und Mais.

36. Die Verwendung von Verbindungen der Formel I gemäss Anspruch 1 in einer Aufwandmenge von 0,1 bis 10 kg je Hektar Anbaufläche der Kulturpflanze.

37. Die Verwendung von Verbindungen der Formel I gemäss Anspruch 36 in einer Aufwandmenge von 0,5 bis 2,0 kg je Hektar Anbaufläche.

38. Verfahren zur selektiven Bekämpfung von Unkräutern in Kulturpflanzenbeständen, dadurch gekennzeichnet, dass man die Kulturpflanzenbestände, Teile der Kulturpflanzen oder Anbauflächen der Kulturpflanzen mit einem Antidot der Formel I gemäss Anspruch 1 und einem Herbizid der Formel II gemäss Anspruch 1 behandelt.

39. Herbizides Mittel, enthaltend als Herbizid eine (4,5-Dihydro-4-oxo-1H-imidazol-2-yl)-benzoesäure, -nicotinsäure oder -chinolincarbonsäure der Formel II

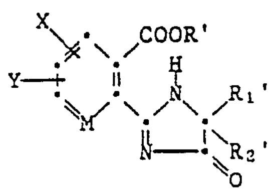

(II)

worin R′ Wasserstoff, $C_1$-$C_4$-Alkyl, das Ammoniumkation oder ein organisches Ammoniumkation, $R_1'$ $C_1$-$C_4$-Alkyl, $R_2'$ $C_1$-$C_4$-Alkyl oder $C_3$-$C_6$-Cycloalkyl oder $R_1'$ und $R_2'$ gemeinsam $C_4$- oder $C_5$-Alkylen, M das Strukturelement =CH— oder =N—, X und Y unabhängig voneinander Wasserstoff, $C_1$-$C_4$-Alkyl oder Halogen oder zusätzlich, wenn M für =N—steht, das Strukturelement $—C(X_1)=C(X_2)—C(X_3)=C(X_4)—$, worin $X_1$, $X_2$, $X_3$ und $X_4$ für Wasserstoff oder ein oder zwei der Substituenten $X_1$, $X_2$, $X_3$ und $X_4$ für $C_1$-$C_4$-Alkyl oder Halogen und die anderen für Wasserstoff stehen, neben einer, die kulturpflanzenschädigende Wirkung des Herbizids der Formel II antagonisierenden Menge einer Verbindung der Formel I

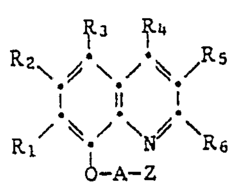

(I)

in welcher $R_1$, $R_2$ und $R_3$ unabhängig voneinander Wasserstoff, Halogen, Nitro, Cyan, $C_1$-$C_3$-Alkyl oder $C_1$-$C_3$-Alkoxy,

$R_4$, $R_5$ und $R_6$ unabhängig voneinander Wasserstoff, Halogen oder $C_1$-$C_3$-Alkyl,

A eine der Gruppen $—CH_2—$, $—CH_2—CH_2—$ oder $—CH(CH_3)—$ und

Z Cyan, eine der Gruppen

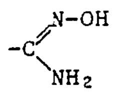

oder

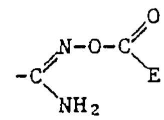

einen gegebenenfalls substituierten Oxazolin-2-yl-Rest, $—COOR_{12}$, $—COSR_{13}$ oder $—CONR_{14}R_{15}$ bedeuten, worin

E für $—R_7$, $—OR_8$, $—SR_9$ oder $—NR_{10}R_{11}$ steht, worin

$R_7$ $C_1$-$C_7$-Alkyl, welches unsubstituiert oder durch Halogen oder $C_1$-$C_4$-Alkoxy substituiert ist, $C_3$-$C_6$-Cycloalkyl, $C_2$-$C_4$-Alkenyl, Phenyl, welches unsubstituiert oder durch Halogen, Nitro oder $C_1$-$C_3$-Alkyl substituiert ist, Benzyl, welches unsubstituiert oder durch Halogen, Nitro oder $C_1$-$C_3$-Alkyl substituiert ist, oder einen 5- bis 6-gliedrigen heterocyclischen Ring, welcher ein oder zwei Heteroatome aus der Gruppe N, O und S enthält und unsubstituiert oder durch Halogen substituiert ist,

$R_8$, $R_9$ und $R_{10}$ unabhängig voneinander $C_1$-$C_8$-Alkyl, welches unsubstituiert oder durch Halogen substituiert ist, $C_2$-$C_4$-Alkenyl, $C_3$-$C_6$-Alkinyl, Phenyl, welches unsubstituiert oder durch Halogen, $C_1$-$C_3$-Alkyl, $C_1$-$C_3$-Alkoxy, Trifluormethyl oder Nitro substituiert ist, oder Benzyl, welches unsubstituiert oder durch Halogen oder Nitro substituiert ist,

$R_{11}$ Wasserstoff, $C_1$-$C_8$-Alkyl oder $C_1$-$C_3$-Alkoxy oder

$R_{10}$ und $R_{11}$ gemeinsam mit dem Stickstoffatom, an das sie gebunden sind, einen 5- bis 6-gliedrigen Heterocyclus, welcher noch ein weiteres Heteroatom aus der Gruppe N, O und S enthalten kann,

$R_{12}$, $R_{13}$ und $R_{14}$ Wasserstoff oder einen gegebenenfalls substituierten Alkyl-, Alkenyl-, Alkinyl-, Cycloalkyl-, Phenyl- oder Naphthylrest oder einen gegebenenfalls substituierten heterocyclischen Rest oder $R_{12}$ und $R_{13}$ auch ein Kation oder $R_{14}$ auch einen Alkoxyrest und

$R_{15}$ Wasserstoff, Amino, mono- oder disubstituiertes Amino oder einen gegebenenfalls substituierten Alkyl-, Alkenyl-, Cycloalkyl- oder Phenylrest oder $R_{14}$ und $R_{15}$ gemeinsam mit dem Stickstoffatom, an das sie gebunden sind, einen gegebenenfalls substituierten heterocyclischen Rest bedeuten, oder A und Z zusammen einen gegebenenfalls substituierten Tetrahydrofuran-2-on-Ring bilden.

## Claims

1. The use of compounds of formula I

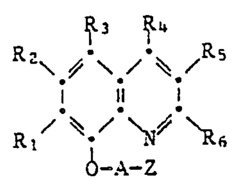

wherein each of $R_1$, $R_2$ and $R_3$, independently of the others, is hydrogen, halogen, nitro, cyano, $C_1$-$C_3$alkyl or $C_1$-$C_3$alkoxy,

each of $R_4$, $R_5$ and $R_6$, independently of the others, is hydrogen, halogen or $C_1$-$C_3$alkyl,

A is one of the groups $—CH_2—$, $—CH_2—CH_2—$ or $—CH(CH_3)—$ and

Z is cyano, one of the groups

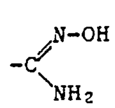

or

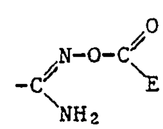

an unsubstituted or substituted oxazolin-2-yl radical, $—COOR_{12}$, $—COSR_{13}$ or $—CONR_{14}R_{15}$, wherein

E is $—R_7$, $—OR_8$, $—SR_9$ or $—NR_{10}R_{11}$, wherein

$R_7$ is $C_1$-$C_7$alkyl which is unsubstituted or substituted by halogen or $C_1$-$C_4$alkoxy, or is $C_3$-$C_6$cycloalkyl, $C_2$-$C_4$alkenyl, phenyl which is unsubstituted or substituted by halogen, nitro or $C_1$-$C_3$alkyl, or is benzyl which is unsubstituted or substituted by halogen, nitro or $C_1$-$C_3$alkyl, or is a 5- or 6-membered heterocyclic ring which contains one or two hetero atoms from the group N, O and S and is unsubstituted or substituted by halogen,

each of $R_8$, $R_9$ and $R_{10}$, independently of the others, is $C_1$-$C_8$alkyl which is unsubstituted or substituted by halogen, or is $C_2$-$C_4$alkenyl, $C_3$-$C_6$alkynyl, phenyl which is unsubstituted or substituted by halogen, $C_1$-$C_3$alkyl, $C_1$-$C_3$alkoxy, trifluoromethyl or nitro, or is benzyl which is unsubstituted or substituted by halogen or nitro,

$R_{11}$ is hydrogen, $C_1$-$C_8$alkyl or $C_1$-$C_3$alkoxy or

$R_{10}$ and $R_{11}$, together with the nitrogen atom to which they are attached, are a 5- or 6-membered heterocycle which may contain a further hetero atom from the group N, O and S,

$R_{12}$, $R_{13}$ and $R_{14}$ are hydrogen or an unsubstituted or substituted alkyl, alkenyl, alkynyl, cycloalkyl, phenyl or naphthyl radical or an unsubstituted or substituted heterocyclic radical, or $R_{12}$ and $R_{13}$ are also a cation, or $R_{14}$ is also an alkoxy radical and $R_{15}$ is hydrogen, amino, monosubstituted or disubstituted amino or an unsubstituted or substituted alkyl, alkenyl, cycloalkyl or phenyl radical, or $R_{14}$ and $R_{15}$, together with the nitrogen atom to which they are attached, are an unsubstituted or substituted heterocyclic radical, or A and Z together form an unsubstituted or substituted tetrahydrofuran-2-one ring, including their acid addition salts and metal complexes, or of a composition containing one of these compounds, for protecting cultivated plants from the harmful effects of herbicidal derivatives of (4,5-dihydro-4-oxo-1H-imidazol-2-yl)-benzoic acid, (4,5-dihydro-4-oxo-1H-imidazol-2-yl)-nicotinic acid, (4,5-dihydro-4-oxo-1H-imidazol-2-yl)-quinolinecarboxylic acid of formula II

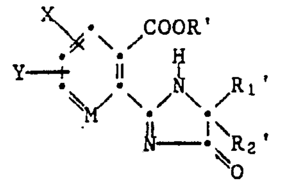

(II)

wherein R′ is hydrogen, $C_1$-$C_4$alkyl, the ammonium cation or an organic ammonium cation, $R_1'$ is $C_1$-$C_4$alkyl, $R_2'$ is $C_1$-$C_4$alkyl or $C_3$-$C_6$cycloalkyl, or $R_1'$ and $R_2'$ together are $C_4$alkylene or $C_5$alkylene, M is the structural unit =CH— or =N—, each of X and Y, independently of the other, is hydrogen, $C_1$-$C_4$alkyl or halogen or, if M is =M— and X and Y are respectively in the α- and β-positions thereto, X and Y together are additionally the structural unit —$C(X_1)$=$C(X_2)$—$C(X_3)$=$C(X_4)$—, wherein $X_1$, $X_2$, $X_3$ and $X_4$ are hydrogen or one or two of the substituents $X_1$, $X_2$, $X_3$ and $X_4$ are $C_1$-$C_4$alkyl or halogen and the others are hydrogen.

2. The use of compounds of formula I wherein $R_1$ is hydrogen or halogen, $R_2$ is hydrogen, $R_3$ is hydrogen, halogen or nitro, $R_4$ and $R_5$ are hydrogen and $R_6$ is hydrogen or $C_1$-$C_4$alkyl, or of a composition containing one of those compounds, according to claim 1.

3. The use of compounds of formula I wherein $R_1$ is hydrogen, chlorine, bromine or iodine, $R_2$ is hydrogen, $R_3$ is hydrogen, chlorine, bromine or nitro, $R_4$ and $R_5$ are hydrogen and $R_6$ is hydrogen or methyl, or of a composition containing one of those compounds, according to claim 2.

4. The use of compounds of formula I wherein A is —$CH_2$—, or of a composition containing one of those compounds, according to claim 1.

5. The use of compounds of formula I wherein A is —$CH_2CH_2$—, or of a composition containing one of those compounds, according to claim 1.

6. The use of compounds of formula I wherein A is —$CH(CH_3)$—, or of a composition containing one of those compounds, according to claim 1.

7. The use of compounds of formula I wherein Z is

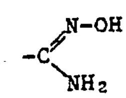

or of a composition containing one of those compounds, according to claim 1.

8. The use of compounds of formula I wherein Z is

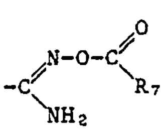

wherein $R_7$ is $C_1$-$C_4$alkyl which is unsubstituted or mono- or di-substituted by halogen or monosubstituted by $C_1$-$C_4$alkoxy, or is cyclopropyl, $C_2$-$C_3$alkenyl, phenyl which is unsubstituted or monosubstituted by halogen, or is benzyl, or is furanyl which is unsubstituted or monosubstituted by halogen, or is tetrahydrofuranyl, thienyl or dihalogenated pyrimidine, or of a composition containing one of those compounds, according to claim 1.

9. The use of compounds of formula I wherein $R_7$ is $C_1$-$C_4$alkyl which is unsubstituted or mono- or

di-substituted by chlorine or bromine or monosubstituted by $C_1$-$C_4$alkoxy, or is cyclopropyl, $C_2$-$C_3$alkenyl, phenyl which is unsubstituted or substituted by chlorine, or is benzyl, or is furanyl which is unsubstituted or monosubstituted by bromine, or is tetrahydrofuranyl, thienyl or dichloropyrimidine, or of a composition containing one of those compounds, according to claim 8.

10. The use of compounds of formula I wherein Z is

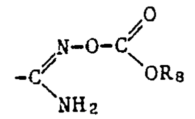

wherein $R_8$ is $C_1$-$C_4$alkyl which is unsubstituted or monosubstituted by halogen, or is allyl, phenyl or benzyl, or of a composition containing one of those compounds, according to claim 1.

11. The use of compounds of formula I wherein $R_8$ is $C_1$-$C_4$alkyl which is unsubstituted or monosubstituted by bromine, or is allyl, phenyl or benzyl, or of a composition containing one of those compounds, according to claim 10.

12. The use of compounds of formula I wherein Z is

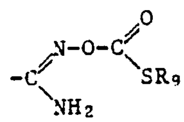

wherein $R_9$ is $C_1$-$C_5$alkyl, or of a composition containing one of those compounds.

13. The use of compounds of formula I wherein Z is

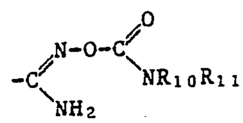

wherein $R_{10}$ is $C_1$-$C_4$alkyl or is phenyl which is unsubstituted or mono- or di-substituted by halogen or monosubstituted by trihalomethyl, and $R_{11}$ is hydrogen or methoxy, or of a composition containing one of those compounds, according to claim 1.

14. The use of compounds of formula I wherein $R_{10}$ is $C_1$-$C_4$alkyl or is phenyl which is unsubstituted or mono- or di-substituted by chlorine or monosubstituted by trifluoromethyl, and $R_{11}$ is hydrogen or methoxy, or of a composition containing one of those compounds, according to claim 13.

15. The use of compounds of formula I wherein Z is —$COOR_{12}$, wherein $R_{12}$ is hydrogen, an alkali metal cation, the ammonium cation or an ammonium cation which is trisubstituted by $C_1$-$C_4$alkyl or monohydroxy-$C_1$-$C_4$alkyl, or is $C_1$-$C_{12}$alkyl, or is $C_1$-$C_4$alkyl which is monosubstituted by halogen, $C_1$-$C_3$alkoxy, phenoxy, phenyl or tetrahydrofuranyl, or is $C_2$-$C_4$alkenyl, $C_3$-$C_4$alkynyl or cyclohexyl, or is phenyl which is unsubstituted or mono- or di-substituted by methyl, or of a composition containing one of those compounds, according to claim 1.

16. The use of a compound of formula I wherein $R_{12}$ is hydrogen, the sodium cation, the potassium cation, the ammonium cation, an ammonium cation trisubstituted by $C_1$-$C_4$alkyl or 2-hydroxyethyl, or is $C_1$-$C_4$alkyl or $C_1$-$C_4$alkyl which is monosubstituted by chlorine, $C_1$-$C_3$alkoxy, phenoxy, phenyl or tetrahydrofuranyl, or is methylallyl, 2-propynyl or cyclohexyl, or is phenyl which is unsubstituted or mono- or di-substituted by methyl, or of a composition containing one of those compounds, according to claim 15.

17. The use of compounds of formula I wherein Z is —$COSR_{13}$, wherein $R_{13}$ is $C_5$-$C_{10}$alkyl, or of a composition containing one of those compounds, according to claim 1.

18. The use of compounds of formula I wherein $R_{13}$ is n-octyl, or of a composition containing one of those compounds, according to claim 17.

19. The use of compounds of formula I wherein Z is —$CONR_{14}R_{15}$, wherein $R_{14}$ is hydrogen, $C_1$-$C_{12}$alkyl, $C_1$-$C_4$alkyl which is monosubstituted by hydroxy, $C_1$-$C_4$alkoxy, di-($C_1$-$C_4$alkyl)amino, (monohydroxy-$C_1$-$C_4$alkyl)amino, di-(monohydroxy-$C_1$-$C_4$alkyl)amino, phenyl, tetrahydrofuranyl, piperidinyl or morpholinyl, or is allyl, cyclohexyl or amino, and $R_{15}$ is hydrogen, $C_1$-$C_4$alkyl or monohydroxy-$C_1$-$C_4$alkyl, or wherein $R_{14}$ and $R_{15}$, together with the nitrogen atom to which they are attached, form the morpholino ring, or of a composition containing one of those compounds, according to claim 1.

20. The use of compounds of formula I wherein Z is —$CONR_{14}R_{15}$, wherein $R_{14}$ is hydrogen, $C_1$-$C_4$alkyl, $C_1$-$C_4$alkyl which is monosubstituted by hydroxy, $C_1$-$C_4$alkoxy, di-($C_1$-$C_4$alkyl)amino, (monohydroxy-$C_1$-$C_4$alkyl)amino, di-(monohydroxy-$C_1$-$C_4$alkyl)amino, phenyl, tetrahydrofuranyl, piperidinyl or morpholinyl, or is allyl, cyclohexyl or amino, and $R_{15}$ is hydrogen, $C_1$-$C_4$alkyl or monohydroxy-$C_1$-$C_4$alkyl, or wherein $R_{14}$ and $R_{15}$, together with the nitrogen atom to which they are attached, form the morpholino ring, or of a composition containing one of those compounds, according to claim 19.

21. The use of compounds of formula I wherein A and Z together are tetrahydrofuran-2-one, or of a composition containing one of those compounds, according to claim 1.

22. The use of compounds of formula I wherein $R_1$ is hydrogen, chlorine, bromine or iodine, $R_2$ is hydrogen, $R_3$ is hydrogen, chlorine, bromine or nitro, $R_4$ and $R_5$ are hydrogen, $R_6$ is hydrogen or methyl, A is one of the groups $—CH_2—$, $—CH_2CH_2—$ or $—CH(CH_3)—$, and Z is cyano,

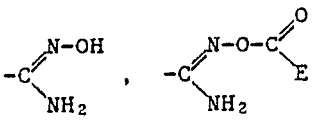

$—COOR_{12}$, $—COSR_{13}$ or $—CONR_{14}R_{15}$, wherein E is $—R_7$, $—OR_8$, $—SR_9$ or $—NR_{10}R_{11}$ and

$R_7$ is $C_1$-$C_4$alkyl which is unsubstituted or mono- or di-substituted by chlorine or bromine or monosubstituted by $C_1$-$C_4$alkoxy, or is cyclopropyl, $C_2$-$C_3$alkenyl, phenyl which is unsubstituted or monosubstituted by chlorine, or is benzyl, or is furanyl which is unsubstituted or monosubstituted by bromine, or is tetrahydrofuranyl, thienyl or dichloropyrimidine,

$R_8$ is $C_1$-$C_4$alkyl which is unsubstituted or monosubstituted by bromide, or is allyl, phenyl or benzyl,

$R_9$ is $C_1$-$C_5$alkyl,

$R_{10}$ is $C_1$-$C_4$alkyl or is phenyl which is unsubstituted or mono- or di-substituted by chlorine or monosubstituted by trifluoromethyl,

$R_{11}$ is hydrogen or methoxy,

$R_{12}$ is hydrogen, the sodium cation, the potassium cation, the ammonium cation or an ammonium cation which is trisubstituted by $C_1$-$C_4$alkyl or 2-hydroxyethyl, or is $C_1$-$C_4$alkyl, $C_1$-$C_4$alkyl which is monosubstituted by chlorine, $C_1$-$C_3$alkoxy, phenoxy, phenyl or tetrahydrofuranyl, or is methylallyl, 2-propynyl or cyclohexyl, or is phenyl which is unsubstituted or mono- or di-substituted by methyl,

$R_{13}$ is n-octyl,

$R_{14}$ is hydrogen, $C_1$-$C_4$alkyl, $C_1$-$C_4$alkyl which is monosubstituted by hydroxy, $C_1$-$C_4$alkoxy, di-($C_1$-$C_4$alkyl)amino, (monohydroxy-$C_1$-$C_4$alkyl)amino, di-(monohydroxy-$C_1$-$C_4$alkyl)amino, phenyl, tetrahydrofuranyl, piperidinyl or morpholinyl, or is allyl, cyclohexyl or amino, and

$R_{15}$ is hydrogen, $C_1$-$C_4$alkyl or monohydroxy-$C_1$-$C_4$alkyl, or

$R_{14}$ and $R_{15}$, together with the nitrogen atom to which they are attached, form the morpholino ring, or wherein A and Z together are tetrahydrofuran-2-one, or of a composition containing one of those compounds, according to claim 1.

23. The use of compounds of formula I wherein $R_1$, $R_2$, $R_4$, $R_5$ and $R_6$ are hydrogen, $R_3$ is hydrogen or chlorine, A is the group $—CH_2—$ and Z is cyano, the group

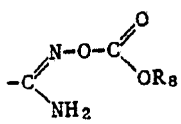

or $—COOR_{12}$, wherein $R_8$ is $C_1$-$C_4$alkyl and $R_{12}$ is $C_1$-$C_4$alkyl or $C_2$-$C_4$alkenyl, or of a composition containing one of those compounds, according to claim 1.

24. The use of compounds of formula I wherein $R_8$ is methyl, or of a composition containing one of those compounds, according to claim 23.

25. The use of compounds of formula I wherein $R_{12}$ is n-butyl or methylallyl, or of a composition containing one of those compounds, according to claim 23.

26. The use of 5-chloro-8-(cyanomethoxy)-quinoline or of a composition containing that compound, according to claim 1.

27. The use of O-(methoxycarbonyl)-2-(8-quinolinoxy)-acetamidoxine or of a composition containing that compound, according to claim 1.

28. The use of n-butyl 2-(5-chloro-8-quinolinoxy)acetate or of a composition containing that compound, according to claim 1.

29. The use of methylallyl 2-(5-chloro-8-quinolinoxy)acetate or of a composition containing that compound, according to claim 1.

30. The use according to claim 1 for protecting cultivated plants from the harmful effects of herbicides of formula II wherein R′ is hydrogen, methyl, the ammonium cation or an organic ammonium cation $R_1'$ is methyl, $R_2'$ is isopropyl and M, X and Y are as defined for formula II.

31. The use according to claim 30 for protecting cultivated plants from the harmful effects of herbicides of formula II wherein R′ is methyl, $R_1'$ is methyl, $R_2'$ is isopropyl, M is the structural unit =CH—, X is hydrogen and Y is 4- or 5-methyl.

32. The use according to claim 1 for protecting cultivated plants from the harmful effects of 2-[4,5-dihydro-5-methyl-5-(1-methylethyl)-4-oxo-1H-imidazol-2-yl]nicotinic acid.

33. The use according to claim 1 for protecting cultivated plants from the harmful effects of 2-[4,5-dihydro-5-methyl-5-(1-methylethyl)-4-oxo-1H-imidazol-2-yl]-3-quinolinecarboxylic acid.

34. The use according to claim 1 for protecting cereals.

35. The use according to claim 34 for protecting wheat, barley and maize.

36. The use of compounds of formula I according to claim 1 at an application rate of from 0.1 to 10 kg per hectare of cultivation area of the cultivated plants.

37. The use of compounds of formula I according to claim 36 at an application rate of from 0.5 to 2.0 kg per hectare of cultivation area.

38. A method of selectively controlling weeds in crops of cultivated plants which comprises treating crops of cultivated plants, parts of cultivated plants or cultivation areas of cultivated plants with a safener of formula I according to claim 1 and a herbicide of formula II according to claim 1.

39. A herbicidal composition which contains, as herbicide, a (4,5-dihydro-4-oxo-1H-imidazol-2-yl)benzoic acid, a (4,5-dihydro-4-oxo-1H-imidazol-2-yl)nicotinic acid or a (4,5-dihydro-4-oxo-1H-imidazol-2-yl)quinolinecarboxylic acid of formula II

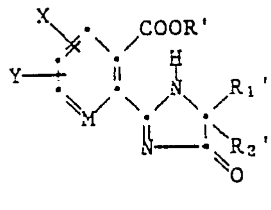

(II)

wherein R′ is hydrogen, $C_1$-$C_4$alkyl, the ammonium cation or an organic ammonium cation, $R_1'$ is $C_1$-$C_4$alkyl, $R_2'$ is $C_1$-$C_4$alkyl or $C_3$-$C_6$cycloalkyl, or $R_1'$ and $R_2'$ together are $C_4$alkylene or $C_5$alkylene, M is the structural unit =CH— or =N—, each of X and Y, independently of the other, is hydrogen, $C_1$-$C_4$alkyl or halogen or, if M is =N—, are additionally the structural unit —$C(X_1)=C(X_2)$—$C(X_3)=C(X_4)$—, wherein $X_1$, $X_2$, $X_3$ and $X_4$ are hydrogen or one or two of the substituents $X_1$, $X_2$, $X_3$ and $X_4$ are $C_1$-$C_4$alkyl or halogen and the others are hydrogen, together with an amount, sufficient to antagonise the harmful effects on cultivated plants of the herbicide of formula II, of a compound of formula I

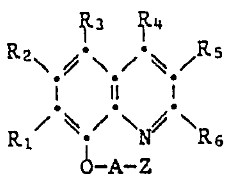

(I)

wherein each of $R_1$, $R_2$ and $R_3$, independently of the others, is hydrogen, halogen, nitro, cyano, $C_1$-$C_3$alkyl or $C_1$-$C_3$alkoxy,
each of $R_4$, $R_5$ and $R_6$, independently of the others, is hydrogen, halogen or $C_1$-$C_3$alkyl,
A is one of the groups —$CH_2$—, —$CH_2$—$CH_2$— or —$CH(CH_3)$— and
Z is cyano, one of the groups

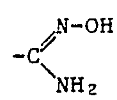

or

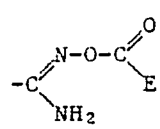

an unsubstituted or substituted oxazolin-2-yl radical, —$COOR_{12}$, —$COSR_{13}$ or —$CONR_{14}R_{15}$, wherein
E is —$R_7$, —$OR_8$, —$SR_9$, or —$NR_{10}R_{11}$, wherein
$R_7$ is $C_1$-$C_7$alkyl which is unsubstituted or substituted by halogen or $C_1$-$C_4$alkoxy, or is $C_3$-$C_6$cycloalkyl, $C_2$-$C_4$alkenyl, phenyl which is unsubstituted or substituted by halogen, nitro or $C_1$-$C_3$alkyl, or is benzyl which is unsubstituted or substituted by halogen, nitro or $C_1$-$C_3$alkyl, or is a 5- or 6-membered heterocyclic ring which contains one or two hetero atoms from the group N, O and S and is unsubstituted or substituted by halogen,
each of $R_8$, $R_9$ and $R_{10}$, independently of the others, is $C_1$-$C_8$alkyl which is unsubstituted or substituted by halogen, or is $C_2$-$C_4$alkenyl, $C_3$-$C_6$alkynyl, phenyl which is unsubstituted or substituted by halogen, $C_1$-$C_3$alkyl, $C_1$-$C_3$alkoxy, trifluoromethyl or nitro, or is benzyl which is unsubstituted or substituted by halogen or nitro,
$R_{11}$ is hydrogen, $C_1$-$C_8$alkyl or $C_1$-$C_3$alkoxy or
$R_{10}$ and $R_{11}$, together with the nitrogen atom to which they are attached, are a 5- or 6-membered heterocycle which may contain a further hetero atom from the group N, O and S,
$R_{12}$, $R_{13}$ and $R_{14}$ are hydrogen or an unsubstituted or substituted alkyl, alkenyl, alkynyl, cycloalkyl, phenyl or naphthyl radical or an unsubstituted or substituted heterocyclic radical, or $R_{12}$ and $R_{13}$ are also

a cation, or $R_{14}$ is also an alkoxy radical and $R_{15}$ is hydrogen, amino, monosubstituted or disubstituted amino or an unsubstituted or substituted alkyl, alkenyl, cycloalkyl or phenyl radical, or $R_{14}$ and $R_{15}$, together with the nitrogen atom to which they are attached, are an unsubstituted or substituted heterocyclic radical, or A and Z together form an unsubstituted or substituted tetrahydrofuran-2-one ring.

**Revendications**

1. L'utilisation de composés de formule I

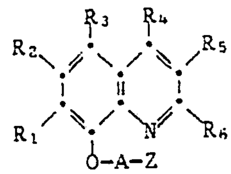

(I)

dans laquelle

$R_1$, $R_2$ et $R_3$ représentent chacun, indépendamment les uns des autres, l'hydrogène, un halogène, un groupe nitro, cyano, alkyle en $C_1$-$C_3$ ou alcoxy en $C_1$-$C_3$,

$R_4$, $R_5$ et $R_6$ représentent chacun, indépendamment les uns des autres, l'hydrogène, un halogène ou un groupe alkyle en $C_1$-$C_3$,

A représente l'un des groupes $—CH_2—$, $—CH_2—CH_2—$ ou $—CH(CH_3)—$, et

Z représente un groupe cyano, l'un des groupes

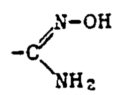

ou

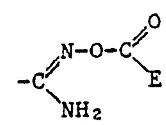

un groupe oxazoline-2-yle éventuellement substitué, $—COOR_{12}$, $—COSR_{13}$ ou $—CONR_{14}R_{15}$ dans lesquels

E représente $—R_7$, $—OR_8$, $—SR_9$ ou $—NR_{10}R_{11}$ dans lesquels

$R_7$ représente un groupe alkyle en $C_1$-$C_7$ non substitué ou substitué par des halogènes ou des groupes alcoxy en $C_1$-$C_4$, un groupe cycloalkyle en $C_3$-$C_6$, alcényle en $C_2$-$C_4$, phényle non substitué ou substitué par des halogènes, des groupes nitro ou alkyle en $C_1$-$C_3$, benzyle non substitué ou substitué par des halogènes, des groupes nitro ou alkyle en $C_1$-$C_3$, ou un noyau hétérocyclique à 5 ou 6 chaînons contenant un ou deux hétéroatomes du groupe formé par N, O et S, et qui est non substitué ou substitué par des halogènes,

$R_8$, $R_9$ et $R_{10}$ représentent chacun, indépendamment les uns des autres, un groupe alkyle en $C_1$-$C_8$ non substitué ou substitué par des halogènes, un groupe alcényle en $C_2$-$C_4$, alcynyle en $C_3$-$C_6$, phényle non substitué ou substitué par des halogènes, des groupes alkyle en $C_1$-$C_3$, alcoxy en $C_1$-$C_3$, trifluorométhyle ou nitro, ou un groupe benzyle non substitué ou substitué par des halogènes ou des groupes nitro,

$R_{11}$ représente l'hydrogène, un groupe alkyle en $C_1$-$C_8$ ou alcoxy en $C_1$-$C_3$, ou bien

$R_{10}$ et $R_{11}$ forment ensemble et avec l'atome d'azote auquel ils sont reliés un hétérocycle à 5 ou 6 chaînons qui peut encore contenir un autre hétéroatome du groupe formé par N, O et S,

$R_{12}$, $R_{13}$ et $R_{14}$ représentent l'hydrogène ou un groupe alkyle, alcényle, alcynyle, cycloalkyle, phényle ou naphtyle éventuellement substitué ou un radical hétérocyclique éventuellement substitué ou bien $R_{12}$ et $R_{13}$ peuvent également représenter un cation, ou bien $R_{14}$ un groupe alcoxy et

$R_{15}$ représente l'hydrogène, un groupe amino, amino mono- ou di-substitué ou un groupe alkyle, alcényle, cycloalkyle ou phényle éventuellement substitué ou bien

$R_{14}$ et $R_{15}$ forment ensemble et avec l'atome d'azote auquel ils sont reliés un radical hétérocyclique éventuellement substitué, ou bien A et Z forment ensemble un cycle tétrahydrofuranne-2-one éventuellement substitué, y compris leurs sels formés par addition avec des acides et complexes métalliques, ou d'un produit contenant l'un de ces composés, pour la protection des végétaux cultivés contre les effets nocifs des dérivés des acides (4,5-dihydro-4-oxo-1H-imidazole-2-yl)-benzoïque, -nicotinique et -quinoléine-carboxylique possédant une activité herbicide et répondant à la formule II

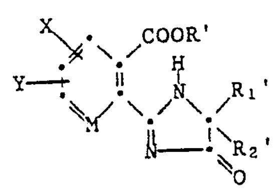

(II)

dans laquelle

R' représente l'hydrogène, un groupe alkyle en $C_1$-$C_4$, le cation ammonium ou un cation ammonium organique, $R'_1$ représente un groupe alkyle en $C_1$-$C_4$, $R'_2$ représente un groupe alkyle en $C_1$-$C_4$ ou cycloalkyle en $C_3$-$C_6$ ou bien $R'_1$ et $R'_2$ forment ensemble un groupe alkylène en $C_4$ ou $C_5$, M représente l'élément de structure =CH— ou =N—, X et Y représentent chacun, indépendamment l'un de l'autre, l'hydrogène, un groupe alkyle en $C_1$-$C_4$ ou un halogène, ou bien encore, lorsque M représente =N— et que X et Y sont dans les positions respectives alpha et bêta par rapport à ce dernier, X et Y représentent ensemble l'élément de structure $—C(X_1)=C(X_2)—C(X_3)=C(X_4)—$, dans lequel $X_1$, $X_2$, $X_3$ et $X_4$ représentent l'hydrogène, ou bien un ou deux des symboles, $X_1$, $X_2$, $X_3$ et $X_4$ représentent des groupes alkyle en $C_1$-$C_4$ ou des halogènes et les autres l'hydrogène.

2. L'utilisation des composés de formule I dans laquelle $R_1$ représente l'hydrogène ou un halogène, $R_2$ l'hydrogène, $R_3$ l'hydrogène, un halogène ou un groupe nitro, $R_4$ et $R_5$ l'hydrogène et $R_6$ l'hydrogène ou un groupe alkyle en $C_1$-$C_4$, ou d'un produit, selon la revendication, contenant l'un de ces composés.

3. L'utilisation de composés de formule I dans laquelle $R_1$ représente l'hydrogène, le chlore, le brome ou l'iode, $R_2$ représente l'hydrogène, $R_3$ représente l'hydrogène, le chlore, le brome ou un groupe nitro, $R_4$ et $R_5$ représentent l'hydrogène et $R_6$ l'hydrogène ou un groupe méthyle ou d'un produit contenant l'un de ces composés selon la revendication 2.

4. L'utilisation de composés de formule I dans laquelle A représente $—CH_2—$ ou d'un produit contenant l'un de ces composés selon la revendication 1.

5. L'utilisation de composés de formule I dans laquelle A représente $—CH_2CH_2—$ ou d'un produit contenant l'un de ces composés selon la revendication 1.

6. L'utilisation de composés de formule I dans laquelle A représente $—CH(CH_3)—$ ou d'un produit contenant l'un de ces composés selon la revendication 1.

7. L'utilisation de composés de formule I dans laquelle Z représente

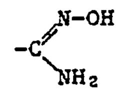

ou d'un produit contenant l'un de ces composés selon la revendication 1.

8. L'utilisation de composés de formule I dans laquelle Z représente

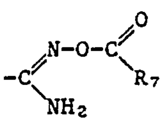

où $R_7$ représente un groupe alkyle en $C_1$-$C_4$ non substitué ou mono- ou di-substitué par des halogènes ou monosubstitué par un groupe alcoxy en $C_1$-$C_4$, ou un groupe cyclopropyle, alcényle en $C_2$-$C_3$, phényle non substitué ou monosubstitué par un halogène, ou benzyle, furannyle non substitué ou monosubstitué par un halogène, ou tétrahydrofurannyle, thiényle ou pyrimidine dihalogéné, ou d'un produit contenant l'un de ces composés, selon la revendication 1.

9. L'utilisation de composés de formule I dans laquelle $R_7$ représente un groupe alkyle en $C_1$-$C_4$ non substitué ou mono- ou di-substitué par le chlore ou le brome ou monosubstitué par un groupe alcoxy en $C_1$-$C_4$, ou un groupe cyclopropyle, alcényle en $C_2$-$C_3$, phényle non substitué ou monosubstitué par le chlore, ou benzyle, furannyle non substitué ou monosubstitué par le brome, ou tétrahydrofurannyle, thiényle ou dichloropyrimidine, ou d'un produit contenant l'un de ces composés selon la revendication 8.

10. L'utilisation de composés de formule I dans laquelle Z représente

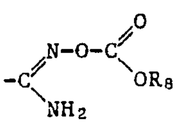

où $R_8$ représente un groupe alkyle en $C_1$-$C_4$ non substitué ou monosubstitué par un halogène, ou un groupe allyle, phényle ou benzyle, ou d'un produit contenant l'un de ces composés selon la revendication 1.

11. L'utilisation de composés de formule I dans laquelle $R_8$ représente un groupe alkyle en $C_1$-$C_4$ non substitué ou monosubstitué par le brome, ou un groupe allyle, phényle ou benzyle, ou d'un produit contenant l'un de ces composés selon la revendication 10.

12. L'utilisation de composés de formule I dans laquelle Z représente

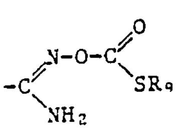

où $R_9$ représente un groupe alkyle en $C_1$-$C_5$ ou d'un produit contenant l'un de ces composés.

13. L'utilisation de composés de formule I dans laquelle Z représente

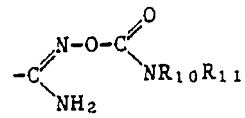

où $R_{10}$ représente un groupe alkyle en $C_1$-$C_4$ ou un groupe phényle non substitué ou mono- ou di-substitué par des halogènes ou monosubstitué par un groupe trihalogénométhyle et $R_{11}$ représente l'hydrogène ou un groupe méthoxy, ou d'un produit contenant l'un de ces composés, selon la revendication 1.

14. L'utilisation de composés de formule I dans laquelle $R_{10}$ représente un groupe alkyle en $C_1$-$C_4$ ou un groupe phényle non substitué ou mono- ou di-substitué par le chlore ou monosubstitué par un groupe trifluorométhyle et $R_{11}$ représente l'hydrogène ou un groupe méthoxy, ou d'un produit contenant l'un de ces composés, selon la revendication 13.

15. L'utilisation de composés de formule I dans laquelle Z représente un groupe $-COOR_{12}$ dans lequel $R_{12}$ représente l'hydrogène, un cation de métal alcalin, le cation ammonium ou un cation ammonium trisubstitué par des groupes alkyle en $C_1$-$C_4$ ou monohydroxyalkyle en $C_1$-$C_4$, un groupe alkyle en $C_1$-$C_{12}$, un groupe alkyle en $C_1$-$C_4$ monosubstitué par un halogène, un groupe alcoxy en $C_1$-$C_3$, phénoxy, phényle ou tétrahydrofurannyle, ou un groupe alcényle en $C_2$-$C_4$, alcynyle en $C_3$-$C_4$, cyclohexyle ou phényle non substitué ou mono- ou di-substitué par des groupes méthyle, ou d'un produit contenant l'un de ces composés, selon la revendication 1.

16. L'utilisation de composés de formule I dans laquelle $R_{12}$ représente l'hydrogène, le cation sodium, le cation potassium, le cation ammonium, un cation ammonium trisubstitué par des groupes alkyle en $C_1$-$C_4$ ou 2-hydroxyéthyle, un groupe alkyle en $C_1$-$C_4$, un groupe alkyle en $C_1$-$C_4$ monosubstitué par le chlore, un groupe alcoxy en $C_1$-$C_3$, phénoxy, phényle ou tétrahydrofurannyle, un groupe méthylallyle, 2-propynyle, cyclohexyle ou phényle non substitué ou mono- ou di-substitué par des groupes méthyle, ou d'un produit contenant l'un de ces composés selon la revendication 15.

17. L'utilisation de composés de formule I dans laquelle Z représente $-COSR_{13}$ et $R_{13}$ représente un groupe alkyle en $C_5$-$C_{10}$, ou d'un produit contenant l'un de ces composés selon la revendication 1.

18. L'utilisation de composés de formule I dans laquelle $R_{13}$ représente le groupe n-octyle, ou d'un produit contenant l'un de ces composés selon la revendication 17.

19. L'utilisation de composés de formule I dans laquelle Z représente $-CONR_{14}R_{15}$ où $R_{14}$ représente l'hydrogène, un groupe alkyle en $C_1$-$C_{12}$, un groupe alkyle en $C_1$-$C_4$ monosubstitué par un groupe hydroxy, alcoxy en $C_1$-$C_4$, di-(alkyle en $C_1$-$C_4$)-amino, (monohydroxyalkyle en $C_1$-$C_4$)-amino, di-(monohydroxyalkyke en $C_1$-$C_4$)-amino, phényle, tétrahydrofurannyle, pipéridinyle ou morpholinyle, ou un groupe allyle, cyclohexyle ou amino et $R_{15}$ représente l'hydrogène, un groupe alkyle en $C_1$-$C_4$ ou monohydroxyalkyle en $C_1$-$C_4$ ou bien $R_{14}$ et $R_{15}$ forment ensemble et avec l'atome d'azote auquel ils sont reliés un cycle morpholine, ou d'un produit contenant l'un de ces composés, selon la revendication 1.

20. L'utilisation de composés de formule I dans laquelle Z représente le groupe $-CONR_{14}R_{15}$ dans lequel $R_{14}$ représente l'hydrogène, un groupe alkyle en $C_1$-$C_4$, un groupe alkyle en $C_1$-$C_4$ monosubstitué par un groupe hydroxy, alcoxy en $C_1$-$C_4$, di-(alkyle en $C_1$-$C_4$)-amino, (monohydroxyalkyle en $C_1$-$C_4$)-amino, di-(monohydroxyalkyle en $C_1$-$C_4$)-amino, phényle, tétrahydrofurannyle, pipéridinyle ou morpholinyle, ou un groupe allyle, cyclohexyle ou amino, et $R_{15}$ représente l'hydrogène, un groupe alkyle en $C_1$-$C_4$ ou monohydroxyalkyle en $C_1$-$C_4$, ou bien $R_{14}$ et $R_{15}$ forment ensemble et avec l'atome d'azote auquel ils sont reliés le cycle morpholine, ou d'un produit contenant l'un de ces composés, selon la revendication 19.

21. L'utilisation de composés de formule I dans laquelle A et Z forment ensemble le groupe tétrahydrofuranne-2-one ou d'un produit contenant l'un de ces composés, selon la revendication 1.

22. L'utilisation de composés de formule I dans laquelle $R_1$ représente l'hydrogène, le chlore, le brome ou l'iode, $R_2$ l'hydrogène, $R_3$ l'hydrogène, le chlore, le brome ou un groupe nitro, $R_4$ et $R_5$ l'hydrogène, $R_6$ l'hydrogène ou un groupe méthyle, A l'un des groupes $-CH_2-$, $-CH_2CH_2-$ ou $-CH(CH_3)-$ et Z représente un groupe cyano

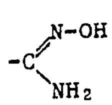 , 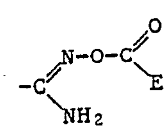

$-COOR_{12}$, $-COSR_{13}$ ou $-CONR_{14}R_{15}$ dans lesquels E représente $-R_7$, $-OR_8$, $-SR_9$ ou $-NR_{10}R_{11}$ et

$R_7$ représente un groupe alkyle en $C_1$-$C_4$ non substitué ou monosubstitué ou disubstitué par le chlore ou le brome ou monosubstitué par un groupe alcoxy en $C_1$-$C_4$, ou un groupe cyclopropyle, alcényle en $C_2$-$C_3$, phényle non substitué ou monosubstitué par le chlore, ou un groupe benzyle,

furannyle non substitué ou monosubstitué par le brome, ou un groupe tétrahydrofurannyle, thiényle ou dichloropyrimidine,

$R_8$ représente un groupe alkyle en $C_1$-$C_4$ non substitué ou monosubstitué par le brome, ou un groupe allyle, phényle ou benzyle,

$R_9$ représente un groupe alkyle en $C_1$-$C_5$,

$R_{10}$ représente un groupe alkyle en $C_1$-$C_4$ ou un groupe phényle non substitué ou mono ou di-substitué par le chlore ou monosubstitué par un groupe trifluorométhyle,

$R_{11}$ représente l'hydrogène ou un groupe méthoxy,

$R_{12}$ représente l'hydrogène, le cation sodium, le cation potassium, le cation ammonium, un cation ammonium trisubstitué par des groupes alkyle en $C_1$-$C_4$ ou 2-hydroxyéthyle, un groupe alkyle en $C_1$-$C_4$, alkyle en $C_1$-$C_4$ monosubstitué par le chlore, un groupe alcoxy en $C_1$-$C_3$, phénoxy, phényle ou tétrahydrofurannyle, ou un groupe méthylallyle, 2-propynyle, cyclohexyle ou un groupe phényle non substitué ou mono- ou di-substitué par des groupes méthyle,

$R_{13}$ représente un groupe n-octyle,

$R_{14}$ représente l'hydrogène, un groupe alkyle en $C_1$-$C_4$, un groupe alkyle en $C_1$-$C_4$ monosubstitué par un groupe hydroxy, alcoxy en $C_1$-$C_4$, di-(alkyle en $C_1$-$C_4$)-amino, (monohydroxyalkyle en $C_1$-$C_4$)-amino, di-(monohydroxyalkyle en $C_1$-$C_4$)-amino, phényle, tétrahydrofurannyle, pipéridinyle ou morpholinyle, ou un groupe allyle, cyclohexyle ou amino, et

$R_{15}$ représente l'hydrogène, un groupe alkyle en $C_1$-$C_4$ ou monohydroxyalkyle en $C_1$-$C_4$, ou bien

$R_{14}$ et $R_{15}$ forment ensemble et avec l'atome d'azote auquel ils sont reliés le cycle morpholine, ou bien A et Z forment ensemble le groupe tétrahydrofuranne-2-one, ou d'un produit contenant l'un de ces composés, selon la revendication 1.

23. L'utilisation de composés de formule I dans laquelle $R_1$, $R_2$, $R_4$, $R_5$ et $R_6$ représentent l'hydrogène, $R_3$ l'hydrogène ou le chlore, A le groupe $-CH_2-$ et Z un groupe cyano, le groupe

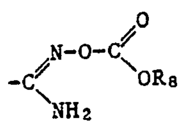

ou un groupe $-COOR_{12}$, dans lesquels $R_8$ représente un groupe alkyle en $C_1$-$C_4$ et $R_{12}$ un groupe alkyle en $C_1$-$C_4$ ou alcényle en $C_2$-$C_4$, ou d'un produit contenant l'un de ces composés, selon la revendication 1.

24. L'utilisation de composés de formule I dans laquelle $R_8$ représente un groupe méthyle ou d'un produit contenant l'un de ces composés, selon la revendication 23.

25. L'utilisation de composés de formule I dans laquelle $R_{12}$ représente un groupe n-butyle ou méthylallyle, ou d'un produit contenant l'un de ces composés, selon la revendication 23.

26. L'utilisation de la 5-chloro-8-(cyanométhoxy)-quinoléine ou d'un produit contenant ce composé, selon la revendication 1.

27. L'utilisation de l'O-(méthoxycarbonyl)-2-(8-quinoléinoxy)-acétamidoxime ou d'un produit contenant ce composé selon la revendication 1.

28. L'utilisation du 2-(5-chloro-8-quinoléinoxy)-acétate de n-butyle ou d'un produit contenant ce composé, selon la revendication 1.

29. L'utilisation du 2-(5-chloro-8-quinoléinoxy)-acétate de méthylallyle ou d'un produit contenant ce composé, selon la revendication 1.

30. L'utilisation selon la revendication 1, pour la protection des végétaux cultivés contre les effets nocifs des herbicides de formule II dans laquelle R' représente l'hydrogène, un groupe méthyle, le cation ammonium ou un cation ammonium organique, $R'_1$ représente un groupe méthyle, $R'_2$ un groupe isopropyle et M, X et Y ont les significations indiquées en référence à la formule II.

31. L'utilisation selon la revendication 30, pour la protection des végétaux cultivés contre les effets nocifs des herbicides de formule II dans laquelle R' représente un groupe méthyle, $R'_1$ un groupe méthyle, $R'_2$ un groupe isopropyle, M l'élément de structure =CH—, X l'hydrogène et Y un groupe 4- ou 5-méthyle.

32. L'utilisation selon la revendication 1, pour la protection des végétaux cultivés contre les effets nocifs de l'acide 2-[4,5-dihydro-5-méthyl-5-(1-méthyléthyl)-4-oxo-1H-imidazole-2-yl]-nicotinique.

33. L'utilisation selon la revendication 1, pour la protection des végétaux cultivés contre les effets nocifs de l'acide 2-[4,5-dihydro-5-méthyl-5-(1-méthyléthyl)-4-oxo-1H-imidazole-2-yl]-3-quinoléine-carboxylique.

34. L'utilisation selon la revendication 1, pour la protection des céréales.

35. L'utilisation selon la revendication 34, pour la protection du blé, de l'orge et du maïs.

36. L'utilisation de composés de formule I selon la revendication 1 à des doses de 0,1 à 10 kg par ha de l'aire de culture de la plante.

37. L'utilisation de composés de formule I selon la revendication 36, à une dose de 0,5 à 2,0 kg par ha de surface de culture.

38. Procédé pour combattre sélectivement les végétaux adventices dans les cultures de végétaux utiles, caractérisé en ce que l'on traite les cultures utiles ; des parties des végétaux cultivés ou les aires de

culture par un antidote de formule I selon la revendication 1 et un herbicide de formule II selon la revendication 1.

39. Produit herbicide contenant en tant qu'herbicide un acide (4,5-dihydro-4-oxo-1H-imidazole-2-yl)-benzoïque, -nicotinique ou -quinoléine-carboxylique de formule II

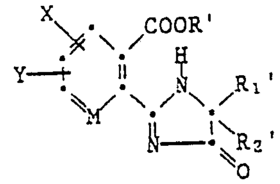

(II)

dans laquelle R' représente l'hydrogène, un groupe alkyle en $C_1$-$C_4$, le cation ammonium ou un cation amonium organique, $R'_1$ représente un groupe alkyle en $C_1$-$C_4$, $R'_2$ représente un groupe alkyle en $C_1$-$C_4$ ou cycloalkyle en $C_3$-$C_6$ ou bien $R'_1$ et $R'_2$ forment ensemble un groupe alkylène en $C_4$ ou $C_5$, M représente l'élément de structure =CH— ou =N—, X et Y représentent chacun, indépendamment l'un de l'autre, l'hydrogène, un groupe alkyle en $C_1$-$C_4$ ou un halogène, ou bien encore, lorsque M représente =N—, l'élément de structure —$C(X_1)$=$C(X_2)$—$C(X_3)$=$C(X_4)$— dans lequel $X_1$, $X_2$, $X_3$ et $X_4$ représentent l'hydrogène ou bien un ou deux de ces symboles $X_1$, $X_2$, $X_3$ et $X_4$ représentent des groupes alkyle en $C_1$-$C_4$ ou des halogènes et les autres l'hydrogène, avec une quantité efficace pour antagoniser les effets nocifs de l'herbicide de formule II sur les végétaux cultivés, d'un composé de formule I

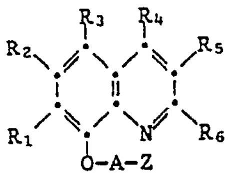

(I)

dans laquelle $R_1$, $R_2$ et $R_3$ représentent chacun, indépendamment les uns des autres, l'hydrogène, un halogène, un groupe nitro, cyano, alkyle en $C_1$-$C_3$ ou alcoxy en $C_1$-$C_3$,

$R_4$, $R_5$ et $R_6$ représentent chacun, indépendamment les uns des autres, l'hydrogène, un halogène ou un groupe alkyle en $C_1$-$C_3$,

A représente l'un des groupes —$CH_2$—, —$CH_2$—$CH_2$ ou —$CH(CH_3)$—, et

Z représente un groupe cyano, l'un des groupes

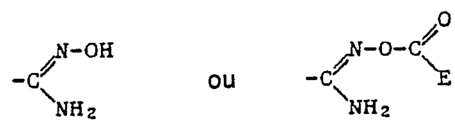

un groupe oxazoline-2-yle éventuellement substitué, —$COOR_{12}$, —$COSR_{13}$ ou —$CONR_{14}R_{15}$ dans lesquels

E représente —$R_7$, —$OR_8$, —$SR_9$ ou —$NR_{10}R_{11}$ dans lesquels

$R_7$ représente un groupe alkyle en $C_1$-$C_7$ non substitué ou substitué par des halogènes ou des groupes alcoxy en $C_1$-$C_4$, un groupe cycloalkyle en $C_3$-$C_6$, alcényle en $C_2$-$C_4$, phényle non substitué ou substitué par des halogènes, des groupes nitro ou alkyle en $C_1$-$C_3$, benzyle non substitué ou substitué par des halogènes, des groupes nitro ou alkyle en $C_1$-$C_3$, ou un noyau hétérocyclique à 5 ou 6 chaînons contenant un ou deux hétéroatomes du groupe formé par N, O et S et qui est non substitué ou substitué par des halogènes,

$R_8$, $R_9$ et $R_{10}$ représentent chacun, indépendamment les uns des autres, un groupe alkyle en $C_1$-$C_8$ non substitué ou substitué par des halogènes, un groupe alcényle en $C_2$-$C_4$, alcynyle en $C_3$-$C_6$, phényle non substitué ou substitué par des halogènes, des groupes alkyle en $C_1$-$C_3$, alcoxy en $C_1$-$C_3$, trifluorométhyle ou nitro, ou benzyle non substitué ou substitué par des halogènes ou des groupes nitro,

$R_{11}$ représente l'hydrogène, un groupe alkyle en $C_1$-$C_8$ ou alcoxy en $C_1$-$C_3$, ou bien $R_{10}$ et $R_{11}$ forment ensemble et avec l'atome d'azote auquel ils sont reliés un hétérocycle à 5 ou 6 chaînons qui peut encore contenir un autre hétéroatome du groupe formé par N, O et S, $R_{12}$, $R_{13}$ et $R_{14}$ représentent l'hydrogène ou un groupe alkyle, alcényle, alcynyle, cycloalkyle, phényle ou naphtyle éventuellement substitué ou un radical hétérocyclique éventuellement substitué ou bien encore $R_{12}$ et $R_{13}$ représentent un cation ou bien $R_{14}$ un groupe alcoxy et $R_{15}$ l'hydrogène, un groupe amino, amino mono- ou di-substitué ou un groupe alkyle, alcényle, cycloalkyle ou phényle éventuellement substitué, ou bien $R_{14}$ et $R_{15}$ forment ensemble et avec l'atome d'azote auquel ils sont reliés un radical hétérocyclique éventuellement substitué, ou bien A et Z forment ensemble un cycle tétrahydrofuranne-2-one éventuellement substitué.